(19) Europäisches Patentamt European Patent Office Office européen des brevets

(11) **EP 4 620 795 A1**

(12) **EUROPEAN PATENT APPLICATION**

(43) Date of publication:
24.09.2025 Bulletin 2025/39

(21) Application number: 25162653.7

(22) Date of filing: 10.03.2025

(51) International Patent Classification (IPC):
**B62K 11/04** (2006.01)      **B62M 7/02** (2006.01)
**B62D 37/04** (2006.01)      **B60W 30/045** (2012.01)

(52) Cooperative Patent Classification (CPC):
**B62K 11/04; B60W 30/045; B62D 37/04;**
**B62M 7/02;** B60W 2300/36; F01N 2240/20;
F01N 2410/00; F01N 2470/14; F01N 2470/18;
F01N 2470/20; F01N 2590/04

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 18.03.2024   JP 2024042365
10.06.2024   JP 2024093641

(71) Applicant: **Yamaha Hatsudoki Kabushiki Kaisha**
**Iwata-shi, Shizuoka 438-8501 (JP)**

(72) Inventor: **SAKAMOTO, Noriaki**
**Shizuoka, 4388501 (JP)**

(74) Representative: **Studio Torta S.p.A.**
**Via Viotti, 9**
**10121 Torino (IT)**

(54) **STRADDLED VEHICLE**

(57)    There is provided is a straddled vehicle having good turning performance; straddled vehicle 1 including an exhaust device (29) that discharges exhaust gas;. the exhaust device (29) including the exhaust port (73); the exhaust port (73) injecting the exhaust gas to apply the first force to the straddled vehicle (1);. in a case where the straddled vehicle (19 turns on the curved road (Cr), the first force offseting at least a part of the centrifugal force (E) acting on the straddled vehicle (1); the first force being, for example, the reaction force (F) of the jet (H); the jet (H) being formed by the exhaust gas injected from the exhaust port (73).

## Fig.24

# Description

Technical Field

The present invention relates to a straddled vehicle.

Background

Patent Literature 1 discloses a straddled vehicle. In a case where the straddled vehicle turns on a curved road, the centrifugal force acts on the straddled vehicle. As an example, in a case where the straddled vehicle turns rightward on the curved road, the centrifugal force acts on the straddled vehicle in the leftward direction. In a case where the straddled vehicle turns left on the curved road, the centrifugal force acts on the straddled vehicle in the rightward direction. Hereinafter, the speed of the straddled vehicle in a case where the straddled vehicle turns on the curved road is referred to as a "turning speed of the straddled vehicle". When the turning speed of the straddled vehicle increases, the centrifugal force acting on the straddled vehicle increases.

Patent Literature

[Patent Literature 1]
JP 2022-104685 A

When the centrifugal force acting on the straddled vehicle increases, a skill for the straddled vehicle to appropriately turn a curved road is required. As an example, when the centrifugal force acting on the straddled vehicle increases, the force in the direction deviating outward from the curved road increases in the straddled vehicle. Therefore, a skill for appropriately turning on a curved road while increasing the turning speed of the straddled vehicle in circuit traveling or the like is required. For this reason, a straddled vehicle having good turning performance is required.

The present invention has been made in view of such circumstances, and a main object thereof is to provide a straddled vehicle having good turning performance.

Description of the invention

In order to achieve such an object, the invention has the following configuration.
at is, the present invention is a straddled vehicle including: an exhaust device that discharges exhaust gas, in which the exhaust device includes a first exhaust port that injects the exhaust gas to apply a first force to the straddled vehicle, and in a case where the straddled vehicle turns on a curved road, the first force offsets at least a part of a centrifugal force acting on the straddled vehicle.

(Operation and Effect) A straddled vehicle includes an exhaust device. The exhaust device discharges exhaust gas. The exhaust device includes a first exhaust port. The first exhaust port injects the exhaust gas to apply a first force to the straddled vehicle. In a case where the straddled vehicle turns on the curved road, the first force offsets at least a part of the centrifugal force acting on the straddled vehicle.

Therefore, even in a case where the centrifugal force acting on the straddled vehicle increases, it is possible to support the straddled vehicle to appropriately turn on the curved road. For example, even in a case where the turning speed of the straddled vehicle increases in circuit traveling or the like, it is possible to assist the straddled vehicle to appropriately turn on the curved road. Therefore, in circuit traveling or the like, it is possible to assist the straddled vehicle to appropriately turn on a curved road while increasing the turning speed of the straddled vehicle. Therefore, it is possible to provide a straddled vehicle having good turning performance.

In the above-described straddled vehicle, the first force is preferably a reaction force of a jet of the exhaust gas injected from the first exhaust port. In other words, the first force preferably has a direction opposite to an injection direction of the exhaust gas injected from the first exhaust port.

(Operation and Effect) In this case, by injecting the exhaust gas from the first exhaust port, the first exhaust port easily applies the first force to the straddled vehicle.

In the above-described straddled vehicle, in a case where the straddled vehicle turns on a curved road, the first exhaust port preferably injects the exhaust gas in the same direction as the direction of the centrifugal force acting on the straddled vehicle.

(Operation and Effect) As an example, in a case where the straddled vehicle turns rightward on a curved road, the centrifugal force acts on the straddled vehicle in the leftward direction, and the first exhaust port injects the exhaust gas leftward. For example, in a case where the straddled vehicle turns leftward on the curved road, the centrifugal force acts on the straddled vehicle in the rightward direction, and the first exhaust port injects the exhaust gas rightward. Therefore, in a case where the straddled vehicle turns on the curved road, the first force easily offsets at least a part of the centrifugal force acting on the straddled vehicle.

In the above-described straddled vehicle, in a case where the straddled vehicle turns on a curved road, the first force preferably includes a first component having a direction opposite to a direction of the centrifugal force acting on the straddled vehicle.

(Operation and Effect) In this case, the first force includes the first component. The first component has a direction opposite to the direction of the centrifugal force acting on the straddled vehicle. For example, in a case where the straddled vehicle turns rightward on the curved road, the centrifugal force acts on the straddled vehicle in the leftward direction, and the first component acts on the straddled vehicle in the rightward direction. For example, in a case where the straddled vehicle turns leftward on the curved road, the centrifugal force acts on the straddled vehicle in the rightward direction, and the first component acts on the straddled vehicle in the leftward direction. Therefore, in a case where the straddled vehicle turns on the curved road, the first force easily offsets at least a part of the centrifugal force acting on the straddled vehicle.

In the above-described straddled vehicle, the injection direction of the exhaust gas from the first exhaust port preferably changes according to the rightward and leftward lean angles of the straddled vehicle.

(Operation and Effect) In a case where the straddled vehicle turns rightward as an example, the straddled vehicle is inclined rightward, and the centrifugal force acts on the straddled vehicle in the leftward direction. For example, in a case where the straddled vehicle turns leftward, the straddled vehicle is inclined leftward, and the centrifugal force acts on the straddled vehicle in the rightward direction. In this manner, the direction of the centrifugal force changes according to the rightward and leftward lean angles of the straddled vehicle. Here, the injection direction of the exhaust gas from the first exhaust port changes according to the lean angle. Therefore, in a case where the straddled vehicle turns on the curved road, it is easy for the first force to offset at least a part of the centrifugal force.

In the above-described straddled vehicle, it is preferable that the first exhaust port is installed such that an injection direction of the exhaust gas from the first exhaust port becomes downward when the straddled vehicle is in an upright posture, in a case where the straddled vehicle is inclined rightward, the first exhaust port injects exhaust gas, and in a case where the straddled vehicle is inclined leftward, the first exhaust port injects exhaust gas.

(Operation and Effect) For example, in a case where the straddled vehicle turns rightward, the straddled vehicle is inclined rightward from an upright posture. In a case where the straddled vehicle is inclined rightward from an upright posture, the injection direction of the exhaust gas from the first exhaust port changes from downward to leftward. For example, in a case where the straddled vehicle turns leftward, the straddled vehicle is inclined leftward from an upright posture. In a case where the straddled vehicle is inclined leftward from an upright posture, the injection direction of the exhaust gas from the first exhaust port changes from downward to rightward. In summary, the injection direction of the exhaust gas from the first exhaust port changes according to the lean angle of the straddled vehicle. In a case where the straddled vehicle turns on the curved road, the first exhaust port injects the exhaust gas in the same direction as the direction of the centrifugal force. Therefore, in a case where the straddled vehicle turns on the curved road, it is easy for the first force to offset at least a part of the centrifugal force.

In the above-described straddled vehicle, the straddled vehicle preferably includes a lean angle detection unit that detects rightward and leftward lean angles of the straddled vehicle, a moving mechanism that changes an injection direction of the exhaust gas from the first exhaust port, and a moving mechanism control unit that controls the moving mechanism on the basis of a detection result of the lean angle detection unit.

(Operation and Effect) In this case, it is easy to change the injection direction of the exhaust gas from the first exhaust port according to the lean angle of the straddled vehicle. Therefore, in a case where the straddled vehicle turns on the curved road, it is easy for the first force to offset at least a part of the centrifugal force.

In the above-described straddled vehicle, the moving mechanism preferably rotates the exhaust device.

(Operation and Effect) In this case, it is easy to change the injection direction of the exhaust gas from the first exhaust port.

In the above-described straddled vehicle, it is preferable that the first exhaust port includes: a right exhaust port configured to inject exhaust gas rightward; and a left exhaust port configured to inject exhaust gas leftward, the exhaust device includes a passage changing part that changes a passage of exhaust gas in the exhaust device and switches between a right injection state in which the exhaust gas is injected from the right exhaust port and a left injection state in which the exhaust gas is injected from the left exhaust port, and the straddled vehicle includes: a lean angle detection unit that detects rightward and leftward lean angles of the straddled vehicle; and a control unit that controls the passage changing part on a basis of a detection result of the lean angle detection unit.

(Operation and Effect) In this case, it is easy to change the injection direction of the exhaust gas according to the lean angle of the straddled vehicle. Furthermore, in a case where the straddled vehicle turns on the curved road, it is easy to inject the exhaust gas in the same direction as the direction of the centrifugal force. As an example, in a case where the straddled vehicle is inclined rightward, it is easy to inject the exhaust gas from the left exhaust port. As an example, in a case where the straddled vehicle is inclined leftward, it is easy to inject the exhaust gas from the right exhaust port. Therefore, in a case where the straddled vehicle turns on the curved road, it is easy for the first force to offset at least a part of the centrifugal force.

In the above-described straddled vehicle, it is preferable that in a case where the leftward lean angle of the straddled vehicle is greater than or equal to a first threshold, the control unit controls the passage changing part to inject the exhaust gas from the right exhaust port, and in a case where the rightward lean angle of the straddled vehicle is greater than or equal to a second threshold, the control unit controls the passage changing part to inject the exhaust gas from the left exhaust port.

(Operation and Effect) In a case where the leftward lean angle of the straddled vehicle is greater than or equal to the first threshold, it is considered that the straddled vehicle turns leftward. Therefore, in a case where the straddled vehicle turns leftward, it is easy to inject the exhaust gas from the right exhaust port. Therefore, in a case where the straddled vehicle turns leftward, it is easy for the first force to offset at least a part of the centrifugal force.

In addition, in a case where the rightward lean angle of the straddled vehicle is greater than or equal to the second threshold, it is considered that the straddled vehicle turns rightward. Therefore, in a case where the straddled vehicle is turning rightward, it is easy to inject the exhaust gas from the left exhaust port. Therefore, in a case where the straddled vehicle turns rightward, it is easy for the first force to offset at least a part of the centrifugal force.

In the above-described straddled vehicle, it is preferable that in a case where the straddled vehicle is in an upright posture, the right exhaust port is installed such that an injection direction of the exhaust gas from the right exhaust port becomes rightward and downward, and in a case where the straddled vehicle is in an upright posture, the left exhaust port is installed such that an injection direction of the exhaust gas from the left exhaust port becomes leftward and downward.

(Operation and Effect) For example, in a case where the straddled vehicle turns rightward, the straddled vehicle is inclined rightward from an upright posture. In a case where the straddled vehicle is inclined rightward from an upright posture, the injection direction of the exhaust gas from the left exhaust port changes from leftward and downward to leftward and horizontal. For example, in a case where the straddled vehicle turns leftward, the straddled vehicle is inclined leftward from an upright posture. In a case where the straddled vehicle is inclined leftward from an upright posture, the injection direction of the exhaust gas from the right exhaust port changes from rightward and downward to rightward and horizontal. In summary, in a case where the straddled vehicle turns on the curved road, the first exhaust port injects the exhaust gas in substantially the same direction as the direction of the centrifugal force. Therefore, in a case where the straddled vehicle turns on the curved road, it is easy for the first force to offset at least a part of the centrifugal force.

In the above-described straddled vehicle, it is preferable that in a case where the straddled vehicle is in an upright posture, the right exhaust port is installed such that an injection direction of the exhaust gas from the right exhaust port becomes rightward and horizontal, and in a case where the straddled vehicle is in an upright posture, the left exhaust port is installed such that an injection direction of the exhaust gas from the left exhaust port becomes leftward and horizontal.

(Operation and Effect) For example, in a case where the straddled vehicle turns rightward, the straddled vehicle is inclined rightward from an upright posture. In a case where the straddled vehicle is inclined rightward from an upright posture, the injection direction of the exhaust gas from the left exhaust port changes from leftward and horizontal to leftward and upward. For example, in a case where the straddled vehicle turns leftward, the straddled vehicle is inclined leftward from an upright posture. In a case where the straddled vehicle is inclined leftward from an upright posture, the injection direction of the exhaust gas from the right exhaust port changes from rightward and horizontal to rightward and upward. In summary, in a case where the straddled vehicle turns on the curved road, the first exhaust port injects the exhaust gas in the same direction as the direction of the centrifugal force. Therefore, in a case where the straddled vehicle turns on the curved road, it is easy for the first force to offset at least a part of the centrifugal force.

In the above-described straddled vehicle, it is preferable that the right exhaust port include a plurality of right small exhaust ports, and the left exhaust port include a plurality of left small exhaust ports.

(Operation and Effect) The right exhaust port includes a plurality of right small exhaust ports. Therefore, it is easy to expand the injection direction of the exhaust gas from the right exhaust port. Furthermore, it is easy to change the exhaust port from which the exhaust gas is injected among the plurality of right small exhaust ports. The left exhaust port includes a plurality of left small exhaust ports. Therefore, it is easy to expand the injection direction of the exhaust gas from the left exhaust port. It is easy to change the exhaust port from which the exhaust gas is injected among the plurality of left small exhaust ports.

In the above-described straddled vehicle, the straddled vehicle preferably includes a moving mechanism that changes an injection direction of the exhaust gas from the right exhaust port and an injection direction of the exhaust gas from the left exhaust port, and a moving mechanism control unit that controls the moving mechanism on the basis of a detection result of the lean angle detection unit.

(Operation and Effect) In this case, it is easy to change the injection direction of the exhaust gas from the right exhaust port according to the lean angle of the straddled vehicle. In addition, it is easy to change the injection direction of the exhaust gas from the left exhaust port according to the lean angle of the straddled vehicle. Therefore, in a case where the straddled vehicle turns on the curved road, it is easy for the first force to offset at least a part of the centrifugal force.

In the above-described straddled vehicle, the moving mechanism preferably rotates the exhaust device.

(Operation and Effect) In this case, it is easy to change the injection direction of the exhaust gas from the right exhaust port. In addition, it is easy to change the injection direction of the exhaust gas from the left exhaust port. Therefore, in a case where the straddled vehicle turns on the curved road, it is easy for the first force to offset at least a part of the centrifugal force.

In the above-described straddled vehicle, the straddled vehicle preferably includes a first valve that opens and closes the first exhaust port.

(Operation and Effect) In this case, it is easy to control the injection of the exhaust gas from the first exhaust port.

In the above-described straddled vehicle, the straddled vehicle preferably includes a lean angle detection unit that detects rightward and leftward lean angles of the straddled vehicle, and a first valve control unit that controls the first valve on the basis of a detection result of the lean angle detection unit.

(Operation and Effect) In this case, it is easy to control the injection of the exhaust gas from the first exhaust port according to the lean angle of the straddled vehicle.

In the above-described straddled vehicle, it is preferable that in a case where the rightward lean angle of the straddled vehicle is greater than or equal to a first threshold, the first valve control unit opens the first exhaust port by the first valve, and in a case where the leftward lean angle of the straddled vehicle is greater than or equal to a second threshold, the first valve control unit opens the first exhaust port by the first valve.

(Operation and Effect) In this case, in a case where the rightward lean angle of the straddled vehicle is greater than or equal to the first threshold, the straddled vehicle is considered to turn on the curved road. In a case where the leftward lean angle of the straddled vehicle is greater than or equal to the second threshold, the straddled vehicle is considered to turn on the curved road. Therefore, in a case where the straddled vehicle turns on the curved road, the first exhaust port injects the exhaust gas. Therefore, in a case where the straddled vehicle turns on the curved road, it is easy for the first force to offset at least a part of the centrifugal force.

In the above-described straddled vehicle, it is preferable that the exhaust device includes a main exhaust port that discharges the exhaust gas, and the first exhaust port is smaller than the main exhaust port.

(Operation and Effect) In this case, in a case where the first exhaust port injects the exhaust gas, it is easy to increase the speed of the exhaust gas. Therefore, it is easy to increase the first force.

In the above-described straddled vehicle, the first exhaust port preferably has a diameter smaller than a diameter of the main exhaust port.

(Operation and Effect) In this case, in a case where the first exhaust port injects the exhaust gas, it is easy to increase the speed of the exhaust gas. Therefore, it is easy to increase the first force.

In the above-described straddled vehicle, the exhaust device preferably includes a main valve that opens and closes the main exhaust port.

(Operation and Effect) In this case, it is easy to control the injection of the exhaust gas from the main exhaust port.

In the above-described straddled vehicle, the main valve is preferably configured to close the main exhaust port in a case where the pressure of the exhaust gas in the exhaust device is less than a predetermined value.

(Operation and Effect) For this reason, in a case where the pressure of the exhaust gas in the exhaust device is less than a predetermined value, the main exhaust port does not inject the exhaust gas. Therefore, in a case where the pressure of the exhaust gas in the exhaust device is less than the predetermined value, it is easy to increase the injection amount of the exhaust gas from the first exhaust port. Therefore, in a case where the pressure of the exhaust gas in the exhaust device is less than the predetermined value, it is possible to provide a straddled vehicle having good turning performance.

The above-described straddled vehicle preferably includes a lean angle detection unit that detects rightward and leftward lean angles of the straddled vehicle, and a main valve control unit that controls the main valve on the basis of a detection result of the lean angle detection unit.

(Operation and Effect) In this case, it is easy to control the injection of the exhaust gas from the main exhaust port according to the lean angle of the straddled vehicle.

In the above-described straddled vehicle, in a case where the leftward lean angle of the straddled vehicle is greater than or equal to the first threshold and in a case where the rightward lean angle of the straddled vehicle is greater than or equal to the second threshold, the main valve control unit preferably closes the main exhaust port by the main valve.

(Operation and Effect) In this case, in a case where the leftward lean angle of the straddled vehicle is greater than or equal to the first threshold and in a case where the rightward lean angle of the straddled vehicle is greater than or equal to the second threshold, the straddled vehicle is considered to turn on the curved road. Therefore, in a case where the straddled vehicle turns on the curved road, the main exhaust port does not inject the exhaust gas. Therefore, in a case where the straddled vehicle turns on the curved road, it is easy to increase the injection amount of the exhaust gas from the first exhaust port. Therefore, in a case where the straddled vehicle turns on the curved road, it is easy for the first force to offset at least a part of the centrifugal force.

Preferably, the above-described straddled vehicle includes a front wheel and a rear wheel, the exhaust device includes a second exhaust port that injects the exhaust gas to apply a second force to the front wheel, and the second force acts in a direction of suppressing the front wheel from floating up from the road surface.

(Operation and Effect) The exhaust device includes a second exhaust port. The second exhaust port injects the exhaust gas to apply a second force to the front wheel. The second force acts in a direction of suppressing the front wheel from floating up from the road surface. That is, the second force acts in a direction of pressing the front wheel against the road surface. Therefore, it is possible to suppress the front wheel from floating up from the road surface. Therefore, for example, in circuit traveling or the like, the straddled vehicle is less likely to enter a wheelie state. As an example, even in a case where the straddled vehicle rapidly accelerates in circuit traveling or the like, it is difficult for the straddled vehicle to be in a wheelie state. As a result, the acceleration performance of the straddled vehicle can be easily improved in circuit traveling or the like.

According to the straddled vehicle of the present invention, it is possible to provide a straddled vehicle having good turning performance.

Brief Description of Drawings

FIG. 1 is a left side view of a straddled vehicle according to a first embodiment.
FIG. 2 is a right side view of a straddled vehicle according to the first embodiment.
FIG. 3 is a longitudinal sectional view of an exhaust device according to the first embodiment in a vehicle side view.
FIG. 4 is a longitudinal sectional view of the exhaust device according to the first embodiment in a vehicle rear view.
FIG. 5 is a longitudinal sectional view of an exhaust device according to the first embodiment in a vehicle side view.
FIG. 6 is a longitudinal sectional view of an exhaust device according to the first embodiment in a vehicle side view.
FIG. 7 is a functional block diagram illustrating a control system of the straddled vehicle according to the first embodiment.
FIG. 8 is a rear view of the straddled vehicle according to the first embodiment, FIG. 8A illustrates a state of traveling on a straight road, FIG. 8B illustrates a state of turning leftward on a curved road, and FIG. 8C illustrates a state of turning rightward on the curved road.
FIG. 9 is a right side view illustrating a jet of exhaust gas according to the first embodiment.
FIG. 10 is a plan view illustrating a state in which the straddled vehicle according to the first embodiment travels on a straight road.
FIG. 11 is a rear view illustrating a jet of exhaust gas according to the first embodiment.
FIG. 12 is a rear view illustrating a reaction force and a first component force of exhaust gas according to the first embodiment.

FIG. 13 is a plan view illustrating a state in which the straddled vehicle according to the first embodiment turns leftward on a curved road.
FIG. 14 is a rear view illustrating a jet of exhaust gas according to the first embodiment.
FIG. 15 is a rear view illustrating a reaction force and a first component force of exhaust gas according to the first embodiment.
FIG. 16 is a plan view illustrating a state in which the straddled vehicle according to the first embodiment turns rightward on a curved road.
FIG. 17 is a perspective view of an exhaust device according to a second embodiment.
FIG. 18 is a longitudinal sectional view of the exhaust device according to the second embodiment in a vehicle rear view.
FIG. 19 is a longitudinal sectional view of the exhaust device according to the second embodiment in a vehicle side view.
FIG. 20 is a functional block diagram illustrating a control system of a straddled vehicle according to a second embodiment.
FIG. 21 is a rear view of the straddled vehicle according to the second embodiment, FIG. 21A illustrates a state of traveling on a straight road, FIG. 21B illustrates a state of turning leftward on a curved road, and FIG. 21C illustrates a state of turning rightward on a curved road.
FIG. 22 is a rear view illustrating a jet of exhaust gas according to the second embodiment.
FIG. 23 is a rear view illustrating a reaction force and a first component force of exhaust gas according to the second embodiment.
FIG. 24 is a rear view illustrating a jet of exhaust gas according to the second embodiment.
FIG. 25 is a rear view illustrating a reaction force and a first component force of exhaust gas according to the second embodiment.
FIG. 26 is a perspective view of an exhaust device according to a third embodiment.
FIG. 27 is a longitudinal sectional view of the exhaust device according to the third embodiment in a vehicle rear view.
FIG. 28 is a rear view of the straddled vehicle according to the third embodiment, FIG. 28A illustrates a state of traveling on a straight road, FIG. 28B illustrates a state of turning leftward on a curved road, and FIG. 28C illustrates a state of turning rightward on a curved road.
FIG. 29 is a rear view illustrating a jet of exhaust gas according to the third embodiment.
FIG. 30 is a rear view illustrating a reaction force and a first component force of exhaust gas according to the third embodiment.
FIG. 31 is a rear view illustrating a jet of exhaust gas according to the third embodiment.
FIG. 32 is a rear view illustrating a reaction force and a first component force of exhaust gas according to the third embodiment.

FIG. 33 is a perspective view of an exhaust device according to a fourth embodiment.

FIG. 34 is a longitudinal sectional view of the exhaust device according to the fourth embodiment in a vehicle rear view.

FIG. 35 is a functional block diagram illustrating a control system of a straddled vehicle according to the fourth embodiment.

FIG. 36 is a rear view illustrating a jet of exhaust gas according to the fourth embodiment.

FIG. 37 is a rear view illustrating a reaction force and a first component force of exhaust gas according to the fourth embodiment.

FIG. 38 is a rear view illustrating a jet of exhaust gas according to the fourth embodiment.

FIG. 39 is a rear view illustrating a reaction force and a first component force of exhaust gas according to the fourth embodiment.

FIG. 40 is a right side view illustrating a jet of exhaust gas according to a fifth embodiment.

FIG. 41 is a perspective view of an exhaust device according to the fifth embodiment.

FIG. 42 is a longitudinal sectional view of the exhaust device according to the fifth embodiment in a vehicle side view.

FIG. 43 is a longitudinal sectional view of the exhaust device according to the fifth embodiment in a vehicle rear view.

FIG. 44 is a longitudinal sectional view of the exhaust device according to the fifth embodiment in a vehicle side view.

FIG. 45 is a longitudinal sectional view of the exhaust device according to the fifth embodiment in a vehicle side view.

FIG. 46 is a longitudinal sectional view of the exhaust device according to the fifth embodiment in a vehicle side view.

FIG. 47 is a functional block diagram illustrating a control system of a straddled vehicle according to the fifth embodiment.

FIG. 48 is a rear view illustrating a jet of exhaust gas according to the fourth embodiment.

FIG. 49 is a right side view illustrating a jet of exhaust gas according to a fifth embodiment.

FIG. 50 is a right side view illustrating the reaction force and the first component force of the exhaust gas according to the fifth embodiment.

FIG. 51 is a right side view illustrating a reaction force and a first moment of exhaust gas according to the fifth embodiment.

FIG. 52 is a longitudinal sectional view of an exhaust device according to a modification as viewed in a vehicle rear view.

FIG. 53 is a rear view illustrating a jet of exhaust gas and a reaction force of the exhaust gas according to a modification.

FIG. 54 is a rear view illustrating a jet of exhaust gas and a reaction force of the exhaust gas according to a modification.

FIG. 55 is a longitudinal sectional view of an exhaust device according to a modification in a vehicle side view.

FIG. 56 is a perspective view of an exhaust device according to a modification.

FIG. 57 is a longitudinal sectional view of an exhaust device according to a modification as viewed in a vehicle rear view.

Embodiments of the invention

[First Embodiment]

A straddled vehicle 1 according to a first embodiment of the present invention will be described with reference to the drawings.

<Schematic Configuration of Straddled Vehicle>

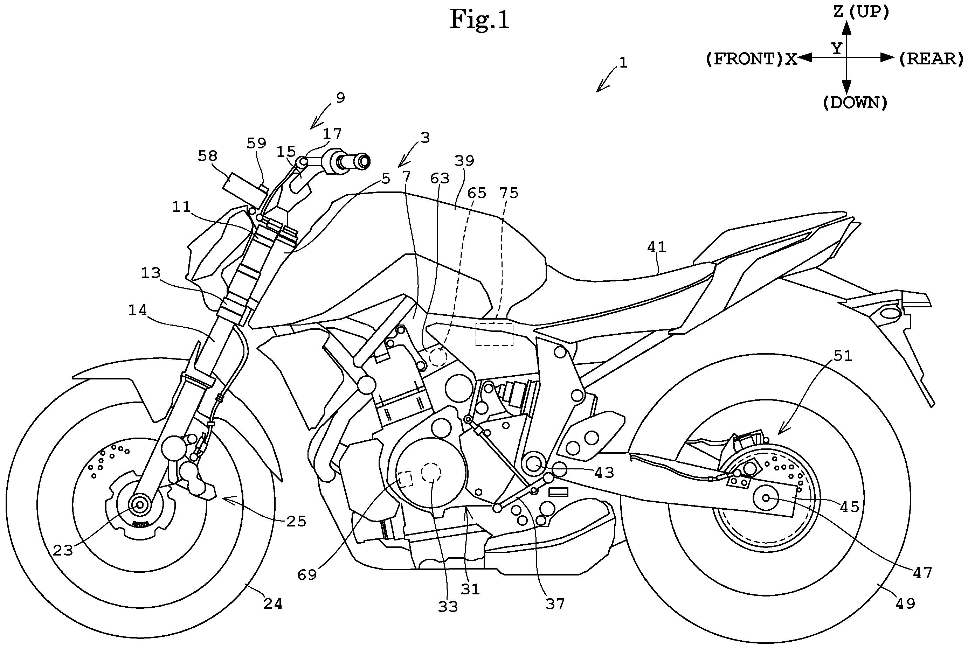

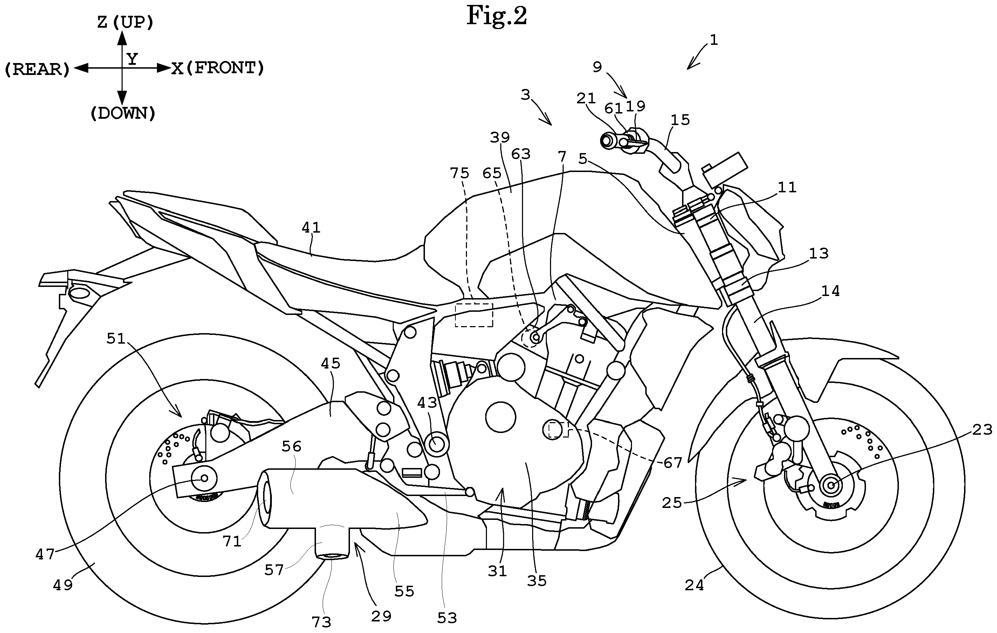

FIG. 1 is a left side view of the straddled vehicle 1 according to the first embodiment. FIG. 2 is a right side view of the straddled vehicle 1 according to the first embodiment.

The straddled vehicle 1 is a street type vehicle. A driver (also referred to as a rider) gets on the straddled vehicle 1 and steers the straddled vehicle 1.

The straddled vehicle 1 travels. As an example, the straddled vehicle 1 travels straight. When the straddled vehicle 1 travels straight, the straddled vehicle 1 is in an upright posture. As an example, the straddled vehicle 1 turns. When the straddled vehicle 1 turns, the straddled vehicle 1 is in a leaned posture. When the straddled vehicle 1 turns, the straddled vehicle 1 inclines rightward and leftward.

FIGS. 1 and 2 illustrate a front-rear direction X, a width direction Y, and an up-down direction Z of the straddled vehicle 1. The front-rear direction X, the width direction Y, and the up-down direction Z are defined with reference to a driver who gets on the straddled vehicle 1. The front-rear direction X, the width direction Y, and the up-down direction Z are orthogonal to each other.

"Front", "rear", "up", "down", "right", and "left" mean "front", "rear", "up", "down", "right", and "left", respectively, for a driver who gets on the straddled vehicle 1. Unless otherwise specified in the present specification, "front" and "rear" include not only a direction parallel to the front-rear direction X but also a direction close to the front-rear direction X. The direction close to the front-rear direction X is, for example, a direction in which the angle formed by the front-rear direction X is 45 degrees or less. Similarly, unless otherwise specified, "right" and "left" include not only a direction parallel to the width direction Y but also a direction close to the width direction Y. Unless otherwise specified, "up" and "down" include not only a direction parallel to the up-down direction Z but also a direction close to the up-down direction Z. In each drawing, front, rear, up, down, right, and left are appropriately shown for reference.

In the present specification, each expression describing the arrangement has the following meaning. Hereinafter, the width direction Y will be described as an example, but the same applies to the front-rear direction X and the up-down direction Z.

The expression "a member Ma is disposed to the right/left of a member Mb" defines the position of the member Ma with respect to the member Mb in the width direction Y, and does not define the position of the member Ma with respect to the member Mb in the front-rear direction X and the up-down direction Z. In the present expression, the member Ma may or may not overlap the member Mb in the side view of the straddled vehicle 1.

The expression "the member Ma is disposed on the right/left of the member Mb" without reference to the viewing direction defines the position of the member Ma with respect to the member Mb in the width direction Y, the position of the member Ma with respect to the member Mb in the front-rear direction X, and the position of the member Ma with respect to the member Mb in the up-down direction Z. This expression means that the member Ma is disposed on the right/left side of the member Mb, and at least a part of the member Ma overlaps at least a part of the member Mb in the side view of the straddled vehicle 1.

The expression "the member Ma is disposed on the right/left side of the member Mb in a plan view of the straddled vehicle 1" defines the position of the member Ma with respect to the member Mb in the width direction Y and the position of the member Ma with respect to the member Mb in the front-rear direction X, and does not define the position of the member Ma with respect to the member Mb in the up-down direction Z. This expression means that the member Ma is disposed on the right/left side of the member Mb, the front end of the member Ma is located on the front side of the rear end of the member Mb, and the rear end of the member Ma is located on the rear side of the front end of the member Mb.

The expression "the member Ma is disposed on the right/left side of the member Mb in a front view of the straddled vehicle 1" defines the position of the member Ma with respect to the member Mb in the width direction Y and the position of the member Ma with respect to the member Mb in the up-down direction Z, and does not define the position of the member Ma with respect to the member Mb in the front-rear direction X. This expression means that the member Ma is disposed on the right/left side of the member Mb, the upper end of the member Ma is located above the lower end of the member Mb, and the lower end of the member Ma is located below the upper end of the member Mb.

In the present specification, "in a side view of the straddled vehicle 1" is appropriately referred to as "in a vehicle side view". Similarly, "in a plan view of the straddled vehicle 1" is appropriately referred to as "in a vehicle plan view". Similarly, "in a rear view of the straddled vehicle 1" is appropriately referred to as "in a vehicle rear view".

The straddled vehicle 1 includes a vehicle body frame 3. The vehicle body frame 3 includes a head pipe 5 and a main frame 7. The head pipe 5 is disposed at a front portion of the straddled vehicle 1. The main frame 7 extends rearward and downward from the head pipe 5 in a vehicle side view.

The straddled vehicle 1 includes a steering device 9. The steering device 9 is supported by the vehicle body frame 3. Specifically, the steering device 9 is supported by the head pipe 5. The steering device 9 is rotatable with respect to the vehicle body frame 3.

The steering device 9 includes a top bridge 11, a bottom bridge 13, and a front fork 14. The top bridge 11 is disposed above the head pipe 5. The bottom bridge 13 is disposed below the top bridge 11. The bottom bridge 13 is disposed below the head pipe 5. The front fork 14 is supported by the top bridge 11 and the bottom bridge 13. The front fork 14 extends forward and downward from the top bridge 11 in a vehicle side view. The front fork 14 extends to a position lower than the bottom bridge 13.

The steering device 9 includes a handle 15. The handle 15 is supported by the top bridge 11. The entire handle 15 is disposed above the top bridge 11, for example. The driver grips the handle 15 to steer the steering device 9.

The handle 15 includes a clutch lever 17. The clutch lever 17 operates transmission of a driving force. The clutch lever 17 is operated by the driver to operate transmission of the driving force. The handle 15 includes a brake lever 19. The brake lever 19 operates braking of the front wheel. The brake lever 19 is operated by the driver to decelerate the straddled vehicle 1.

The handle 15 includes an accelerator grip 21. The accelerator grip 21 is also called a throttle. The accelerator grip 21 is operated by the driver to accelerate the straddled vehicle 1.

The steering device 9 includes a front axle 23. The front axle 23 is disposed below the bottom bridge 13. The front axle 23 is supported by the front fork 14.

The straddled vehicle 1 includes a front wheel 24. The front wheel 24 is supported by the steering device 9. Specifically, the front wheel 24 is supported by the front axle 23. The front wheel 24 is rotatable about the front axle 23.

The straddled vehicle 1 includes a front wheel brake device 25. The front wheel brake device 25 applies braking force enough to stop the rotation of the front wheel 24. In the straddled vehicle 1 according to the first embodiment, a configuration in which the front wheel brake device 25 is disposed on both the right side and the left side of the front wheel 24 is illustrated as an example. The front wheel brake device 25 may be disposed only on one of the right side and the left side of the front wheel 24.

The straddled vehicle 1 includes an engine 31. The engine 31 is supported by the vehicle body frame 3.

Specifically, the engine 31 is supported by the main frame 7. The engine 31 is fixed to the vehicle body frame 3. The engine 31 does not swing with respect to the vehicle body frame 3. The engine 31 generates a driving force for causing the straddled vehicle 1 to travel. At least a part of the engine 31 is disposed below the main frame 7 in a vehicle side view. The engine 31 is disposed behind the steering device 9 in a vehicle side view.

The engine 31 includes a crankshaft 33 and a transmission 35. The crankshaft 33 outputs a driving force. The transmission 35 performs deceleration. The transmission 35 reduces the rotational speed of the crankshaft 33 by a plurality of stages of deceleration. The transmission 35 can be switched to a plurality of transmission ratios. The driving force shifted by the transmission 35 is transmitted to a drive shaft (not illustrated). The engine 31 includes a shift pedal 37. The shift pedal 37 is operated by the left foot of the driver. The shift pedal 37 operates a transmission ratio of the transmission 35.

The engine 31 is an internal combustion engine. The engine 31 includes a combustion chamber (not illustrated). The engine 31 burns fuel in the combustion chamber. The exhaust gas is generated in the combustion chamber.

The straddled vehicle 1 includes an exhaust device 29. The exhaust device 29 is supported by the vehicle body frame 3. The exhaust device 29 discharges the exhaust gas. The exhaust device 29 discharges the exhaust gas generated in the engine 31. The exhaust device 29 carries the exhaust gas from the engine 31. The exhaust device 29 is connected to the engine 31. The exhaust device 29 may be directly connected to the engine 31 or indirectly connected to the engine 31. As an example, the exhaust device 29 is connected to the engine 31 via a connection pipe (not illustrated). The exhaust gas generated in the combustion chamber of the engine 31 is guided to the exhaust device 29 via the connection pipe.

The straddled vehicle 1 includes a fuel tank 39. The fuel tank 39 is supported by the vehicle body frame 3. Specifically, the fuel tank 39 is supported by the main frame 7. The fuel tank 39 stores fuel.

The straddled vehicle 1 includes a seat 41. The seat 41 is supported by the vehicle body frame 3. The driver sits on the seat 41 and drives the straddled vehicle 1.

The straddled vehicle 1 includes a pivot shaft 43, a swing arm 45, and a rear axle 47. The pivot shaft 43 is supported by the vehicle body frame 3. Specifically, the pivot shaft 43 is supported by the main frame 7. The swing arm 45 is supported by the pivot shaft 43. The swing arm 45 is swingable about the pivot shaft 43 with respect to the vehicle body frame 3. The swing arm 45 extends rearward from the pivot shaft 43 in a vehicle side view. The rear axle 47 is supported by a rear portion of the swing arm 45.

The straddled vehicle 1 includes a rear wheel 49. The rear wheel 49 is supported by the rear axle 47. The rear wheel 49 is rotatable about the rear axle 47. The swing arm 45 and the rear wheel 49 are disposed behind the engine 31 in a vehicle side view. The swing arm 45 and the rear wheel 49 are disposed below the fuel tank 39 and the seat 41.

The straddled vehicle 1 includes a rear wheel brake device 51. The rear wheel brake device 51 applies a braking force enough to stop the rotation of the rear wheel 49.

The straddled vehicle 1 includes a brake pedal 53. The brake pedal 53 is operated by the right foot of the driver. The brake pedal 53 operates the rear wheel brake device 51. The brake pedal 53 is operated by the driver to decelerate the straddled vehicle 1.

The straddled vehicle 1 includes an accelerator opening degree sensor 61. The accelerator opening degree sensor 61 detects the opening of the accelerator grip 21.

A fuel supply device 63 is disposed behind the engine 31 in the front-rear direction X. The fuel supply device 63 supplies the fuel in the fuel tank 39 to the engine 31.

The straddled vehicle 1 includes a throttle valve opening degree sensor 65. The throttle valve opening degree sensor 65 detects an opening degree of a throttle valve that adjusts an intake amount of the engine 31.

The engine 31 includes a gear position sensor 67 that detects a gear position of the transmission 35. The gear position sensor 67 detects information related to the transmission ratio of the transmission 35. The engine 31 includes a crankshaft position sensor 69. The crankshaft position sensor 69 detects the angle of the crankshaft 33 and the rotational speed of the engine 31. The crankshaft position sensor 69 detects the phase of the crankshaft 33.

The straddled vehicle 1 includes an electronic control unit (ECU) 75 at the center in the front-rear direction X. The ECU 75 communicates with various sensors such as an IMU 81 described later and other control units via a communication network (not illustrated). The ECU 75 controls the entire straddled vehicle 1 including the engine 31 while transmitting and receiving data by the mutual communication.

<Configuration of Exhaust Device>

A configuration of the exhaust device 29 will be described.

As an example, the exhaust device 29 is fixed to the vehicle body frame 3. The exhaust device 29 is immovable with respect to the vehicle body frame 3. The exhaust device 29 is not rotatable with respect to the vehicle body frame 3.

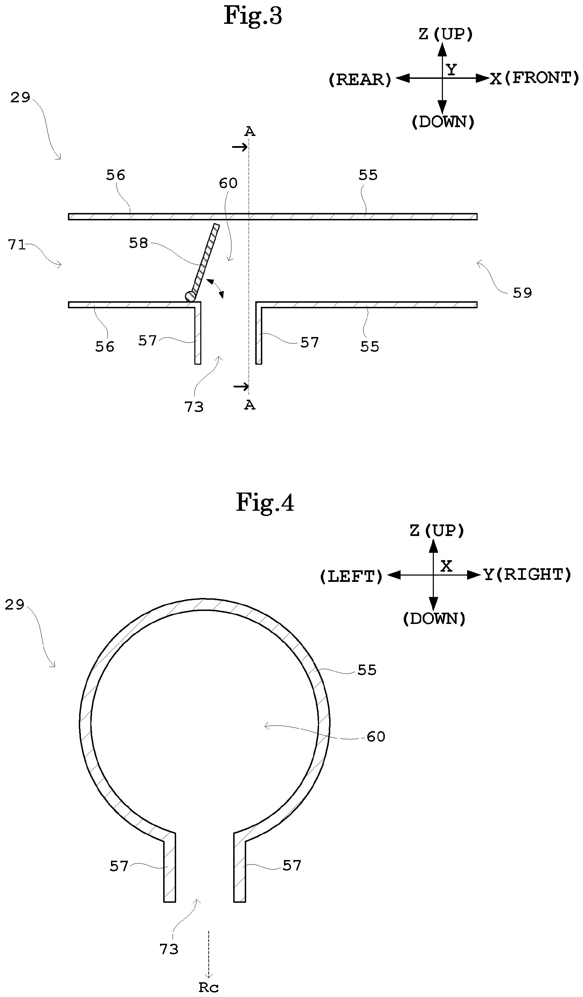

FIG. 3 is a longitudinal sectional view of the exhaust device 29 in a vehicle side view. FIG. 4 is a cross-sectional view taken along line A-A in FIG. 3. In other words, FIG. 4 is a longitudinal sectional view of the exhaust device 29 in a vehicle rear view.

The exhaust device 29 includes a junction pipe 55, a first branch pipe 56, and a second branch pipe 57. The first branch pipe 56 is connected to the junction pipe 55. The second branch pipe 57 is connected to the junction pipe 55. The junction pipe 55 branches into a first branch pipe 56 and a second branch pipe 57.

The junction pipe 55 includes a guide port 59 at one end. The guide port 59 is connected to the engine 31 via a connection pipe. That is, the exhaust gas generated in the engine 31 is guided to the exhaust device 29 through the guide port 59.

The junction pipe 55 includes a branch portion 60 at the other end. The branch portion 60 is connected to each of one end of the first branch pipe 56 and one end of the second branch pipe 57. That is, the exhaust device 29 has a structure in which the junction pipe 55 branches into the first branch pipe 56 and the second branch pipe 57 at the branch portion 60.

The junction pipe 55 extends in the front-rear direction X. The branch portion 60 is disposed behind the guide port 59 in a vehicle side view.

The first branch pipe 56 extends in the front-rear direction X. That is, the direction in which the first branch pipe 56 extends is the same as the direction in which the junction pipe 55 extends. The first branch pipe 56 extends rearward from the branch portion 60 in a vehicle side view.

The second branch pipe 57 extends in the up-down direction Z. The second branch pipe 57 extends downward from the branch portion 60 in a vehicle side view. The second branch pipe 57 extends downward from the branch portion 60 in a vehicle rear view.

The exhaust device 29 includes an exhaust port 71. The exhaust port 71 injects the exhaust gas. The exhaust port 71 injects the exhaust gas from the inside of the exhaust device 29 to the outside of the exhaust device 29. In other words, the exhaust port 71 injects the exhaust gas from the exhaust device 29 to the outside of the straddled vehicle 1.

The exhaust port 71 is configured to discharge the exhaust gas rearward in a vehicle side view.

As an example, the exhaust port 71 injects the exhaust gas rearward in the front-rear direction X.

As an example, the exhaust port 71 is provided at the other end of the first branch pipe 56.

The exhaust port 71 is an example of a main exhaust port in the present invention.

The exhaust device 29 includes the exhaust port 73. The exhaust port 73 injects the exhaust gas. The exhaust port 73 injects the exhaust gas from the inside of the exhaust device 29 to the outside of the exhaust device 29. In other words, the exhaust port 73 injects the exhaust gas from the exhaust device 29 to the outside of the straddled vehicle 1.

FIG. 4 illustrates an injection direction Rc. The injection direction Rc is an injection direction of the exhaust gas from the exhaust port 73. The exhaust port 73 is installed such that the injection direction Rc becomes downward when the straddled vehicle 1 is in an upright posture.

The injection direction Rc is different from the injection direction of the exhaust gas from the exhaust port 71.

For example, the injection direction Rc is downward in the up-down direction Z. For example, the angle between the injection direction Rc and the up-down direction Z is 0 degrees.

For example, the injection direction Rc with respect to the vehicle body frame 3 is constant. The injection direction Rc is not changeable with respect to the vehicle body frame 3.

For example, the angle between the injection direction Rc and the up-down direction Z is constant. The angle between the injection direction Rc and the up-down direction Z is not changeable.

There is no change.

For example, the exhaust port 73 injects the exhaust gas downward in the up-down direction Z.

For example, the exhaust port 73 is provided at the other end of the second branch pipe 57.

For example, the second branch pipe 57 extends in the injection direction Rc from the branch portion 60.

The diameter of the second branch pipe 57 is smaller than the diameter of the first branch pipe 56.

The exhaust port 73 is smaller than the exhaust port 71 of the first branch pipe 56.

For example, the exhaust port 71 has a circular shape. The exhaust port 73 has a circular shape. The exhaust port 73 has a diameter smaller than the diameter of the exhaust port 71.

The exhaust port 73 is an example of a first exhaust port in the present invention.

The exhaust device 29 includes an on-off valve 58. The on-off valve 58 opens and closes the exhaust port 71. The on-off valve 58 further opens and closes the exhaust port 73.

The on-off valve 58 is an example of a main valve in the present invention. The on-off valve 58 is also an example of a first valve in the present invention.

For example, the on-off valve 58 is provided in the branch portion 60. The on-off valve 58 alternatively closes the first branch pipe 56 and the second branch pipe 57. When the on-off valve 58 opens the exhaust port 71, the on-off valve 58 closes the exhaust port 73. When the on-off valve 58 opens the exhaust port 73, the on-off valve 58 closes the exhaust port 71. The on-off valve 58 can discharge the exhaust gas from only one of the exhaust port 71 and the exhaust port 73. The on-off valve 58 is also called a three-way valve.

The on-off valve 58 switches the exhaust device 29 between a rearward injection state and a side injection state. When the exhaust device 29 is in the rearward injection state, the exhaust device 29 injects the exhaust gas from the exhaust port 71. When the exhaust device 29 is in the side injection state, the exhaust device 29 injects the exhaust gas from the exhaust port 73.

When the exhaust device 29 is in the rearward injection state, the exhaust device 29 preferably does not inject the exhaust gas from the exhaust port 73.

When the exhaust device 29 is in the side injection state, the exhaust device 29 preferably does not inject the exhaust gas from the exhaust port 71.

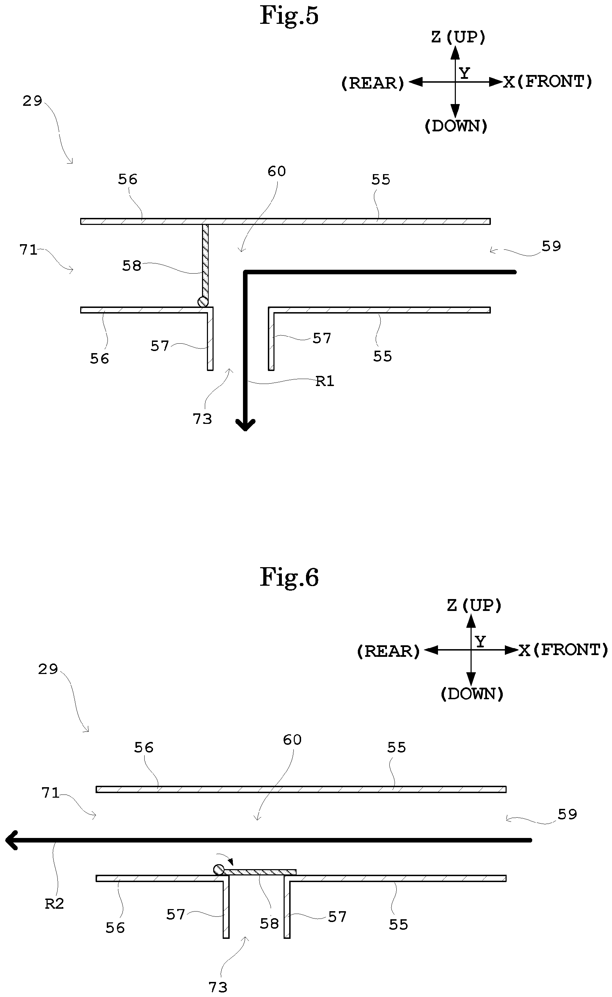

FIG. 5 illustrates the exhaust device 29 in the side injection state. The on-off valve 58 closes the exhaust port 71. That is, the on-off valve 58 blocks the exhaust port 71 from the junction pipe 55. For example, the on-off valve 58 closes one end of the first branch pipe 56. The on-off valve 58 opens the exhaust port 73. That is, the on-off valve 58 causes the exhaust port 73 to communicate with the junction pipe 55. For example, the on-off valve 58 opens one end of the second branch pipe 57.

FIG. 5 schematically illustrates a flow R1 of the exhaust gas in the side injection state. The exhaust device 29 injects the exhaust gas from the exhaust port 73. The exhaust device 29 injects the exhaust gas downward in the up-down direction Z.

The exhaust device 29 injects the exhaust gas only from the exhaust port 73. The exhaust device 29 does not inject the exhaust gas from the exhaust port 71.

Specifically, the exhaust gas enters the exhaust device 29 from the engine 31 through the guide port 59. The exhaust gas flows through the junction pipe 55. The exhaust gas flows from the guide port 59 to the branch portion 60. The exhaust gas flows from the junction pipe 55 to the second branch pipe 57. The exhaust gas flows from the branch portion 60 to the exhaust port 73. The exhaust gas is discharged from the exhaust port 73 to the outside of the straddled vehicle 1.

FIG. 6 illustrates the exhaust device 29 in a rearward injection state. The on-off valve 58 opens the exhaust port 71. That is, the on-off valve 58 allows the exhaust port 71 to communicate with the junction pipe 55. For example, the on-off valve 58 opens one end of the first branch pipe 56. The on-off valve 58 closes the exhaust port 73. That is, the on-off valve 58 blocks the exhaust port 73 from the junction pipe 55. For example, the on-off valve 58 closes one end of the second branch pipe 57.

FIG. 6 schematically illustrates a flow R2 of the exhaust gas in the rearward injection state. The exhaust device 29 injects the exhaust gas from the exhaust port 71. The exhaust device 29 injects the exhaust gas rearward in the front-rear direction X.

The exhaust device 29 injects the exhaust gas only from the exhaust port 71. The exhaust device 29 does not inject the exhaust gas from the exhaust port 73.

Specifically, the exhaust gas enters the exhaust device 29 from the engine 31 through the guide port 59. The exhaust gas flows through the junction pipe 55. The exhaust gas flows from the guide port 59 to the branch portion 60. The exhaust gas flows from the junction pipe 55 to the first branch pipe 56. The exhaust gas flows from the branch portion 60 to the exhaust port 71. The exhaust gas is discharged from the exhaust port 71 to the outside of the straddled vehicle 1.

The on-off valve 58 is, for example, an electric valve.

<Configuration of Control System>

A control system of the straddled vehicle 1 according to the first embodiment will be described.

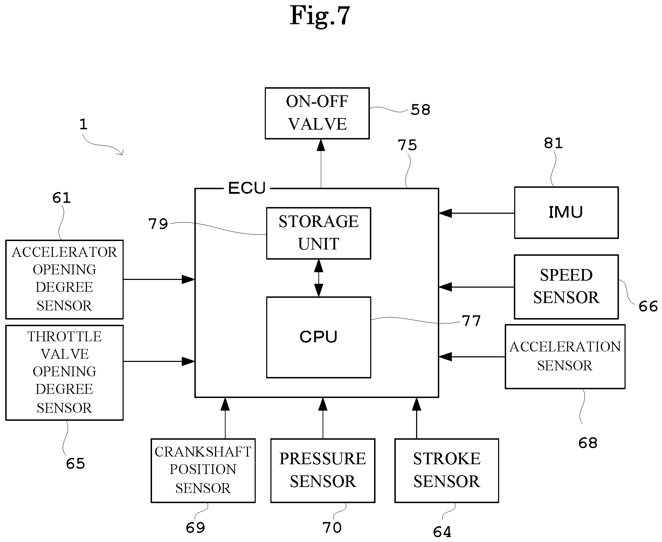

FIG. 7 is a functional block diagram illustrating a control system of the straddled vehicle 1 according to the first embodiment.

The straddled vehicle 1 includes a stroke sensor 64, a speed sensor 66, an acceleration sensor 68, and a pressure sensor 70. The stroke sensor 64 detects a stroke amount of the front fork 14. That is, the stroke sensor 64 detects the amount of extension and contraction of the front fork 14. The speed sensor 66 detects the speed of the straddled vehicle 1. The acceleration sensor 68 detects the acceleration of the straddled vehicle 1. The pressure sensor 70 detects the pressure of the exhaust gas inside the exhaust device 29.

Information detected by various sensors such as the accelerator opening degree sensor 61, the stroke sensor 64, the throttle valve opening degree sensor 65, the speed sensor 66, the acceleration sensor 68, the crankshaft position sensor 69, and the pressure sensor 70 is configured to be transmitted to the ECU 75.

The straddled vehicle 1 includes an IMU 81. The IMU 81 is also referred to as an inertial measurement unit. The IMU 81 detects the rightward and leftward lean angles of the straddled vehicle 1. When the straddled vehicle 1 travels, the IMU 81 continuously detects the lean angle of the straddled vehicle 1. The lean angle of the straddled vehicle 1 is, for example, a roll angle. The lean angle of the straddled vehicle 1 is, for example, an angle of the straddled vehicle 1 around the axis in the front-rear direction X.

The IMU 81 is an example of a lean angle detection unit in the present invention.

The lean angle will be described.

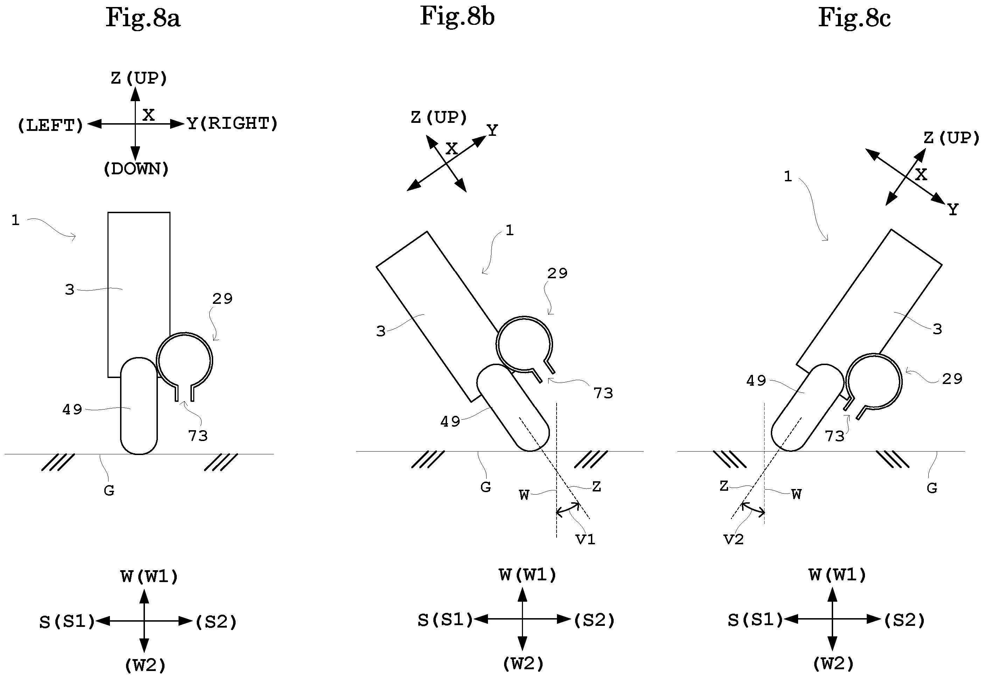

FIGS. 8A, 8B, and 8C are rear views of the straddled vehicle 1. The straddled vehicle 1 is located on a road surface G. The rear wheel 49 is in contact with the road surface G.

In FIG. 8A, the straddled vehicle 1 is in an upright posture. In FIGS. 8B and 8C, the straddled vehicle 1 is in the leaned posture. The lean angle when the straddled vehicle 1 is in the leaned posture is larger than the lean angle when the straddled vehicle 1 is in an upright posture.

In FIG. 8B, the straddled vehicle 1 is inclined leftward.

FIG. 8B illustrates a lean angle V1. The lean angle V1 is an angle between the up-down direction Z and the vertical direction W. The vertical direction W is defined by gravity, for example. Gravity acts in the vertical direction W. The lean angle V1 is an example of the leftward lean angle of the straddled vehicle 1.

In FIG. 8C, the straddled vehicle 1 is inclined rightward.

FIG. 8C illustrates a lean angle V2. The lean angle V2 is an angle between the up-down direction Z and the vertical direction W. The lean angle V2 is an example of a rightward lean angle of the straddled vehicle 1.

When the straddled vehicle 1 is in an upright posture, the up-down direction Z is substantially parallel to the vertical direction W. When the straddled vehicle 1 is in an upright posture, the lean angle V1 is substantially 0 degrees. When the straddled vehicle 1 is in an upright posture, the lean angle V2 is substantially 0 degrees.

When the straddled vehicle 1 is inclined leftward from an upright posture, the lean angle V1 increases from 0 degrees. When the straddled vehicle 1 is inclined rightward from an upright posture, the lean angle V2 increases from 0 degrees.

When the straddled vehicle 1 is inclined from an upright posture, the up-down direction Z changes with respect to the vertical direction W.

When the straddled vehicle 1 is inclined from an upright posture, the injection direction Rc also changes with respect to the vertical direction W. The injection direction Rc changes according to the lean angles V1 and V2.

FIGS. 8A, 8B, and 8C illustrate a horizontal direction S. The horizontal direction S is orthogonal to the vertical direction W. The horizontal direction S is orthogonal to the front-rear direction X. The horizontal direction S is horizontal. When the straddled vehicle 1 is in an upright posture, the width direction Y is substantially parallel to the horizontal direction S. When the straddled vehicle 1 is inclined rightward and leftward, the width direction Y is shifted from the horizontal direction S.

The vertical direction W has a first vertical direction W1 and a second vertical direction W2. The second vertical direction W2 is a direction opposite to the first vertical direction W1. When the straddled vehicle 1B is in an upright posture, the first vertical direction W1 faces upward. When the straddled vehicle 1B is in an upright posture, the second vertical direction W2 faces downward.

The term "upward" means a direction including the first vertical direction W1. The term "downward" means a direction including the second vertical direction W2.

The horizontal direction S has a first horizontal direction S1 and a second horizontal direction S2. The second horizontal direction S2 is a direction opposite to the first horizontal direction S1. When the straddled vehicle 1B is in an upright posture, the first horizontal direction S1 faces rightward. When the straddled vehicle 1B is in an upright posture, the second vertical direction W2 faces leftward.

The first horizontal direction S1 has the same meaning as "leftward and horizontal". The second horizontal direction S2 has the same meaning as "rightward and horizontal".

The term "leftward" means a direction including the first horizontal direction S1. The term "rightward" means a direction including the second horizontal direction S2.

FIG. 7 will be referred. The IMU 81 may further detect three-dimensional inertial motion (translational motion and rotational motion in orthogonal three-axis directions) of the straddled vehicle 1. The IMU 81 may detect the posture of the straddled vehicle 1. The IMU 81 may detect an angle (referred to as a pitch angle) of the straddled vehicle 1 around the width direction Y. The IMU 81 may detect an angle (referred to as a yaw angle) of the straddled vehicle 1 around the up-down direction Z.

Information detected by the IMU 81 is transmitted to the ECU 75.

The ECU 75 controls the on-off valve 58 on the basis of the detection result of the IMU 81. The ECU 75 switches the exhaust device 29 between the rearward injection state and the side injection state on the basis of the lean angles V1 and V2.

The ECU 75 is an example of a main valve control unit in the present invention. The ECU 75 is also an example of a first valve control unit in the present invention.

The ECU 75 includes a CPU 77. The CPU 77 is a so-called central processing unit, and realizes various functions by executing various programs.

The ECU 75 includes a storage unit 79. The storage unit 79 stores a program and data related to the operation of the straddled vehicle 1. An example of the program stored in the storage unit 79 is a control program executed by the ECU 75. The storage unit 79 may be rewritable. Various pieces of information stored in the storage unit 79 are appropriately read by the ECU 75.

For example, the storage unit 79 stores predetermined values L1 and L2. The predetermined value L1 is a threshold of the lean angle V1. The predetermined value L2 is a threshold of the lean angle V2.

The predetermined value L1 and the predetermined value L2 are preset values. For example, the predetermined value L1 and the predetermined value L2 are set according to various conditions of the straddled vehicle 1. The predetermined value L1 and the predetermined value L2 may be set by the driver using an input unit (not illustrated).

When the straddled vehicle 1 is in an upright posture, the lean angle V1 is less than the predetermined value L1, and the lean angle V2 is less than the predetermined value L2. When the lean angle V1 is less than the predetermined value L1 and the lean angle V2 is less than the predetermined value L2, the straddled vehicle 1 is considered to be in an upright posture.

When the straddled vehicle 1 is inclined leftward, the lean angle V1 is greater than or equal to the predetermined value L1. When the lean angle V1 is greater than or equal to the predetermined value L1, the straddled vehicle 1 is considered to be inclined leftward. When the straddled vehicle 1 is inclined rightward, the lean angle V2 is greater than or equal to the predetermined value L2. When the lean angle V2 is greater than or equal to the predetermined value L2, the straddled vehicle 1 is considered to be inclined rightward.

The predetermined value L1 is, for example, 10 degrees or more. The predetermined value L1 is, for example, 20 degrees or more. The predetermined value L1 is, for example, 30 degrees or less.

The predetermined value L2 is, for example, 10 degrees or more. The predetermined value L2 is, for example, 20 degrees or more. The predetermined value L2 is, for example, 30 degrees or less.

The predetermined value L2 is, for example, the same as the predetermined value L1. Alternatively, the predetermined value L2 may be different from the predetermined value L1.

For example, the ECU 75 controls the on-off valve 58 on the basis of the lean angles V1 and V2 and the predetermined values L1 and L2.

Specifically, in a case where the lean angle V1 is greater than or equal to the predetermined value L1, the ECU 75 closes the exhaust port 71 by the on-off valve 58. In a case where the lean angle V1 is greater than or equal to the predetermined value L1, the ECU 75 opens the exhaust port 73 by the on-off valve 58. In a case where the lean angle V1 is greater than or equal to the predetermined value L1, the ECU 75 switches the exhaust device 29 to the side injection state.

In a case where the lean angle V2 is greater than or equal to the predetermined value L2, the ECU 75 closes the exhaust port 71 by the on-off valve 58. In a case where the lean angle V2 is greater than or equal to the predetermined value L2, the ECU 75 opens the exhaust port 73 by the on-off valve 58. In a case where the lean angle V2 is greater than or equal to the predetermined value L2, the ECU 75 switches the exhaust device 29 to the side injection state.

In a case where the lean angle V1 is less than the predetermined value L1 and the lean angle V2 is less than the predetermined value L2, the ECU 75 opens the exhaust port 71 by the on-off valve 58. In a case where the lean angle V1 is less than the predetermined value L1 and the lean angle V2 is less than the predetermined value L2, the ECU 75 closes the exhaust port 73 by the on-off valve 58. In a case where the lean angle V1 is less than the predetermined value L1 and the lean angle V2 is less than the predetermined value L2, the ECU 75 switches the exhaust device 29 to the rearward injection state.

The predetermined value L1 is an example of a first threshold of the present invention. The predetermined value L2 is an example of a second threshold of the present invention.

Alternatively, the storage unit 79 may store an upright condition and an inclination condition. The ECU 75 may control the on-off valve 58 on the basis of the lean angles V1 and V2, the upright condition, and the inclination condition. The upright condition and the inclination condition are defined by the predetermined values L1 and L2.

For example, the upright condition is that both a first condition and a second condition are satisfied. The first condition is that the lean angle V1 is less than the predetermined value L1. The second condition is that the lean angle V2 is less than the predetermined value L2. When the upright condition is satisfied, the straddled vehicle 1 is considered to be in an upright posture. In a case where the upright condition is satisfied, the ECU 75 opens the exhaust port 71 by the on-off valve 58. In a case where the upright condition is satisfied, the ECU 75 closes the exhaust port 73 by the on-off valve 58.

For example, the inclination condition is that one of a third condition and a fourth condition is satisfied. The third condition is that the lean angle V1 is greater than or equal to the predetermined value L1. The fourth condition is that the lean angle V2 is greater than or equal to the predetermined value L2. When the inclination condition is satisfied, the straddled vehicle 1 is considered to be in the leaned posture. In a case where the inclination condition is satisfied, the ECU 75 closes the exhaust port 71 by the on-off valve 58. In a case where the inclination condition is satisfied, the ECU 75 opens the exhaust port 73 by the on-off valve 58.

<Operation Example of Straddled Vehicle 1 according to First Embodiment>

An operation of the straddled vehicle 1 according to the first embodiment will be described. The operation of the straddled vehicle 1 includes the operation of the straddled vehicle 1 traveling straight, the operation of the straddled vehicle 1 turning leftward, and the operation of the straddled vehicle 1 turning rightward.

<Operation Example of Straddled Vehicle 1 Traveling Straight>

First, the operation of the straddled vehicle 1 traveling straight will be described.

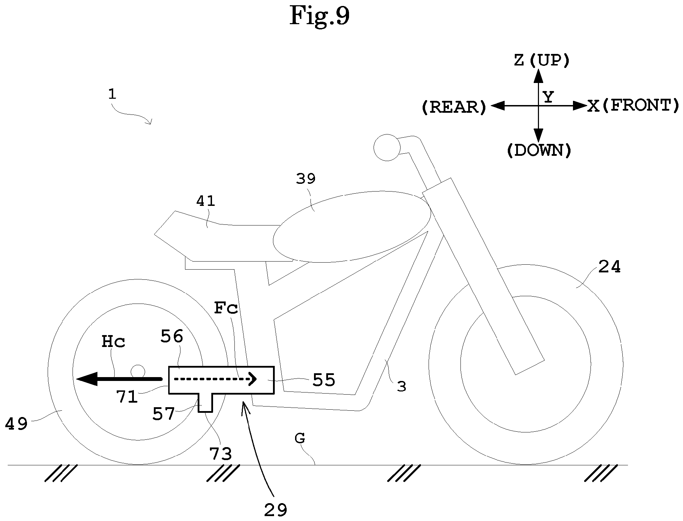

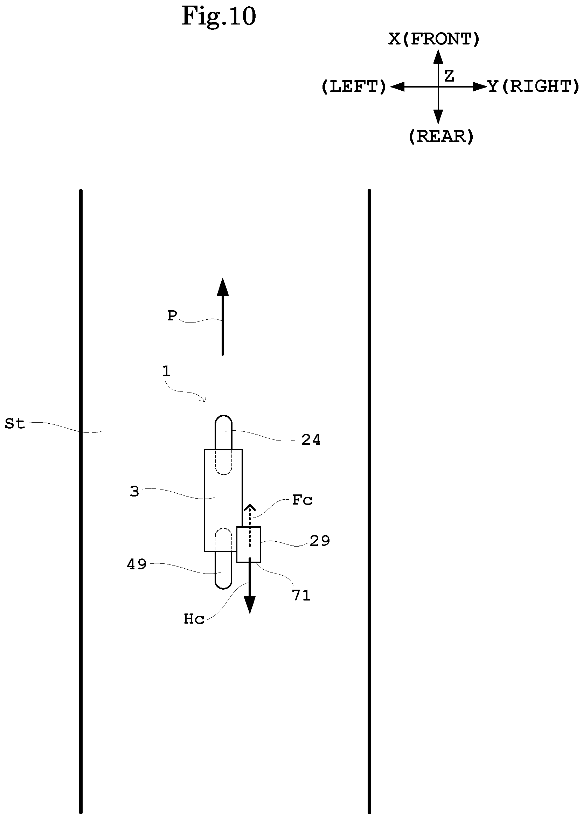

FIG. 9 is a right side view of the straddled vehicle 1. FIG. 10 is a plan view of the straddled vehicle 1.

The straddled vehicle 1 travels straight on a straight road St. The straddled vehicle 1 moves in a traveling direction P. The traveling direction P is forward in the front-rear direction X. When the straddled vehicle 1 travels straight, the straddled vehicle 1 takes an upright posture.

The IMU 81 detects the lean angles V1 and V2 of the straddled vehicle 1. The IMU 81 outputs the lean angles V1 and V2 to the ECU 75.

The ECU 75 acquires the lean angles V1 and V2. The ECU 75 compares the lean angle V1 with the predetermined value L1. The ECU 75 determines that the lean angle V1 is less than the predetermined value L1. The ECU 75 compares the lean angle V2 with the predetermined value L2. The ECU 75 determines that the lean angle V2 is less than the predetermined value L2. Alternatively, the ECU 75 may determine that the upright condition is satisfied.

The ECU 75 opens the exhaust port 71 by the on-off valve 58 and closes the exhaust port 73 by the on-off valve 58.

The exhaust device 29 enters the rearward injection state. The exhaust port 73 does not inject the exhaust gas. The exhaust port 71 injects the exhaust gas. The exhaust port 71 injects the exhaust gas backward. The exhaust port 71 injects the exhaust gas in a direction opposite to the traveling direction P.

FIGS. 9 and 10 schematically illustrate a jet Hc. The jet Hc is formed by the exhaust gas injected from the exhaust port 71. The jet Hc is generated in the exhaust port 71. The jet Hc is generated outside the exhaust device 29. The jet Hc is generated outside the straddled vehicle 1.

When the jet Hc is generated, a reaction force Fc of the jet Hc is generated. The reaction force Fc has a direction opposite to that of the jet Hc. The reaction force Fc acts on the exhaust device 29. The reaction force Fc acts on the straddled vehicle 1. The exhaust port 71 causes the reaction force Fc to act on the straddled vehicle 1.

For example, the jet Hc is directed rearward from the exhaust port 71. The reaction force Fc is directed forward. The reaction force Fc acts on the straddled vehicle 1 in the front direction. The reaction force Fc acts on the straddled vehicle 1 in the same direction as the traveling direction P.

<Operation Example of Straddled Vehicle 1 Turning Leftward>

Next, the operation of the straddled vehicle 1 turning leftward will be described.

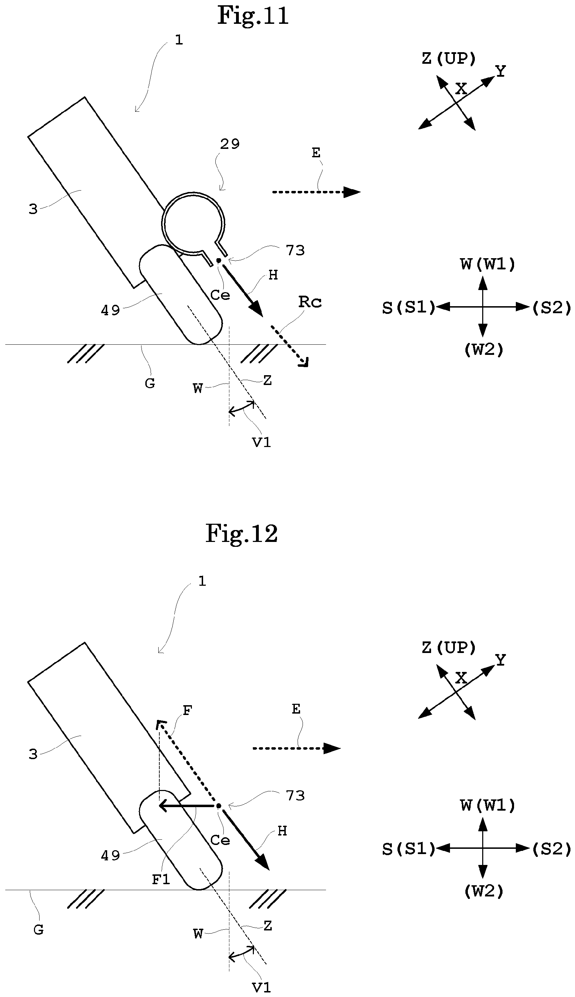

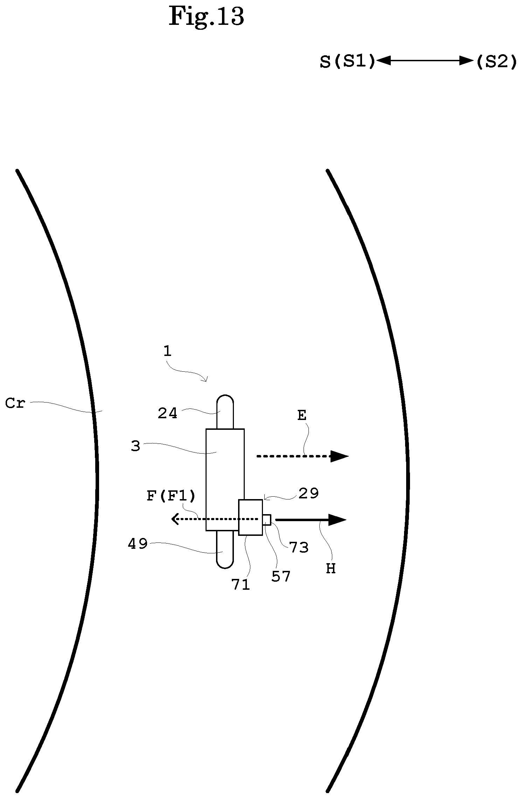

FIGS. 11 and 12 are rear views of the straddled vehicle 1. FIG. 13 is a plan view of the straddled vehicle 1. In FIG. 12, the description of the exhaust device 29 is omitted for convenience of description.

In a case where the straddled vehicle 1 turns leftward on a curved road Cr, a centrifugal force E acts on the straddled vehicle 1 in the rightward direction with respect to the straddled vehicle 1. For example, the centrifugal force E acts on the straddled vehicle 1 in the second horizontal direction S2.

Although not illustrated, the curved road Cr may be defined by, for example, the center of curvature and the radius of curvature. In this case, the centrifugal force E has a direction from the center of curvature toward the straddled vehicle 1.

Although not illustrated, the movement path of the straddled vehicle 1 may be defined by a turning center and a turning radius. For example, the straddled vehicle 1 may move on a circumference having a turning radius about the turning center. In this case, the centrifugal force E has a direction from the turning center toward the straddled vehicle 1.

In a case where the straddled vehicle 1 turns leftward on the curved road Cr, the straddled vehicle 1 is inclined leftward.

As the centrifugal force E increases, the lean angle V1 increases.

As the radius of curvature decreases, the centrifugal force E increases. Therefore, the lean angle V1 increases as the radius of curvature decreases.

As the turning radius decreases, the centrifugal force E increases. Therefore, the lean angle V1 increases as the turning radius decreases.

The speed of the straddled vehicle 1 when the straddled vehicle 1 turns on the curved road Cr is referred to as a "turning speed". As the turning speed increases, the centrifugal force E increases. Therefore, the lean angle V1 increases as the turning speed increases.

The IMU 81 detects the lean angles V1 and V2 of the straddled vehicle 1.

The ECU 75 determines that the lean angle V1 is greater than or equal to the predetermined value L1. Alternatively, the ECU 75 may determine that the inclination condition is satisfied. The ECU 75 closes the exhaust port 71 by the on-off valve 58 and opens the exhaust port 73 by the on-off valve 58.

The exhaust device 29 enters the side injection state. The exhaust port 71 does not inject the exhaust gas. The exhaust port 73 injects the exhaust gas. Then, the exhaust port 73 causes the first force to act on the straddled vehicle 1. The first force offsets at least a part of the centrifugal force E.

Specifically, the exhaust port 73 injects the exhaust gas downward in the up-down direction Z. The straddled vehicle 1 is inclined leftward. Therefore, the exhaust port 73 injects the exhaust gas in the same direction as the direction of the centrifugal force E. That is, the exhaust port 73 injects the exhaust gas rightward. For example, the exhaust port 73 injects the exhaust gas rightward and downward. For example, the exhaust port 73 injects the exhaust gas in a direction in which the second horizontal direction S2 and the second vertical direction W2 are combined.

FIGS. 11 to 13 schematically illustrate the jet H. The jet H is formed by the exhaust gas injected from the exhaust port 73. The jet H is generated at the exhaust port 73. For example, the jet H is generated at a start point Ce corresponding to the center of the exhaust port 73. The jet H is generated outside the exhaust device 29. The jet H is generated outside the straddled vehicle 1. The jet H has the same direction as the injection direction Rc.

The first force is, for example, the reaction force F of the jet H. When the jet H is generated, the reaction force F is generated. The reaction force F has a direction opposite to that of the jet H. The reaction force F has a direction opposite to the injection direction Rc. The reaction force F acts on the exhaust device 29. The reaction force F acts on the straddled vehicle 1. The exhaust port 73 causes the reaction force F to act on the straddled vehicle 1.

When the straddled vehicle 1 turns leftward on the curved road Cr, the jet H is directed rightward from the start point Ce. For example, the jet H is directed rightward and downward. The jet H has a direction in which the second horizontal direction S2 and the second vertical direction W2 are combined.

The reaction force F is directed leftward from the start point Ce. For example, the reaction force F is directed leftward and upward. The reaction force F has a direction in which the first horizontal direction S1 and the first vertical direction W1 are combined.

The reaction force F acts on the straddled vehicle 1 in a leftward direction. For example, the reaction force F acts on the straddled vehicle 1 in the leftward and upward directions. The reaction force F acts on the straddled vehicle 1 in a direction in which the first horizontal direction S1 and the first vertical direction W1 are combined.

The centrifugal force E acts on the straddled vehicle 1 in the rightward direction. The reaction force F acts on the straddled vehicle 1 in the leftward direction. Therefore, the reaction force F acts on the straddled vehicle 1 in a direction opposite to the centrifugal force E. Therefore, the reaction force F offsets at least a part of the centrifugal force E.

The first force includes a first component force F1. The first component force F1 is a component of the reaction force F in the horizontal direction S. The first component force F1 acts on the straddled vehicle 1.

The first component force F1 has a first horizontal direction S1. The centrifugal force E is directed rightward. For example, the centrifugal force E has a second horizontal direction S2. Therefore, the first component force F1 has a direction opposite to the direction of the centrifugal force E.

In a case where the straddled vehicle 1 turns leftward on the curved road Cr, the first component force F1 acts on the straddled vehicle 1 in the first horizontal direction S1. Therefore, the first component force F1 offsets at least a part of the centrifugal force E.

<Operation Example of Straddled Vehicle 1 Turning Rightward>

Finally, the operation of the straddled vehicle 1 turning rightward will be described.

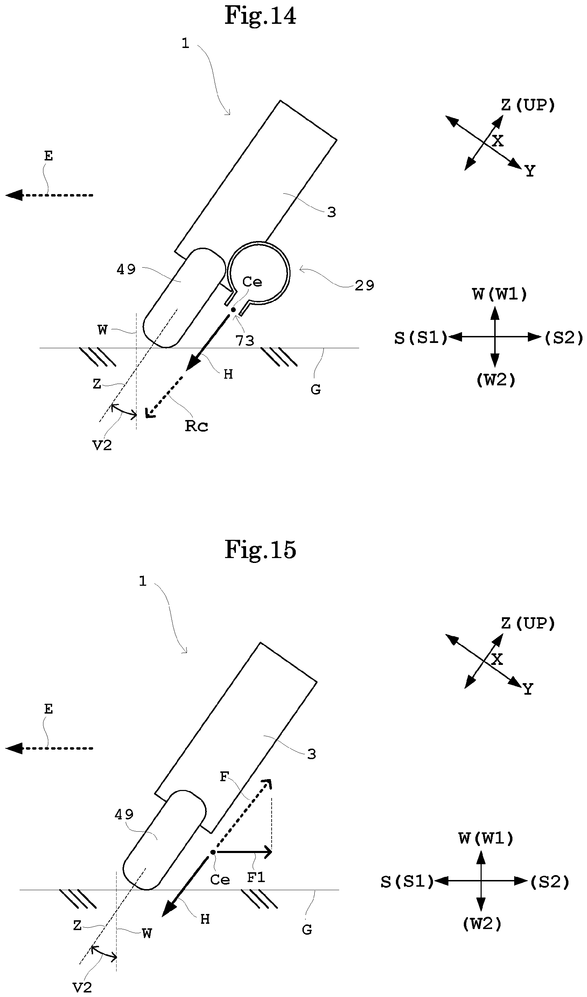

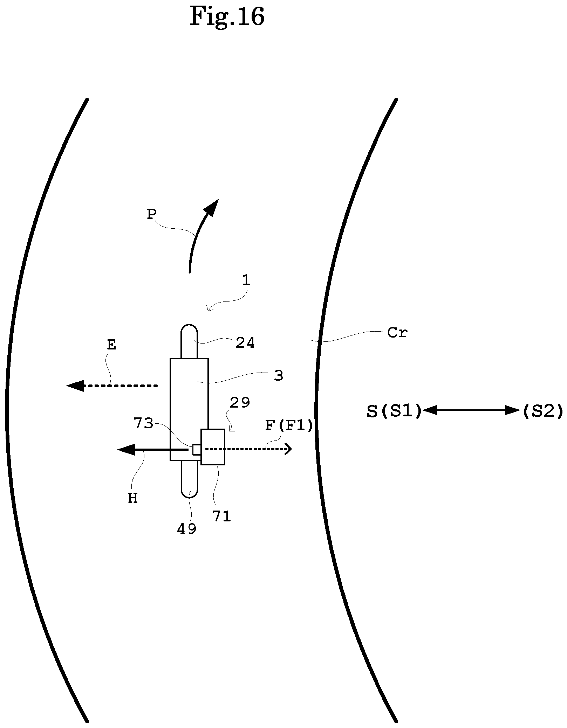

FIGS. 14 and 15 are rear views of the straddled vehicle 1. FIG. 16 is a plan view of the straddled vehicle 1. In FIG. 15, the description of the exhaust device 29 is omitted for convenience of description.

In a case where the straddled vehicle 1 turns rightward on the curved road Cr, the centrifugal force E acts on the straddled vehicle 1 in the leftward direction. For example, the centrifugal force E acts on the straddled vehicle 1 in the first horizontal direction S1.

The IMU 81 detects the lean angles V1 and V2 of the straddled vehicle 1.

The ECU 75 determines that the lean angle V2 is greater than or equal to the predetermined value L2. Alternatively, the ECU 75 may determine that the inclination condition is satisfied. The ECU 75 closes the exhaust port 71 by the on-off valve 58 and opens the exhaust port 73 by the on-off valve 58.

The exhaust device 29 enters the side injection state. The exhaust port 71 does not inject the exhaust gas. The exhaust port 73 injects the exhaust gas. Then, the exhaust port 71 causes the first force to act on the straddled vehicle 1. The first force offsets at least a part of the centrifugal force E.

Specifically, the exhaust port 73 injects the exhaust gas downward in the up-down direction Z. The straddled vehicle 1 is inclined rightward. Therefore, the exhaust port 73 injects the exhaust gas in the same direction as the direction of the centrifugal force E. That is, the exhaust port 73 injects the exhaust gas leftward. For example, the exhaust port 73 injects the exhaust gas leftward and downward. For example, the exhaust port 73 injects the exhaust gas in a direction in which the first horizontal direction S1 and the second vertical direction W2 are combined.

The jet H is formed by the exhaust gas injected from the exhaust port 73.

The first force is, for example, the reaction force F of the jet H.

When the straddled vehicle 1 turns rightward on the curved road Cr, the jet H is directed leftward from the start point Ce. For example, the jet H is directed leftward and downward. The jet H has a direction in which the first horizontal direction S1 and the second vertical direction W2 are combined.

The reaction force F is directed rightward from the start point Ce. For example, the reaction force F is directed rightward and upward. The reaction force F has a direction in which the second horizontal direction S2 and the first vertical direction W1 are combined.

The reaction force F acts on the straddled vehicle 1 in the rightward direction. For example, the reaction force F acts on the straddled vehicle 1 in the rightward and upward directions. The reaction force F acts on the straddled vehicle 1 in the second horizontal direction S2 and in the upward direction in the vertical direction W.

The centrifugal force E acts on the straddled vehicle 1 in the leftward direction. The reaction force F acts on the straddled vehicle 1 in the rightward direction. Therefore, the reaction force F acts on the straddled vehicle 1 in a direction opposite to the centrifugal force E. Therefore, the reaction force F offsets at least a part of the centrifugal force E.

The first component force F1 has a second horizontal direction S2. The centrifugal force E is directed leftward. For example, the centrifugal force E has a first horizontal direction S1. Therefore, the first component force F1 has a direction opposite to the direction of the centrifugal force E.

In a case where the straddled vehicle 1 turns rightward on the curved road Cr, the first component force F1 acts on the straddled vehicle 1 in the second horizontal direction S2. Therefore, the first component force F1 offsets at least a part of the centrifugal force E.

<Effects of First Embodiment>

The straddled vehicle 1 includes an exhaust device 29 that discharges exhaust gas. The exhaust device 29 includes the exhaust port 73. The exhaust port 73 injects the exhaust gas to apply the first force to the straddled vehicle 1. In a case where the straddled vehicle 1 turns on the curved road Cr, the first force offsets at least a part of the centrifugal force E acting on the straddled vehicle 1. Therefore, even in a case where the centrifugal force E acting on the straddled vehicle 1 increases, it is possible to support the straddled vehicle 1 to appropriately turn on the curved road Cr. That is, even in a case where the turning speed of the straddled vehicle 1 increases in circuit traveling or the like, it is possible to assist the straddled vehicle 1 to appropriately turn on the curved road Cr. As an example, even in a case where the centrifugal force E is large, the straddled vehicle 1 hardly deviates to the outside of the curved road Cr. Therefore, in circuit traveling or the like, it is possible to assist the straddled vehicle 1 to appropriately turn on the curved road Cr while increasing the turning speed of the straddled vehicle 1. Therefore, it is possible to provide the straddled vehicle 1 having good turning performance.

In the straddled vehicle 1, at least a part of the centrifugal force E acting on the straddled vehicle 1 is offset by injecting the exhaust gas from the exhaust port 73 of the exhaust device 29. That is, by injecting the exhaust gas from the exhaust port 73, the exhaust device 29 contributes to good turning efficiency of the straddled vehicle 1. The device for discharging the exhaust gas is generally provided in the straddled vehicle 1. Therefore, in addition to the exhaust device 29, it is not necessary to mount, on the straddled vehicle 1, a new device for offsetting at least a part of the centrifugal force E acting on the straddled vehicle 1. Therefore, it is possible to contribute to good turning efficiency of the straddled vehicle 1 while avoiding complication of the straddled vehicle 1. That is, the straddled vehicle 1 having good turning efficiency can be realized at a lower cost. By effectively using the exhaust gas inevitably generated in a case where the straddled vehicle 1 is operated, the exhaust device 29 can contribute to good turning efficiency of the straddled vehicle 1. That is, the exhaust device 29 can contribute to the posture control of the straddled vehicle 1 by effectively utilizing the exhaust gas. Therefore, it is possible to realize the straddled vehicle 1 having good turning efficiency while considering the global environment.

The first force that offsets at least a part of the centrifugal force E acting on the straddled vehicle 1 is the reaction force F of the jet H of the exhaust gas injected from the exhaust port 73. In other words, the reaction force F as the first force has a direction opposite to the injection direction Rc of the exhaust gas injected from the exhaust port 73. Therefore, by injecting the exhaust gas from the exhaust port 73, the exhaust port 73 can easily apply the first force to the straddled vehicle 1.

In a case where the straddled vehicle 1 turns on the curved road Cr, the exhaust port 73 injects the exhaust gas in the same direction as the direction of the centrifugal force E acting on the straddled vehicle 1. For example, in a case where the straddled vehicle 1 turns rightward on the curved road Cr, the centrifugal force E acts on the straddled vehicle 1 in the leftward direction, and the exhaust port 73 injects the exhaust gas leftward. For example, in a case where the straddled vehicle 1 turns leftward on the curved road Cr, the centrifugal force E acts on the straddled vehicle 1 in the rightward direction, and the exhaust port 73 injects the exhaust gas rightward. Therefore, in a case where the straddled vehicle 1 turns on the curved road Cr, the first force easily offsets at least a part of the centrifugal force E acting on the straddled vehicle 1.

In a case where the straddled vehicle 1 turns on the curved road Cr, the first force includes the first component force F1. The first component force F1 has a direction opposite to the direction of the centrifugal force E acting on the straddled vehicle 1. Therefore, in a case where the straddled vehicle 1 turns on the curved road Cr, the first force easily offsets at least a part of the centrifugal force E acting on the straddled vehicle 1.

The injection direction Rc of the exhaust gas from the exhaust port 73 changes according to the leftward lean angle V1 of the straddled vehicle 1 and the rightward lean angle V2 of the straddled vehicle 1. Depending on the lean angles V1 and V2, the direction of the centrifugal force E also changes. Therefore, in a case where the straddled vehicle 1 turns on the curved road Cr, the first force easily offsets at least a part of the centrifugal force E.

The exhaust port 73 is installed such that the injection direction Rc of the exhaust gas from the exhaust port 73 becomes downward when the straddled vehicle 1 is in an upright posture. In a case where the straddled vehicle 1 is inclined rightward, the exhaust port 73 injects the exhaust gas. In a case where the straddled vehicle 1 is inclined leftward, the exhaust port 73 injects the exhaust gas.

For example, in a case where the straddled vehicle 1 turns rightward, the straddled vehicle 1 is inclined rightward from an upright posture. In a case where the straddled vehicle 1 is inclined rightward from an upright posture, the injection direction Rc changes from downward to leftward. More specifically, in a case where the straddled vehicle 1 is inclined rightward from an upright posture, the injection direction Rc changes from the second vertical direction W2 to a direction in which the second vertical direction W2 and the first horizontal direction S1 are combined. For example, in a case where the straddled vehicle 1 turns leftward, the straddled vehicle 1 is inclined leftward from an upright posture. In a case where the straddled vehicle 1 is inclined leftward from an upright posture, the injection direction Rc changes from downward to rightward. More specifically, in a case where the straddled vehicle 1 is inclined leftward from an upright posture, the injection direction Rc changes from the second vertical direction W2 to a direction in which the second vertical direction W2 and the second horizontal direction S2 are combined. To sum up, the injection direction Rc changes according to the lean angles V1 and V2. In a case where the straddled vehicle 1 turns on the curved road Cr, the injection direction Rc is the same as the direction of the centrifugal force E. In a case where the straddled vehicle 1 turns on the curved road Cr, the exhaust port 73 injects the exhaust gas in the same direction as the direction of the centrifugal force E. Therefore, in a case where the straddled vehicle 1 turns on the curved road Cr, it is easy for the first force to offset at least a part of the centrifugal force E.

The straddled vehicle 1 includes an on-off valve 58. The on-off valve 58 opens and closes the exhaust port 73. Therefore, it is easy to control the injection of the exhaust gas from the exhaust port 73.

The straddled vehicle 1 includes an IMU 81 and an ECU 75. The IMU 81 detects a leftward lean angle V1 of the straddled vehicle 1 and a rightward lean angle V2 of the straddled vehicle 1. The ECU 75 controls the on-off valve 58 on the basis of the detection result of the IMU 81. Therefore, it is easy to control the injection of the exhaust gas from the exhaust port 73 according to the lean angles V1 and V2.

In a case where the lean angle V1 is greater than or equal to the predetermined value L1, the ECU 75 opens the exhaust port 73 by the on-off valve 58. In a case where the lean angle V2 is greater than or equal to the predetermined value L2, the ECU 75 opens the exhaust port 73 by the on-off valve 58. In a case where the lean angle V1 is greater than or equal to the predetermined value L1, it is considered that the straddled vehicle turns leftward on the curved road Cr. In a case where the lean angle V2 is greater than or equal to the predetermined value L1, it is considered that the straddled vehicle turns rightward on the curved road Cr. Therefore, in a case where the straddled vehicle 1 turns on the curved road Cr, the exhaust port 73 injects the exhaust gas. Therefore, in a case where the straddled vehicle 1 turns on the curved road Cr, it is easy for the first force to offset at least a part of the centrifugal force E.

The exhaust device 29 includes an exhaust port 71 for discharging exhaust gas. The exhaust port 73 is smaller than the exhaust port 71. Therefore, it is easy to increase the speed of the exhaust gas injected from the exhaust port 73. Therefore, it is easy to increase the first force.

The exhaust port 73 has a diameter smaller than the diameter of the exhaust port 71. Therefore, in a case where the exhaust port 73 injects the exhaust gas, it is easy to increase the speed of the exhaust gas injected from the exhaust port 73. Therefore, it is easy to increase the first force.

In a case where the straddled vehicle 1 travels straight in the straight road St, the straddled vehicle 1 takes an upright posture. When the straddled vehicle 1 takes an upright posture, the exhaust port 71 injects the exhaust gas. The exhaust port 71 injects the exhaust gas in a direction opposite to the traveling direction P of the straddled vehicle 1. The exhaust port 71 causes the reaction force Fc to act on the straddled vehicle 1. The reaction force Fc has the same direction as the traveling direction P. Therefore, the straddled vehicle 1 smoothly travels straight in the straight road St.

In a case where the straddled vehicle 1 travels straight in the straight road St, the exhaust port 73 does not inject the exhaust gas. In a case where the straddled vehicle 1 travels straight in the straight road St, the centrifugal force E acting on the straddled vehicle 1 is sufficiently small. Therefore, in a case where the straddled vehicle 1 travels straight in the straight road St, it is not necessary to offset at least a part of the centrifugal force E. Therefore, even if the exhaust port 73 does not inject the exhaust gas, the straddled vehicle 1 smoothly travels straight on the straight road St. Rather, since the exhaust port 73 does not inject the exhaust gas, the straddled vehicle 1 further smoothly travels straight on the straight road St.

The exhaust port 71 is larger than the exhaust port 73. Therefore, the exhaust port 71 efficiently discharges the exhaust gas. For example, even in a case where the speed of the straddled vehicle 1 is high and the amount of exhaust gas generated is large, the exhaust port 71 smoothly discharges the exhaust gas. Therefore, the straddled vehicle 1 appropriately travels straight on the straight road St.

The exhaust device 29 includes an on-off valve 58. The on-off valve 58 opens and closes the exhaust port 71. Therefore, it is easy to control the injection of the exhaust gas from the exhaust port 71.

The straddled vehicle 1 includes an IMU 81 and an ECU 75. The IMU 81 detects a lean angle V1 and a lean angle V2. The ECU 75 controls the on-off valve 58 on the basis of the detection result of the IMU 81. Therefore, it is easy to control the injection of the exhaust gas from the exhaust port 71 according to the lean angle V1 and the lean angle V2.

In a case where the lean angle V1 is greater than or equal to the predetermined value L1, the ECU 75 closes the exhaust port 71 by the on-off valve 58. In a case where the lean angle V2 is greater than or equal to the predetermined value L2, the ECU 75 closes the exhaust port 71 by the on-off valve 58. In a case where the lean angle V1 is greater than or equal to the predetermined value L1, it is considered that the straddled vehicle 1 turns on the curved road Cr. In a case where the lean angle V2 is greater than or equal to the predetermined value L2, it is considered that the straddled vehicle 1 turns on the curved road Cr. Therefore, in a case where the straddled vehicle 1 turns on the curved road Cr, the exhaust port 71 does not inject the exhaust gas. Therefore, in a case where the straddled vehicle 1 turns on the curved road Cr, it is easy to increase the injection amount of the exhaust gas from the exhaust port 73. Therefore, in a case where the straddled vehicle 1 turns on the curved road Cr, it is easy for the first force to offset at least a part of the centrifugal force E.

[Second Embodiment]

A straddled vehicle 1A according to a second embodiment of the present invention will be described. The same components as those of the straddled vehicle 1 according to the first embodiment are denoted by the same reference numerals, and different components will be described in detail. As a configuration different from that of the first embodiment in the second embodiment, there is an exhaust device 29.

<Configuration of Exhaust Device>

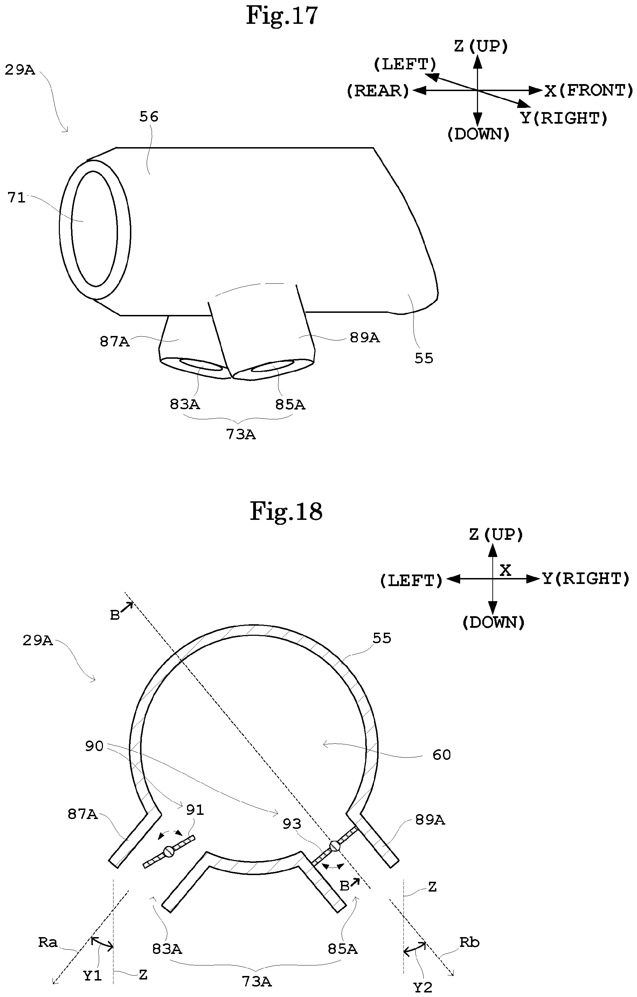

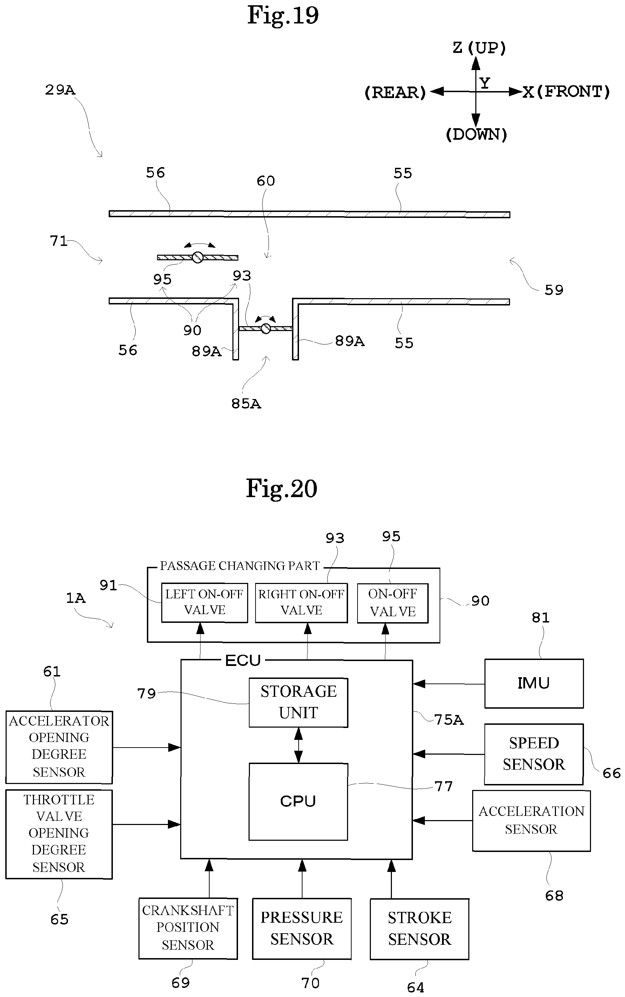

FIG. 17 is a perspective view of an exhaust device 29A according to the second embodiment. FIG. 18 illustrates a longitudinal cross section of an exhaust device 29A according to the second embodiment in a vehicle rear view. FIG. 19 is a cross-sectional view taken along line B-B in FIG. 18.

The straddled vehicle 1A includes the exhaust device 29A. The exhaust device 29A includes an exhaust port 71 and an exhaust port 73A. The exhaust port 73A has a left exhaust port 83A and a right exhaust port 85A. The left exhaust port 83A injects the exhaust gas. The left exhaust port 83A injects the exhaust gas from the inside of the exhaust device 29 to the outside of the exhaust device 29. The right exhaust port 85A injects the exhaust gas. The right exhaust port 85A injects the exhaust gas from the inside of the exhaust device 29 to the outside of the exhaust device 29. The exhaust port 71, the left exhaust port 83A, and the right exhaust port 85A are configured to exhaust the exhaust gas in different directions. That is, the exhaust device 29A is configured to be able to discharge the exhaust gas in three different directions.

The left exhaust port 83A is installed so as to inject the exhaust gas leftward. The right exhaust port 85A is installed so as to inject the exhaust gas rightward.

The exhaust port 73A is an example of a first exhaust port in the present invention. The left exhaust port 83A is an example of the left exhaust port in the present invention. The right exhaust port 85A is an example of the right exhaust port in the present invention.

FIG. 18 illustrates an injection direction Ra. The injection direction Ra is an injection direction of the exhaust gas from the left exhaust port 83A. In a case where the straddled vehicle 1A is in an upright posture, the left exhaust port 83A is installed such that the injection direction Ra becomes leftward and downward.

For example, the injection direction Ra is downward in the up-down direction Z and leftward in the width direction Y. In a case where the straddled vehicle 1A is in an upright posture, an angle Y1 between the injection direction Ra and the up-down direction Z is larger than 0 degrees. The angle Y1 between the injection direction Ra and the up-down direction Z is smaller than 90 degrees.

For example, the injection direction Ra with respect to the vehicle body frame 3 is constant. The angle between the injection direction Ra and the up-down direction Z does not change.

FIG. 18 illustrates an injection direction Rb. The injection direction Rb is an injection direction of the exhaust gas from the right exhaust port 85A. In a case where the straddled vehicle 1A is in an upright posture, the right exhaust port 85A is installed such that the injection direction Rb becomes rightward and downward.

For example, the injection direction Rb is downward in the up-down direction Z and rightward in the width direction Y. In a case where the straddled vehicle 1A is in an upright posture, an angle Y2 between the injection direction Rb and the up-down direction Z is larger than 0 degrees. The angle Y2 between the injection direction Rb and the up-down direction Z is smaller than 90 degrees.

For example, the injection direction Rb with respect to the vehicle body frame 3 is constant. The angle between the injection direction Rb and the up-down direction Z does not change.

The structure of the exhaust device 29A will be described.

The exhaust device 29A includes a junction pipe 55, a first branch pipe 56, a left branch pipe 87A, and a right branch pipe 89A. The junction pipe 55 is connected to the first branch pipe 56, the left branch pipe 87A, and the right branch pipe 89A. The junction pipe 55 branches into the first branch pipe 56, the left branch pipe 87A, and the right branch pipe 89A.

Specifically, the branch portion 60 of the junction pipe 55 is connected to each of one end of the first branch pipe 56, one end of the left branch pipe 87A, and one end of the right branch pipe 89A. That is, the exhaust device 29A has a structure in which the junction pipe 55 branches into the first branch pipe 56, the left branch pipe 87A, and the right branch pipe 89A at the branch portion 60.

The configurations of the first branch pipe 56 and the exhaust port 71 in the second embodiment are similar to those in the first embodiment. That is, the first branch pipe 56 extends rearward from the branch portion 60 in a vehicle side view. The exhaust port 71 is provided at the other end of the first branch pipe 56. The exhaust port 71 is configured to discharge the exhaust gas rearward in a vehicle side view.

The left exhaust port 83A is provided at the other end of the left branch pipe 87A. Specifically, the left exhaust port 83A discharges the exhaust gas flowing from the junction pipe 55 to the left branch pipe 87A to the outside of the exhaust device 29A.

In a case where the straddled vehicle 1A is in an upright posture and in a case where the straddled vehicle 1A is in an upright posture, the left branch pipe 87A extends leftward and downward from the branch portion 60 in a vehicle rear view. For example, the left branch pipe 87A extends in the injection direction Ra from the branch portion 60.

The right exhaust port 85A is provided at the other end of the right branch pipe 89A. Specifically, the right exhaust port 85A discharges the exhaust gas flowing from the junction pipe 55 to the right branch pipe 89A to the outside of the exhaust device 29A.

In a case where the straddled vehicle 1A is in an upright posture, the right branch pipe 89A extends rightward and downward from the branch portion 60 in a vehicle rear view. For example, the right branch pipe 89A extends in the injection direction Rb from the branch portion 60.

The left exhaust port 83A is smaller than the exhaust port 71. The right exhaust port 85A is smaller than the exhaust port 71.

For example, the left exhaust port 83A has a diameter smaller than the diameter of the exhaust port 71. For example, the right exhaust port 85A has a diameter smaller than the diameter of the exhaust port 71.

The exhaust device 29A includes a passage changing part 90. The passage changing part 90 changes the passage of the exhaust gas in the exhaust device 29A. The passage changing part 90 switches the exhaust device 29A between the left injection state and the right injection state. When the exhaust device 29A is in the left injection state, the exhaust device 29A injects the exhaust gas from the left exhaust port 83A. When the exhaust device 29A is in the right injection state, the exhaust device 29A injects the exhaust gas from the right exhaust port 85A.

When the exhaust device 29A is in the left injection state, the exhaust device 29A preferably does not inject the exhaust gas from the right exhaust port 85A. When the exhaust device 29A is in the left injection state, the exhaust device 29A preferably does not inject the exhaust gas from the exhaust port 71.

When the exhaust device 29A is in the right injection state, the exhaust device 29A preferably does not inject the exhaust gas from the left exhaust port 83A. When the exhaust device 29A is in the right injection state, the exhaust device 29A preferably does not inject the exhaust gas from the exhaust port 71.

The passage changing part 90 may further switch the exhaust device 29A to the rearward injection state. When the exhaust device 29A is in the rearward injection state, the exhaust device 29A injects the exhaust gas from the exhaust port 71.

When the exhaust device 29A is in the rearward injection state, the exhaust device 29A preferably does not inject the exhaust gas from the left exhaust port 83A.

When the exhaust device 29A is in the rearward injection state, the exhaust device 29A preferably does not inject the exhaust gas from the right exhaust port 85A.

The passage changing part 90 includes a left on-off valve 91, a right on-off valve 93, and an on-off valve 95. The left on-off valve 91 opens and closes the left exhaust port 83A. The right on-off valve 93 opens and closes the right exhaust port 85A. The on-off valve 95 opens and closes the exhaust port 71.

The left on-off valve 91 is disposed in the left branch pipe 87A. The right on-off valve 93 is disposed in the right branch pipe 89A. The on-off valve 95 is disposed on the first branch pipe 56.

When the passage changing part 90 switches the exhaust device 29A to the left injection state, the left on-off valve 91 opens the left exhaust port 83A, the right on-off valve 93 closes the right exhaust port 85A, and the on-off valve 95 closes the exhaust port 71.

When the passage changing part 90 switches the exhaust device 29A to the right injection state, the left on-off valve 91 closes the left exhaust port 83A, the right on-off valve 93 opens the right exhaust port 85A, and the on-off valve 95 closes the exhaust port 71.

When the passage changing part 90 switches the exhaust device 29A to the rearward injection state, the left on-off valve 91 closes the left exhaust port 83A, the right on-off valve 93 closes the right exhaust port 85A, and the on-off valve 95 opens the exhaust port 71.

The left on-off valve 91, the right on-off valve 93, and the on-off valve 95 are, for example, electric valves.

The on-off valve 95 is also an example of a main valve in the present invention. The left on-off valve 91 and the right on-off valve 93 are also examples of the first valve in the present invention.

<Configuration of Control System>

A control system of the straddled vehicle 1A will be described.

FIG. 20 is a functional block diagram for explaining a control system of the straddled vehicle 1A according to the second embodiment.

The straddled vehicle 1A includes an ECU 75A. The ECU 75A controls the passage changing part 90 on the basis of the detection result of the IMU 81. The ECU 75A controls the left on-off valve 91, the right on-off valve 93, and the on-off valve 95 on the basis of the detection result of the IMU 81. The ECU 75A switches the exhaust device 29A between the right injection state and the left injection state on the basis of the lean angles V1 and V2. Further, the ECU 75A may switch the exhaust device 29A to the rearward injection state on the basis of the lean angles V1 and V2.

The ECU 75A is an example of a control unit in the present invention. The ECU 75A is also an example of a main valve control unit in the present invention. The ECU 75A is also an example of a first valve control unit in the present invention.

For example, in a case where the lean angle V1 is greater than or equal to the predetermined value L1, the ECU 75A causes the passage changing part 90 to switch the exhaust device 29A to the right injection state. In a case where the lean angle V1 is greater than or equal to the predetermined value L1, the ECU 75A controls the passage changing part 90 to inject the exhaust gas from the right exhaust port 85A.

In a case where the lean angle V2 is greater than or equal to the predetermined value L2, the ECU 75A causes the passage changing part 90 to switch the exhaust device 29A to the left injection state. In a case where the lean angle V2 is greater than or equal to the predetermined value L2, the ECU 75A controls the passage changing part 90 to inject the exhaust gas from the left exhaust port 83A.

In a case where the lean angle V1 is less than the predetermined value L1 and the lean angle V2 is less than the predetermined value L2, the ECU 75A causes the passage changing part 90 to switch the exhaust device 29A to the rearward injection state. In a case where the lean angle V1 is less than the predetermined value L1 and the lean angle V2 is less than the predetermined value L2, the ECU 75A controls the passage changing part 90 to inject the exhaust gas from the exhaust port 71.

Alternatively, the storage unit 79 may store an upright condition, a left inclination condition, and a right inclination condition.

The ECU 75A may control the passage changing part 90 on the basis of the lean angles V1 and V2, the upright condition, the left inclination condition, and the right inclination condition.

The upright condition, the right inclination condition, and the left inclination condition are defined by predetermined values L1 and L2.

The upright condition is as described in the first embodiment. In a case where the upright condition is satisfied, the ECU 75A causes the passage changing part 90 to switch the exhaust device 29A to the rearward injection state.

The left inclination condition is that the lean angle V1 is greater than or equal to a predetermined value L1. When the left inclination condition is satisfied, the straddled vehicle 1A is considered to be in the leftward leaned posture. In a case where the left inclination condition is satisfied, the ECU 75A causes the passage changing part 90 to switch the exhaust device 29A to the rightward injection state.

The right inclination condition is that the lean angle V2 is greater than or equal to a predetermined value L2. When the right inclination condition is satisfied, the straddled vehicle 1A is considered to be in the rightward leaned posture. In a case where the right inclination condition is satisfied, the ECU 75A causes the passage changing part 90 to switch the exhaust device 29A to the leftward injection state.

<Operation Example of Straddled Vehicle 1A Traveling Straight>

An operation of the straddled vehicle 1A traveling straight will be described.

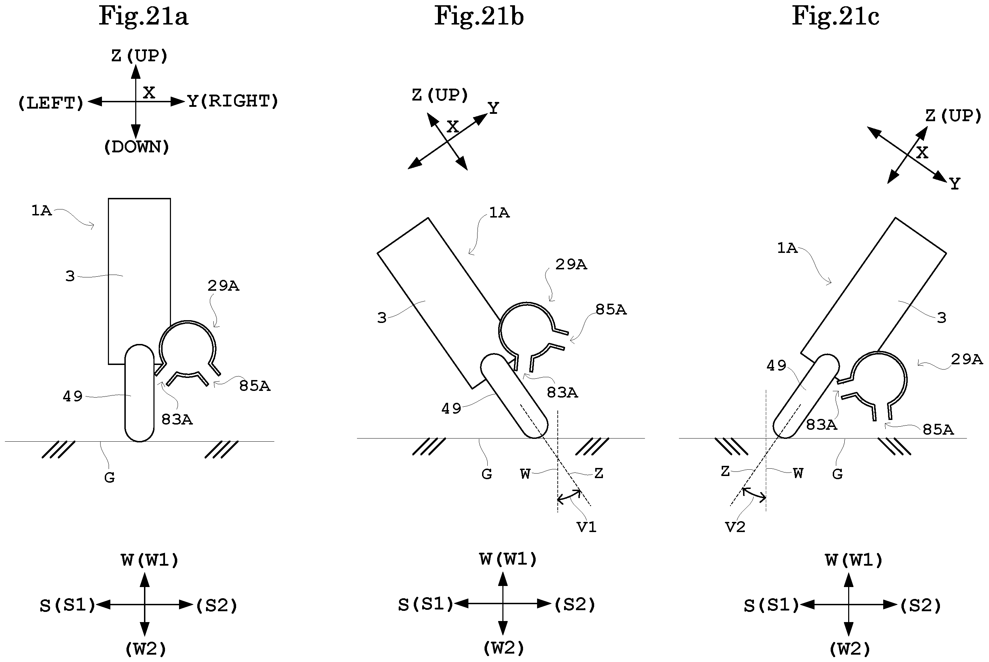

FIG. 21A is a rear view of the straddled vehicle 1A.

The straddled vehicle 1A takes an upright posture.

The IMU 81 detects the lean angles V1 and V2 of the straddled vehicle 1A.

The ECU 75A determines that the lean angle V1 is less than the predetermined value L1. The ECU 75A determines that the lean angle V2 is less than the predetermined value L2. Alternatively, the ECU 75A may determine that the upright condition is satisfied. The ECU 75A controls the passage changing part 90. The ECU 75A switches the exhaust device 29A to the rearward injection state.

The exhaust device 29A enters the rearward injection state. The exhaust port 71 injects the exhaust gas backward.

<Operation Example of Straddled Vehicle 1A Turning Leftward>

The operation of the straddled vehicle 1A turning leftward will be described.

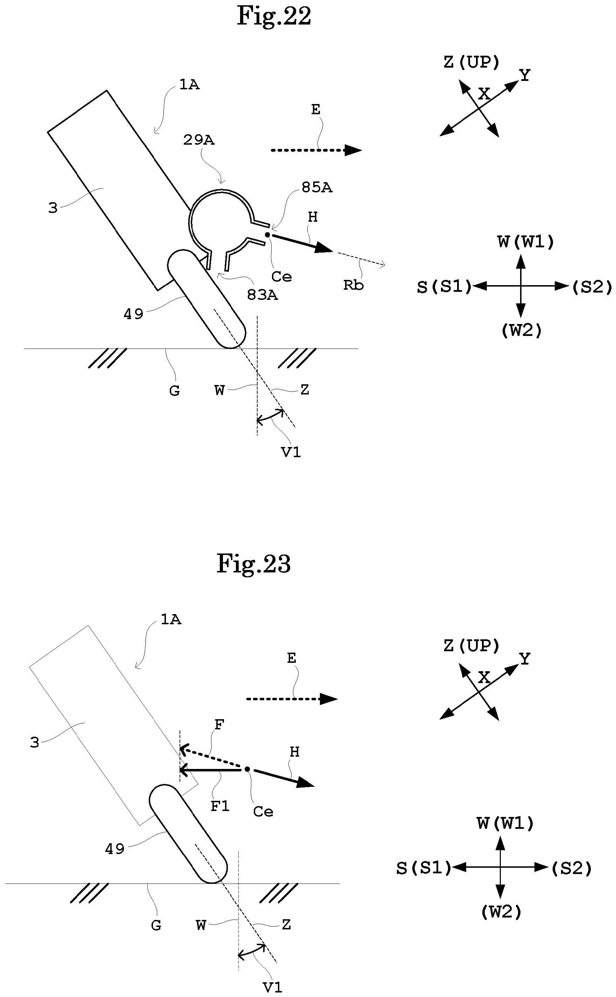

FIGS. 21B, 22, and 23 are rear views of the straddled vehicle 1A. In FIG. 23, the description of the exhaust device 29A is omitted for convenience of description.

The centrifugal force E acts on the straddled vehicle 1A in the rightward direction.

The straddled vehicle 1A is inclined leftward.

The IMU 81 detects the lean angles V1 and V2.

The ECU 75A determines that the lean angle V1 is greater than or equal to the predetermined value L1. Alternatively, the ECU 75A may determine that the left inclination condition is satisfied. The ECU 75A controls the passage changing part 90. The ECU 75A switches the exhaust device 29A to the right injection state.

The exhaust device 29A enters the rightward injection state. The right exhaust port 85A injects the exhaust gas. The right exhaust port 85A applies the first force to the straddled vehicle 1. The first force offsets at least a part of the centrifugal force E.

Specifically, the right exhaust port 85A injects the exhaust gas in the same direction as the direction of the centrifugal force E. That is, the right exhaust port 85A injects the exhaust gas rightward.

For example, the right exhaust port 85A injects the exhaust gas rightward and downward. The right exhaust port 85A injects the exhaust gas rightward and horizontally. The right exhaust port 85A injects the exhaust gas in the second horizontal direction S2.

The injection direction Rb is relatively close to horizontal. The injection direction Rb is relatively close to the second horizontal direction S2. For example, the injection direction Rb and the injection direction Rc of the first embodiment are compared with each other with reference to FIGS. 11 and 22. An angle between the injection direction Rb and the second horizontal direction S2 is smaller than an angle between the injection direction Rc and the second horizontal direction S2.

The jet H is directed rightward from the start point Ce. For example, the jet H is directed rightward and downward. The jet H is directed rightward and horizontally. The jet H is directed in the second horizontal direction S2.

The first force is, for example, the reaction force F of the jet H. The reaction force F acts on the straddled vehicle 1A in a leftward direction. For example, the reaction force F acts on the straddled vehicle 1A in the leftward and upward directions. The reaction force F acts on the straddled vehicle 1A in the leftward and horizontal directions. The reaction force F acts on the straddled vehicle 1A in the first horizontal direction S1.

The reaction force F acts on the straddled vehicle 1 in a direction opposite to the centrifugal force E. The reaction force F offsets at least a part of the centrifugal force E.

The first component force F1 has a first horizontal direction S1. The first component force F1 has a direction opposite to the direction of the centrifugal force E. Therefore, the first component force F1 offsets at least a part of the centrifugal force E.

As described above, the injection direction Rb is relatively close to horizontal. Therefore, the magnitude of the first component force F1 is relatively close to the magnitude of the reaction force F. That is, the first component force F1 is relatively large. Therefore, when the straddled vehicle 1A turns leftward on the curved road Cr, the first component force F1 offsets a larger portion of the centrifugal force E. When the straddled vehicle 1A turns leftward on the curved road Cr, the reaction force F effectively offsets the centrifugal force E.

<Operation Example of Straddled Vehicle 1A Turning Rightward>

The operation of the straddled vehicle 1A turning rightward will be described.

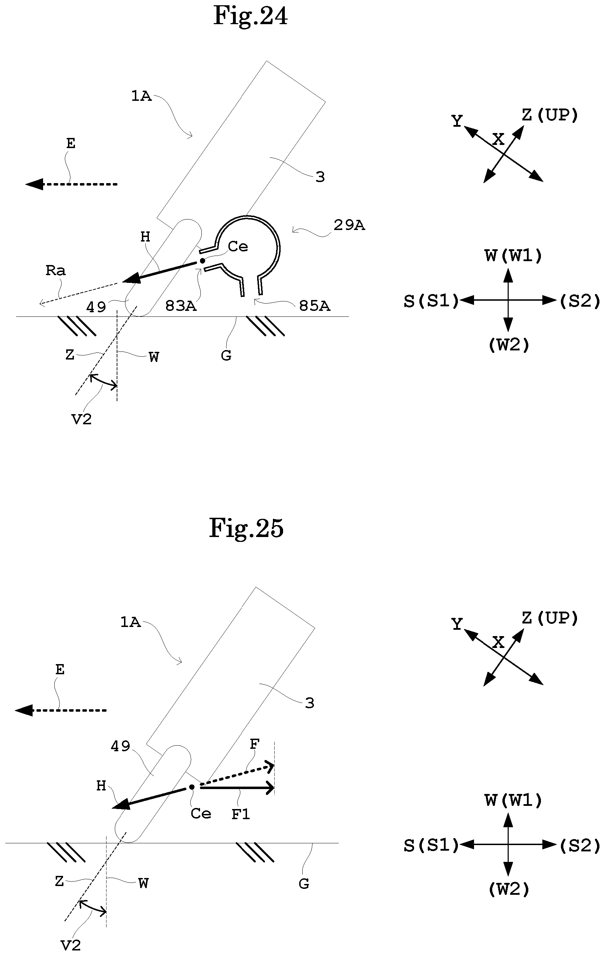

FIGS. 21C, 24, and 25 are rear views of the straddled vehicle 1A. In FIG. 25, the description of the exhaust device 29A is omitted for convenience of description.

The centrifugal force E acts on the straddled vehicle 1A in the leftward direction.

The straddled vehicle 1A is inclined rightward.

The IMU 81 detects the lean angles V1 and V2.

The ECU 75A determines that the lean angle V2 is greater than or equal to the predetermined value L2. Alternatively, the ECU 75A may determine that the right inclination condition is satisfied. The ECU 75A controls the passage changing part 90. The ECU 75A switches the exhaust device 29A to the left injection state.

The exhaust device 29A enters the leftward injection state. The left exhaust port 83A injects the exhaust gas. The left exhaust port 83A applies the first force to the straddled vehicle 1. The first force offsets at least a part of the centrifugal force E.

Specifically, the left exhaust port 83A injects the exhaust gas in the same direction as the direction of the centrifugal force E. That is, the left exhaust port 83A injects the exhaust gas leftward.

For example, the left exhaust port 83A injects the exhaust gas leftward and downward. The left exhaust port 83A injects the exhaust gas leftward and horizontally. The left exhaust port 83A injects the exhaust gas in the first horizontal direction S1.

The injection direction Ra is relatively close to horizontal. The injection direction Ra is relatively close to the first horizontal direction S1. For example, the injection direction Ra and the injection direction Rc of the first embodiment are compared with each other with reference to FIGS. 14 and 24. An angle between the injection direction Ra and the first horizontal direction S1 is smaller than an angle between the injection direction Rc and the first horizontal direction S1.

The jet H is directed leftward from the start point Ce. For example, the jet H is directed leftward and downward. The jet H is directed leftward and horizontally. The jet H is directed in the first horizontal direction S1.

The first force is, for example, the reaction force F of the jet H. The reaction force F acts on the straddled vehicle 1A in the rightward direction. For example, the reaction force F acts on the straddled vehicle 1A in the rightward and upward directions. The reaction force F acts on the straddled vehicle 1A in the rightward and horizontal directions. The reaction force F acts on the straddled vehicle 1A in the second horizontal direction S2.

The reaction force F acts on the straddled vehicle 1A in a direction opposite to the centrifugal force E. The reaction force F offsets at least a part of the centrifugal force E.

The first component force F1 has a second horizontal direction S2. The first component force F1 has a direction opposite to the direction of the centrifugal force E. Therefore, the first component force F1 offsets at least a part of the centrifugal force E.

As described above, the injection direction Ra is relatively close to horizontal. Therefore, the magnitude of the first component force F1 is relatively close to the magnitude of the reaction force F. That is, the first component force F1 is relatively large. Therefore, when the straddled vehicle 1A turns rightward on the curved road Cr, the first component force F1 offsets a larger portion of the centrifugal force E. When the straddled vehicle 1A turns rightward on the curved road Cr, the reaction force F effectively offsets the centrifugal force E.

<Effects of Second Embodiment>

According to the straddled vehicle 1A of the second embodiment, the same effects as those of the straddled vehicle 1 of the first embodiment are obtained. For example, the straddled vehicle 1A includes an exhaust device 29A. The exhaust device 29A includes an exhaust port 73A. The exhaust port 73A injects the exhaust gas to apply the first force to the straddled vehicle 1A. In a case where the straddled vehicle 1A turns on the curved road Cr, the first force offsets at least a part of the centrifugal force E acting on the straddled vehicle 1A. The first force is, for example, the reaction force F of the jet H. Therefore, it is possible to provide the straddled vehicle 1A having good turning performance.

Further, the straddled vehicle 1A of the second embodiment has the following effects.

The exhaust port 73A includes a right exhaust port 85A and a left exhaust port 83A. The right exhaust port 85A is installed so as to inject the exhaust gas rightward. The left exhaust port 83A is provided to inject the exhaust gas leftward. The exhaust device 29A includes a passage changing part 90. The passage changing part 90 changes the passage of the exhaust gas in the exhaust device 29A to switch between the right injection state and the left injection state. In the right injection state, the exhaust gas is injected from the right exhaust port 85A. In the left injection state, the exhaust gas is injected from the left exhaust port 83A. The straddled vehicle 1A includes an IMU 81 and an ECU 75A. The ECU 75A controls the passage changing part 90 on the basis of the detection result of the IMU 81.

Therefore, it is easy to change the injection directions Ra and Rb of the exhaust gas according to the lean angles V1 and V2. Furthermore, in a case where the straddled vehicle 1A turns on the curved road Cr, it is easy to inject the exhaust gas in the same direction as the direction of the centrifugal force E. As an example, in a case where the straddled vehicle 1A is inclined rightward, it is easy to inject the exhaust gas from the left exhaust port 83A. As an example, in a case where the straddled vehicle 1A is inclined leftward, it is easy to inject the exhaust gas from the right exhaust port 85A. Therefore, in a case where the straddled vehicle 1A turns on the curved road Cr, it is easy for the first force to offset at least a part of the centrifugal force E.

In a case where the lean angle V1 is greater than or equal to the predetermined value L1, the ECU 75A controls the passage changing part 90 to inject the exhaust gas from the right exhaust port 85A. In a case where the lean angle V1 is greater than or equal to the predetermined value L1, it is considered that the straddled vehicle 1A turns leftward. Therefore, in a case where the straddled vehicle 1A turns leftward, it is easy to inject the exhaust gas from the right exhaust port 85A. Therefore, in a case where the straddled vehicle 1A turns leftward, it is easy for the first force to offset at least a part of the centrifugal force E.

In a case where the lean angle V2 is greater than or equal to the predetermined value L2, the ECU 75A controls the passage changing part 90 to inject the exhaust gas from the left exhaust port 83A. In a case where the lean angle V2 is greater than or equal to the predetermined value L2, it is considered that the straddled vehicle 1A turns rightward. Therefore, in a case where the straddled vehicle 1A is turning rightward, it is easy to inject the exhaust gas from the left exhaust port 83A. Therefore, in a case where the straddled vehicle 1A turns rightward, it is easy for the first force to offset at least a part of the centrifugal force E.

In a case where the straddled vehicle 1A is in an upright posture, the right exhaust port 85A is installed such that the injection direction Rb of the exhaust gas from the right exhaust port 85A becomes rightward and downward. In a case where the straddled vehicle 1A is in an upright posture, the injection direction Rb is a direction in which the second horizontal direction S2 and the second vertical direction W2 are combined. In a case where the straddled vehicle 1A is in an upright posture, the left exhaust port 83A is installed such that the injection direction of the exhaust gas from the left exhaust port 83A becomes leftward and downward. In a case where the straddled vehicle 1A is in an upright posture, the injection direction Ra is a direction in which the first horizontal direction S1 and the second vertical direction W2 are combined.

For example, in a case where the straddled vehicle 1A turns rightward, the straddled vehicle 1A inclines rightward from an upright posture. In a case where the straddled vehicle 1A is inclined rightward from an upright posture, the injection direction Ra changes from leftward and downward to leftward and horizontal. In a case where the straddled vehicle 1A is inclined rightward from an upright posture, the injection direction Ra changes from the direction in which the first horizontal direction S1 and the second vertical direction W2 are combined to the first horizontal direction S1. For example, in a case where the straddled vehicle 1A turns leftward, the straddled vehicle 1A is inclined leftward from an upright posture. In a case where the straddled vehicle 1A is inclined leftward from an upright posture, the injection direction Rb changes from rightward and downward to rightward and horizontal. In a case where the straddled vehicle 1A is inclined leftward from an upright posture, the injection direction Rb changes from the direction in which the second horizontal direction S2 and the second vertical direction W2 are combined to the second horizontal direction S2. In summary, in a case where the straddled vehicle 1A turns on the curved road Cr, the exhaust port 73A injects the exhaust gas in substantially the same direction as the direction of the centrifugal force E. Therefore, in a case where the straddled vehicle 1A turns on the curved road Cr, it is easy for the first force to offset at least a part of the centrifugal force E. For example, the portion of the centrifugal force E offset by the first force becomes large. The turning performance of the straddled vehicle 1A is further improved as the portion of the centrifugal force E offset by the first force increases.

[Third Embodiment]

Next, a straddled vehicle 1B according to a third embodiment of the present invention will be described. The same components as those in the first embodiment or the second embodiment are denoted by the same reference numerals, and different components will be described in detail.

<Configuration of Exhaust Device>

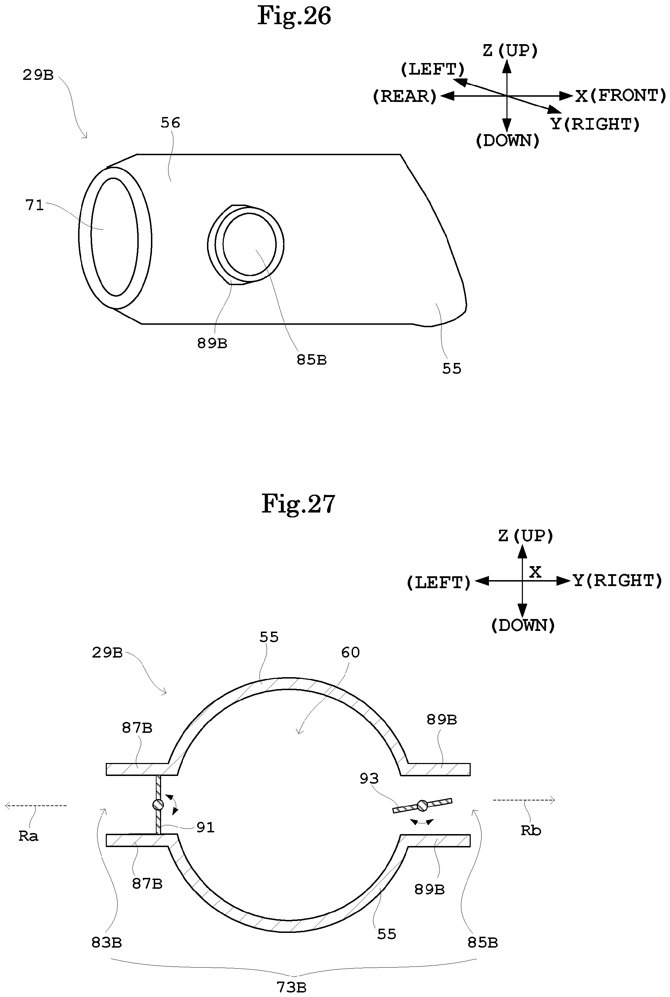

FIG. 26 is a perspective view of an exhaust device 29B according to a third embodiment. FIG. 27 illustrates a longitudinal cross section of the exhaust device 29B according to the third embodiment in a vehicle rear view.

The straddled vehicle 1B includes the exhaust device 29B. The exhaust device 29B is similar to the exhaust device 29A of the second embodiment. However, the exhaust device 29B is different from the exhaust device 29A in the injection directions Ra and Rb.

The exhaust device 29B includes an exhaust port 71 and an exhaust port 73B. The exhaust port 73B has a left exhaust port 83B and a right exhaust port 85B. The left exhaust port 83B injects the exhaust gas. The left exhaust port 83B injects the exhaust gas from the inside of the exhaust device 29B to the outside of the exhaust device 29B. The right exhaust port 85B injects the exhaust gas. The right exhaust port 85B injects the exhaust gas from the inside of the exhaust device 29B to the outside of the exhaust device 29B.

The left exhaust port 83B is installed so as to inject the exhaust gas leftward. The right exhaust port 85B is installed so as to inject the exhaust gas rightward.

The exhaust port 73B is an example of a first exhaust port in the present invention. The left exhaust port 83B is an example of the left exhaust port in the present invention. The right exhaust port 85B is an example of the right exhaust port in the present invention.

In a case where the straddled vehicle 1B is in an upright posture, the left exhaust port 83B is installed such that the injection direction Ra of the exhaust gas from the left exhaust port 83B becomes leftward and horizontal.

For example, the injection direction Ra is leftward in the width direction Y. The angle between the injection direction Ra and the up-down direction Z is 90 degrees. The injection direction Ra is parallel to the width direction Y.

For example, the injection direction Ra with respect to the vehicle body frame 3 is constant. The angle between the injection direction Ra and the up-down direction Z does not change.

In a case where the straddled vehicle 1B is in an upright posture, the right exhaust port 85B is installed such that the injection direction Rb of the exhaust gas from the right exhaust port 85B becomes rightward and horizontal.

For example, the injection direction Rb is rightward in the width direction Y. The angle between the injection direction Rb and the up-down direction Z is 90 degrees. The injection direction Rb is parallel to the width direction Y.

For example, the injection direction Rb with respect to the vehicle body frame 3 is constant. The angle between the injection direction Rb and the up-down direction Z does not change.

The structure of the exhaust device 29B will be described.

The exhaust device 29B includes a junction pipe 55, a first branch pipe 56, a left branch pipe 87B, and a right branch pipe 89B. The junction pipe 55 is connected to the first branch pipe 56, the left branch pipe 87B, and the right branch pipe 89B. The junction pipe 55 branches into the first branch pipe 56, the left branch pipe 87B, and the right branch pipe 89B.

The left exhaust port 83B is provided at the other end of the left branch pipe 87B. Specifically, the left exhaust port 83B discharges the exhaust gas flowing from the junction pipe 55 to the left branch pipe 87B to the outside of the exhaust device 29B.

In a case where the straddled vehicle 1B is in an upright posture, the left branch pipe 87B extends leftward and horizontally from the junction pipe 55 in a vehicle rear view. For example, the left branch pipe 87B extends from the junction pipe 55 in the injection direction Ra.

The right exhaust port 85B is provided at the other end of the right branch pipe 89B. Specifically, the right exhaust port 85B discharges the exhaust gas flowing from the junction pipe 55 to the right branch pipe 89B to the outside of the exhaust device 29B.

In a case where the straddled vehicle 1B is in an upright posture, the right branch pipe 89B extends rightward and horizontally from the junction pipe 55 in a vehicle rear view. For example, the right branch pipe 89B extends from the junction pipe 55 in the injection direction Rb.

The exhaust device 29B includes a passage changing part 90. The passage changing part 90 is as described in the second embodiment. For example, the passage changing part 90 includes a left on-off valve 91, a right on-off valve 93, and an on-off valve 95. For example, the left on-off valve 91 is disposed in the left branch pipe 87B. The right on-off valve 93 is disposed in the right branch pipe 89B.

<Configuration of Control System>

For convenience, FIG. 20 will be referred. The control system of the third embodiment is common to the control system of the second embodiment, that is, the straddled vehicle 1B includes an ECU 75A and an IMU 81. The ECU 75A controls the passage changing part 90 on the basis of the detection result of the IMU 81. The ECU 75A controls the left on-off valve 91, the right on-off valve 93, and the on-off valve 95 on the basis of the detection result of the IMU 81. The ECU 75A switches the exhaust device 29B among the right injection state, the left injection state, and the rearward injection state on the basis of the lean angles V1 and V2.

<Operation Example of Straddled Vehicle 1B Traveling Straight>

An operation of the straddled vehicle 1B traveling straight will be described.

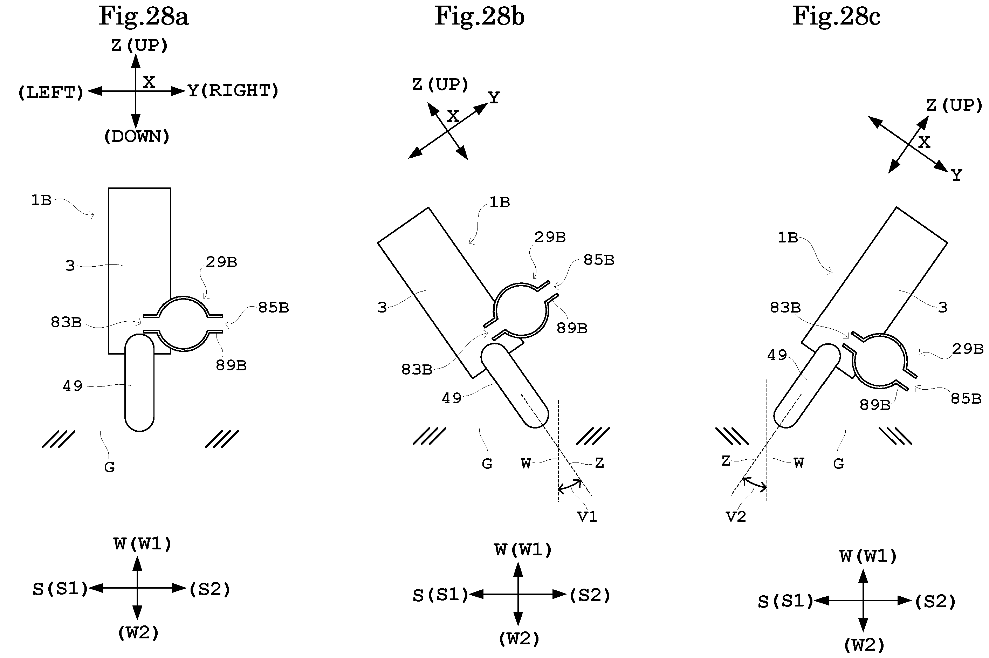

FIG. 28A is a rear view of the straddled vehicle 1B.
The straddled vehicle 1B takes an upright posture.
The ECU 75A causes the passage changing part 90 to switch the exhaust device 29B to the rearward injection state on the basis of the detection result of the IMU 81.
The exhaust device 29B enters the rearward injection state. The exhaust port 71 injects the exhaust gas backward.

<Operation Example of Straddled Vehicle 1B Turning Leftward>

The operation of the straddled vehicle 1B turning leftward will be described.

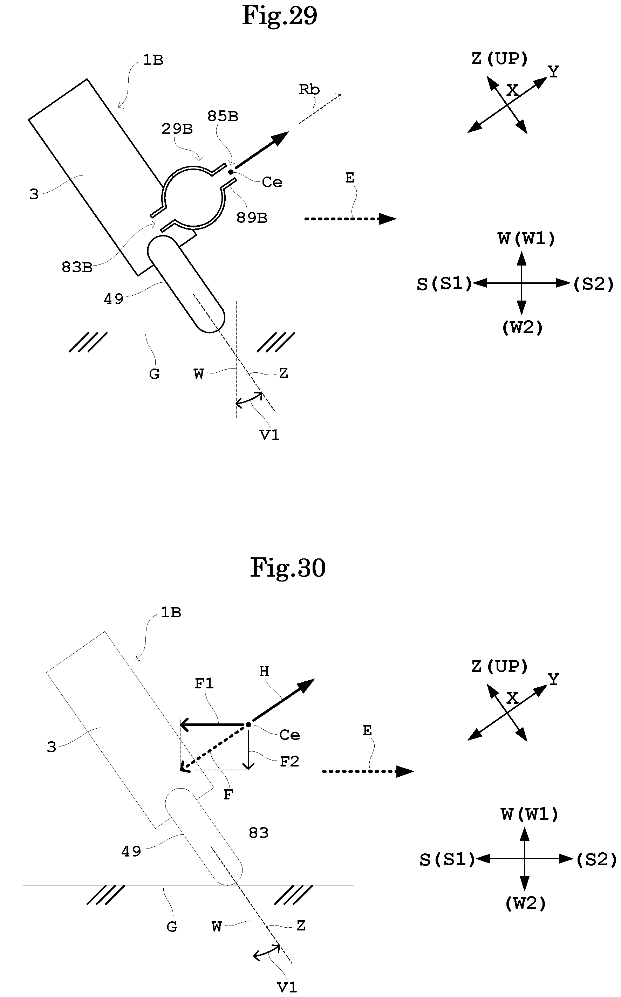

FIGS. 28B, 29, and 30 are rear views of the straddled vehicle 1B.
The centrifugal force E acts on the straddled vehicle 1B in the rightward direction.
The straddled vehicle 1B is inclined leftward.
The ECU 75A causes the passage changing part 90 to switch the exhaust device 29B to the right injection state on the basis of the detection result of the IMU 81.
The exhaust device 29B enters the rightward injection state. The right exhaust port 85B injects the exhaust gas to apply the first force to the straddled vehicle 1B. The first force offsets at least a part of the centrifugal force E.
Specifically, the right exhaust port 85B injects the exhaust gas in the same direction as the direction of the centrifugal force E. That is, the right exhaust port 85B injects the exhaust gas rightward.
For example, the right exhaust port 85B injects the exhaust gas rightward and upward.
The right exhaust port 85B injects the exhaust gas in a direction in which the second horizontal direction S2 and the first vertical direction W1 are combined.
The jet H is directed rightward from the start point Ce. For example, the jet H is directed rightward and upward. The jet H has a direction obtained by combining the second horizontal direction S2 and the first vertical direction W1.
The first force is, for example, the reaction force F of the jet H. The reaction force F acts on the straddled vehicle 1B in the leftward direction. For example, the reaction force F acts on the straddled vehicle 1B in the leftward and downward directions. The reaction force F acts on the straddled vehicle 1B in a direction in which the first horizontal direction S1 and the second vertical direction W2 are combined.
The reaction force F acts on the straddled vehicle 1B in a direction opposite to the centrifugal force E. The reaction force F offsets at least a part of the centrifugal force E.
The first component force F1 has a first horizontal direction S1. The first component force F1 has a direction opposite to the direction of the centrifugal force E. Therefore, the first component force F1 offsets at least a part of the centrifugal force E.
The reaction force F includes a second component force F2. The second component force F2 is a component of the reaction force F in the vertical direction W. The second component force F2 acts on the straddled vehicle 1B.
In a case where the straddled vehicle 1B turns counterclockwise on the curved road Cr, the second component force F2 has the second vertical direction W2. The second component force F2 acts on the straddled vehicle 1B in the second vertical direction W2. The second component force F2 acts in a direction of pressing the front wheel 24 and the rear wheel 49 against the road surface G.
As a result, the grip between the rear wheel 49 and the road surface G is improved. The grip between the front wheel 24 and the road surface G is also improved. The traction performance of the straddled vehicle 1B is improved. Furthermore, the second component force F2 acts in a direction of suppressing the front wheel 24 from floating upward from the road surface G. That is, for example, in circuit traveling or the like, the straddled vehicle 1B is less likely to enter a wheelie state.

<Operation Example of Straddled Vehicle 1B Turning Rightward>

The operation of the straddled vehicle 1B turning rightward will be described.

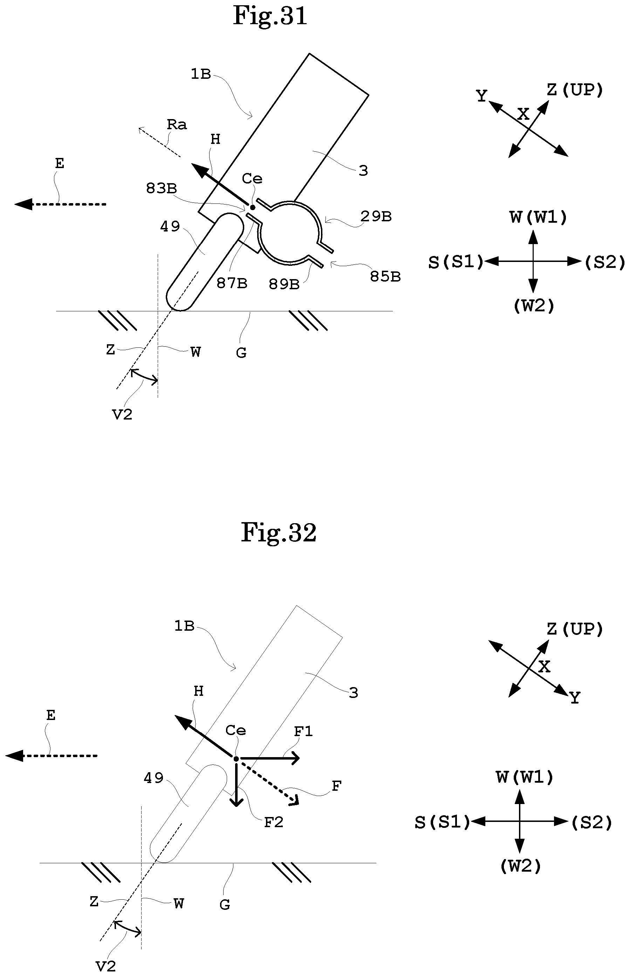

FIGS. 28C, 31, and 32 are rear views of the straddled vehicle 1B.
The straddled vehicle 1B is inclined rightward.
The ECU 75A causes the passage changing part 90 to switch the exhaust device 29B to the left injection state on the basis of the detection result of the IMU 81.
The exhaust device 29B enters the leftward injection state. The left exhaust port 83B injects the exhaust gas to apply the first force to the straddled vehicle 1B. The first force offsets at least a part of the centrifugal force E.
Specifically, the left exhaust port 83B injects the exhaust gas in the same direction as the direction of the centrifugal force E. That is, the left exhaust port 83B injects the exhaust gas leftward.

For example, the left exhaust port 83B injects the exhaust gas leftward and upward.

The left exhaust port 83B injects the exhaust gas in a direction in which the first horizontal direction S1 and the first vertical direction W1 are combined.

The jet H is directed leftward from the start point Ce. For example, the jet H is directed leftward and upward. The jet H has a direction in which the first horizontal direction S1 and the first vertical direction W1 are combined.

The first force is, for example, the reaction force F of the jet H. The reaction force F acts the straddled vehicle 1B in the rightward direction. For example, the reaction force F acts on the straddled vehicle 1B in the rightward and downward directions. The reaction force F acts on the straddled vehicle 1B in a direction in which the second horizontal direction S2 and the second vertical direction W2 are combined.

The reaction force F acts on the straddled vehicle 1B in a direction opposite to the centrifugal force E. The reaction force F offsets at least a part of the centrifugal force E.

The first component force F1 has a second horizontal direction S2. The first component force F1 has a direction opposite to the direction of the centrifugal force E. Therefore, the first component force F1 offsets at least a part of the centrifugal force E.

When the straddled vehicle 1B turns rightward on the curved road Cr, the second component force F2 has the second vertical direction W2. The second component force F2 acts on the straddled vehicle 1B in the second vertical direction W2. The second component force F2 acts in a direction of pressing the front wheel 24 and the rear wheel 49 against the road surface G.

<Effects of Third Embodiment>

The straddled vehicle 1B according to the third embodiment has the same effect as that of the straddled vehicle 1 according to the first embodiment. For example, the straddled vehicle 1B includes an exhaust device 29B. The exhaust device 29B includes an exhaust port 73B. The exhaust port 73B injects the exhaust gas to apply the first force to the straddled vehicle 1B. In a case where the straddled vehicle 1B turns on the curved road Cr, the first force offsets at least a part of the centrifugal force E acting on the straddled vehicle 1B. The first force is, for example, the reaction force F of the jet H. Therefore, it is possible to provide the straddled vehicle 1B having good turning performance.

Further, the straddled vehicle 1B according to the third embodiment has the following effects.

The exhaust device 29B includes a left exhaust port 83B and a right exhaust port 85B. In a case where the straddled vehicle 1B is in an upright posture, the right exhaust port 85B is installed such that the injection direction Rb of the exhaust gas from the right exhaust port 85B becomes rightward and horizontal. In a case where the straddled vehicle 1B is in an upright posture, the right exhaust port 85B is installed such that the injection direction Rb is in the second horizontal direction S2. In a case where the straddled vehicle 1B is in an upright posture, the left exhaust port 83B is installed such that the injection direction Rb of the exhaust gas from the left exhaust port 83B becomes leftward and horizontal. In a case where the straddled vehicle 1B is in an upright posture, the left exhaust port 83B is installed such that the injection direction Ra is in the first horizontal direction S1.

For example, in a case where the straddled vehicle 1B turns rightward, the straddled vehicle 1B is inclined rightward from an upright posture. In a case where the straddled vehicle 1B is inclined rightward from an upright posture, the injection direction Ra changes from leftward and horizontal to leftward and upward. In a case where the straddled vehicle 1B is inclined rightward from an upright posture, the injection direction Ra changes from the first horizontal direction S1 to a direction in which the first horizontal direction S1 and the first vertical direction W1 are combined. For example, in a case where the straddled vehicle 1B turns leftward, the straddled vehicle 1B is inclined leftward from an upright posture. In a case where the straddled vehicle 1B is inclined leftward from an upright posture, the injection direction Rb changes from rightward and horizontal to rightward and upward. In a case where the straddled vehicle 1B is inclined leftward from an upright posture, the injection direction Rb changes from the second horizontal direction S2 to a direction in which the second horizontal direction S2 and the first vertical direction W1 are combined. In summary, in a case where the straddled vehicle 1B turns on the curved road Cr, the exhaust port 73B injects the exhaust gas in the same direction as the direction of the centrifugal force E. Therefore, in a case where the straddled vehicle 1B turns on the curved road Cr, it is easy for the first force to offset at least a part of the centrifugal force E.

[Fourth Embodiment]

Next, a straddled vehicle 1C according to a fourth embodiment of the present invention will be described. The same components as those of the straddled vehicle 1 according to the first embodiment are denoted by the same reference numerals, and different components will be described in detail.

<Configuration of Exhaust Device>

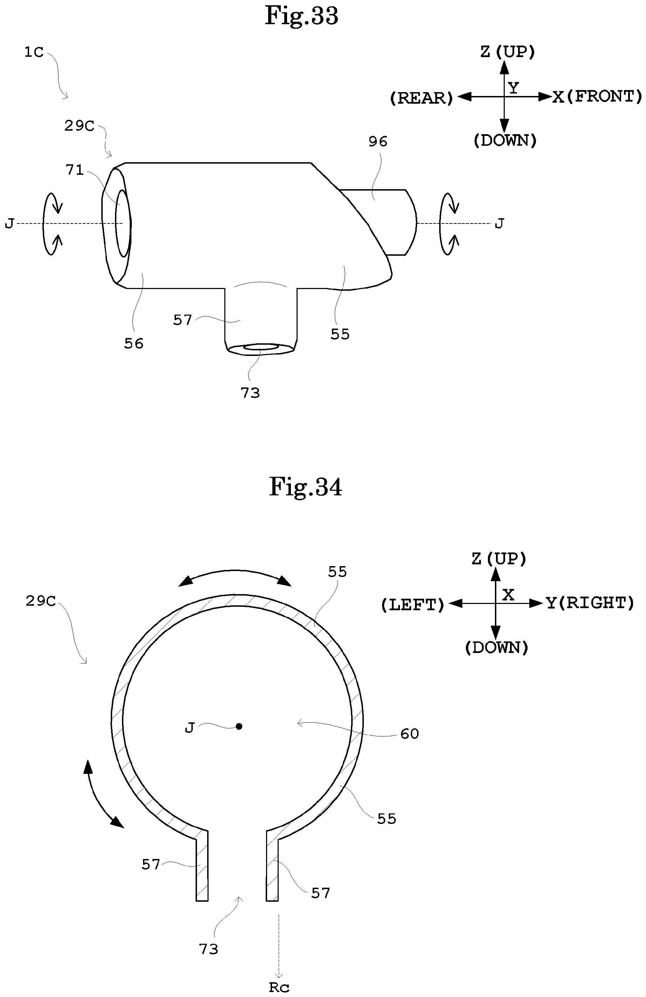

FIG. 33 is a perspective view of an exhaust device 29C according to the fourth embodiment. FIG. 34 is a longitudinal sectional view of the exhaust device 29C in a vehicle rear view.

The straddled vehicle 1C includes the exhaust device 29C. The exhaust device 29C is similar to the exhaust device 29 of the first embodiment. The exhaust device 29C has an exhaust port 71 and an exhaust port 73. The exhaust port 73 injects the exhaust gas in the injection direction Rc. Although not illustrated, the exhaust device 29C includes an on-off valve 58.

The exhaust device 29C is movable with respect to the vehicle body frame 3. For example, the exhaust device 29C is rotatable with respect to the vehicle body frame 3.

The straddled vehicle 1C includes a moving mechanism 96. The moving mechanism 96 changes the injection direction Rc. The moving mechanism 96 changes the injection direction Rc with respect to the vehicle body frame 3. For example, the moving mechanism 96 changes the angle between the injection direction Rc and the up-down direction Z.

For example, the moving mechanism 96 rotates the exhaust device 29C. The moving mechanism 96 rotates the exhaust device 29C about the axis J, for example. The axis J is parallel to the front-rear direction X. The axis J is disposed at a position eccentric from the exhaust port 73. The axis J passes through the center of the exhaust port 71, for example.

For example, the moving mechanism 96 is supported by the vehicle body frame 3. The moving mechanism 96 is connected to, for example, the exhaust device 29C.

For example, the moving mechanism 96 includes at least one of an actuator and a motor.

<Configuration of Control System>

A control system of the straddled vehicle 1C will be described.

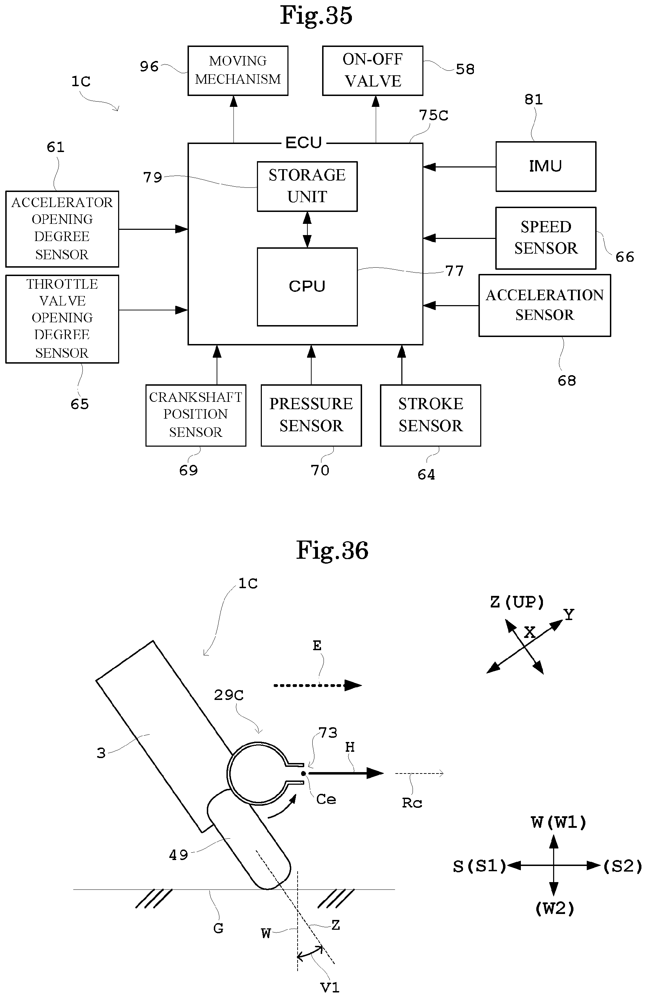

FIG. 35 is a functional block diagram illustrating a control system of a straddled vehicle 1C according to the fourth embodiment.

The straddled vehicle 1C includes an ECU 75C. The ECU 75C controls the on-off valve 58 on the basis of the detection result of the IMU 81. The ECU 75C controls the moving mechanism 96 on the basis of the detection result of the IMU 81.

Specifically, in a case where the lean angle V1 is greater than or equal to the predetermined value L1, the ECU 75C causes the on-off valve 58 to bring the exhaust device 29C into the side injection state. In a case where the lean angle V2 is greater than or equal to the predetermined value L2, the ECU 75C causes the on-off valve 58 to bring the exhaust device 29C into the side injection state.

In a case where the lean angle V1 is greater than or equal to the predetermined value L1, the ECU 75C causes the moving mechanism 96 to direct the injection direction Rc rightward.

In a case where the lean angle V2 is greater than or equal to the predetermined value L2, the ECU 75C causes the moving mechanism 96 to direct the injection direction Rc leftward.

In a case where the lean angle V1 is less than the predetermined value L1 and the lean angle V2 is less than the predetermined value L2, the ECU 75C causes the on-off valve 58 to bring the exhaust device 29C into the rearward injection state.

The ECU 75C is an example of a moving mechanism control unit in the present invention. The ECU 75C is also an example of a main valve control unit in the present invention. The ECU 75C is also an example of a first valve control unit in the present invention.

<Operation Example of Straddled Vehicle 1C Traveling Straight>

The straddled vehicle 1C takes an upright posture. The ECU 75C causes the on-off valve 58 to switch the exhaust device 29C to the rearward injection state on the basis of the detection result of the IMU 81. The exhaust device 29C enters the rearward injection state. The exhaust port 71 injects the exhaust gas backward.

<Operation Example of Straddled Vehicle 1C Turning Leftward>

The operation of the straddled vehicle 1C turning leftward will be described.

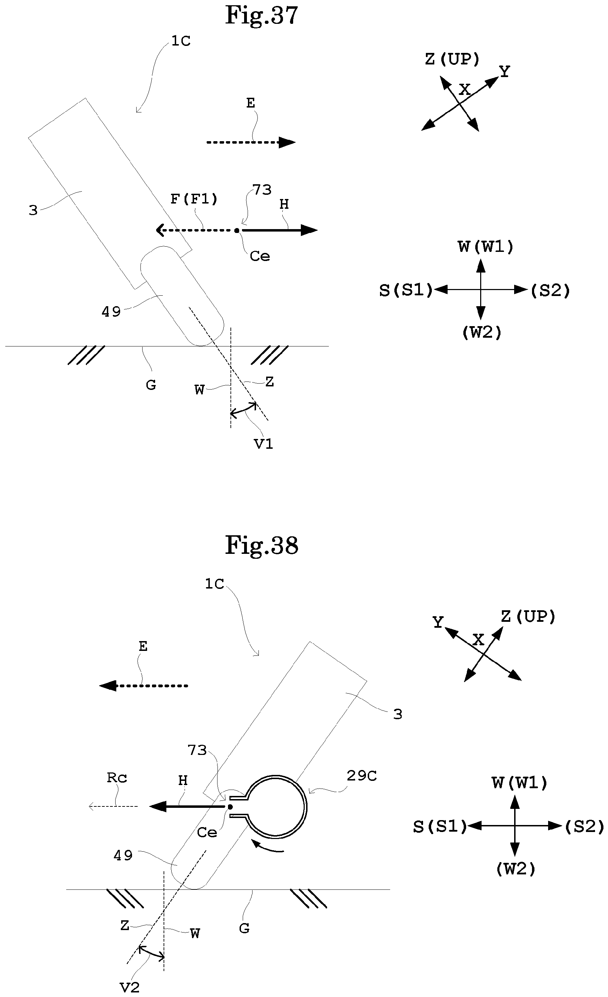

FIGS. 36 and 37 are rear views of the straddled vehicle 1C. In FIG. 37, the description of the exhaust device 29C is omitted for convenience of description.

The centrifugal force E acts on the straddled vehicle 1C in the rightward direction.

The straddled vehicle 1C is inclined leftward.

The ECU 75C causes the on-off valve 58 to switch the exhaust device 29C to the side injection state on the basis of the detection result of the IMU 81. The ECU 75C causes the moving mechanism 96 to change the injection direction Rc rightward on the basis of the detection result of the IMU 81.

The exhaust device 29C enters the side injection state. The exhaust port 73 injects the exhaust gas to apply the first force to the straddled vehicle 1C. The first force offsets at least a part of the centrifugal force E.

Specifically, the exhaust port 73 injects the exhaust gas in the same direction as the direction of the centrifugal force E. That is, the exhaust port 73 injects the exhaust gas rightward.

For example, the exhaust port 73 injects the exhaust gas rightward and horizontally. For example, the exhaust port 73 injects the exhaust gas in the second horizontal direction S2.

Alternatively, the exhaust port 73 may inject the exhaust gas rightward and downward. The exhaust port 73 may inject the exhaust gas rightward and upward.

The rotation amount of the exhaust device 29C by the moving mechanism 96 may change according to the lean angle V1. For example, regardless of the lean angle V1, the moving mechanism 96 keeps the angle between the horizontal direction S and the injection direction Rc constant.

For example, the moving mechanism 96 keeps the injection direction Rc in the second horizontal direction S2 over a period in which the straddled vehicle 1C turns leftward on the curved road Cr.

Alternatively, regardless of the lean angle V1, the rotation amount of the exhaust device 29C by the moving mechanism 96 may be constant.

The jet H is directed rightward from the start point Ce.

The first force is, for example, the reaction force F of the jet H. The reaction force F acts on the straddled vehicle 1C in the leftward direction. The reaction force F acts on the straddled vehicle 1C in a direction opposite to the centrifugal force E. The reaction force F offsets at least a part of the centrifugal force E.

The first component force F1 has a first horizontal direction S1. The first component force F1 has a direction opposite to the direction of the centrifugal force E. Therefore, the first component force F1 offsets at least a part of the centrifugal force E.

In a case where the injection direction Rc is the second horizontal direction S2, the reaction force F includes only the first component force F1 and does not include the second component force F2. Therefore, the first component force F1 has a magnitude equal to the reaction force F. That is, the first component force F1 is maximized.

In a case where the moving mechanism 96 keeps the injection direction Rc in the second horizontal direction S2, the first component force F1 is always maximum over a period in which the straddled vehicle 1C turns leftward. Therefore, the first component force F1 continues to offset a larger portion of the centrifugal force E over a period in which the straddled vehicle 1C turns leftward on the curved road Cr. The reaction force F continues to more effectively offset the centrifugal force E over a period in which the straddled vehicle 1C turns leftward on the curved road Cr.

<Operation Example of Straddled Vehicle 1C Turning Rightward>

Next, the operation of the straddled vehicle 1C turning rightward will be described.

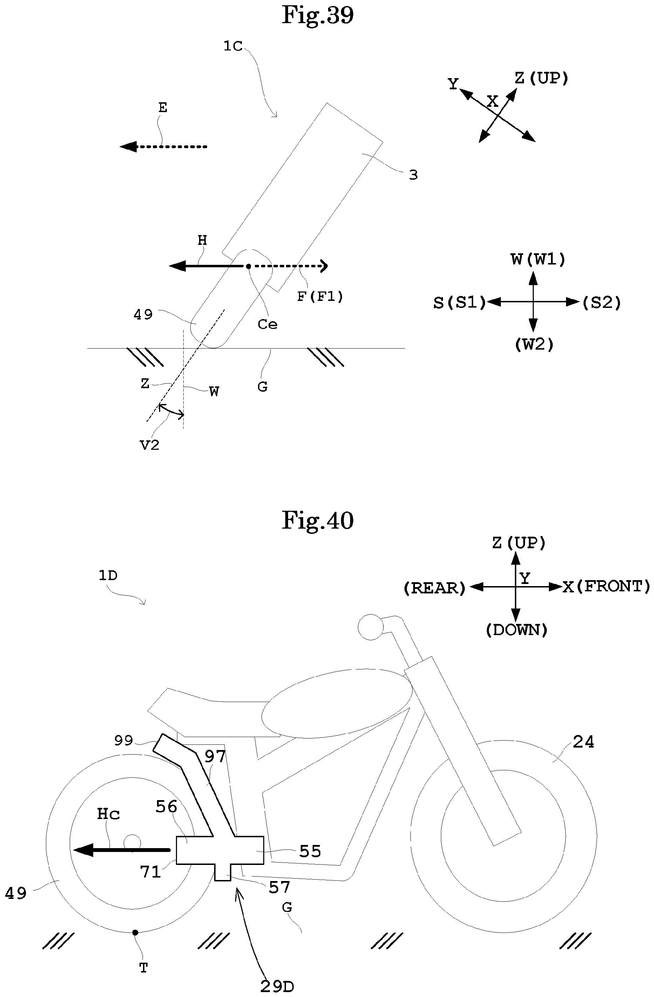

FIGS. 38 and 39 are rear views of the straddled vehicle 1C. In FIG. 39, the description of the exhaust device 29C is omitted for convenience of description.

The centrifugal force E acts on the straddled vehicle 1C in the leftward direction.

The straddled vehicle 1C is inclined rightward.

The ECU 75C causes the on-off valve 58 to switch the exhaust device 29C to the side injection state on the basis of the detection result of the IMU 81. The ECU 75C causes the moving mechanism 96 to change the injection direction Rc leftward on the basis of the detection result of the IMU 81.

The exhaust device 29C enters the side injection state. The exhaust port 73 injects the exhaust gas to apply the first force to the straddled vehicle 1C. The first force offsets at least a part of the centrifugal force E.

Specifically, the exhaust port 73 injects the exhaust gas in the same direction as the direction of the centrifugal force E. That is, the exhaust port 73 injects the exhaust gas leftward.

For example, the exhaust port 73 injects the exhaust gas leftward and horizontally. For example, the exhaust port 73 injects the exhaust gas in the first horizontal direction S1.

Alternatively, the exhaust port 73 may inject the exhaust gas leftward and downward. The exhaust port 73 may inject the exhaust gas leftward and upward.

The rotation amount of the exhaust device 29C by the moving mechanism 96 may change according to the lean angle V2. For example, regardless of the lean angle V2, the moving mechanism 96 keeps the angle between the horizontal direction S and the injection direction Rc constant. For example, the moving mechanism 96 keeps the injection direction Rc in the first horizontal direction S1 over a period in which the straddled vehicle 1C turns rightward on the curved road Cr.

Alternatively, regardless of the lean angle V2, the rotation amount of the exhaust device 29C by the moving mechanism 96 may be constant.

The jet H is directed leftward from the start point Ce.

The first force is, for example, the reaction force F of the jet H. The reaction force F acts on the straddled vehicle 1C in the rightward direction. The reaction force F acts on the straddled vehicle 1C in a direction opposite to the centrifugal force E. The reaction force F offsets at least a part of the centrifugal force E.

The first component force F1 has a second horizontal direction S2. The first component force F1 has a direction opposite to the direction of the centrifugal force E. Therefore, the first component force F1 offsets at least a part of the centrifugal force E.

In a case where the injection direction Rc is the first horizontal direction S1, the reaction force F includes only the first component force F1 and does not include the second component force F2. Therefore, the first component force F1 has a magnitude equal to the reaction force F. That is, the first component force F1 is maximized.

In a case where the moving mechanism 96 keeps the injection direction Rc in the first horizontal direction S1, the first component force F1 is always maximum over a period in which the straddled vehicle 1C turns rightward.

Therefore, the first component force F1 continues to offset a larger portion of the centrifugal force E over a period in which the straddled vehicle 1C turns rightward on the curved road Cr while injecting the exhaust gas in the first horizontal direction S1.

The reaction force F continues to more effectively offset the centrifugal force E over a period in which the straddled vehicle 1C turns rightward on the curved road Cr.

<Effects of Fourth Embodiment>

According to the straddled vehicle 1C of the fourth embodiment, the same effects as those of the straddled vehicle 1 of the first embodiment are obtained. For example, the straddled vehicle 1C includes an exhaust device 29C. The exhaust device 29C includes an exhaust port 73. The exhaust port 73 injects the exhaust gas to apply the first force to the straddled vehicle 1C. In a case where the straddled vehicle 1C turns on the curved road Cr, the first force offsets at least a part of the centrifugal force E acting on the straddled vehicle 1C. The first force is, for example, a reaction force F. Therefore, it is possible to provide the straddled vehicle 1C having good turning performance.

Further, the straddled vehicle 1C according to the fourth embodiment has the following effects.

The straddled vehicle 1C includes an IMU 81, a moving mechanism 96, and an ECU 75C. The IMU 81 detects a leftward lean angle V1 of the straddled vehicle 1C and a rightward lean angle V2 of the straddled vehicle 1C. The moving mechanism 96 changes the injection direction Rc of the exhaust gas from the exhaust port 73. The ECU 75C controls the moving mechanism 96 on the basis of the detection result of the IMU 81. Therefore, it is easy to change the injection direction Rc according to the lean angles V1 and V2. Therefore, in a case where the straddled vehicle 1C turns on the curved road Cr, it is easy for the first force to offset at least a part of the centrifugal force E.

The moving mechanism 96 rotates the exhaust device 29C. Therefore, it is easy to change the injection direction Rc.

As described above, the ECU 75C controls the moving mechanism 96 on the basis of the detection result of the IMU 81. Therefore, it is easy to adjust the injection direction Rc to the optimum direction. The optimum direction is, for example, the injection direction Rc for increasing the first component force F1. The optimum direction is, for example, the injection direction Rc for maximizing the first component force F1. Therefore, it is easy to increase the first component force F1 regardless of the lean angles V1 and V2. In addition, it is easy to maximize the first component force F1 regardless of the lean angles V1 and V2. Therefore, it is possible to provide the straddled vehicle 1C having good turning performance regardless of the lean angles V1 and V2.

[Fifth Embodiment]

Next, a straddled vehicle 1D according to a fifth embodiment of the present invention will be described. The same components as those of the straddled vehicle 1 according to the first embodiment are denoted by the same reference numerals, and different components will be described in detail.

<Configuration of Exhaust Device>

FIG. 40 is a right side view of the straddled vehicle 1D according to the fifth embodiment.

The straddled vehicle 1D includes an exhaust device 29D.

The exhaust device 29D is fixed to the vehicle body frame 3. The exhaust device 29D is immovable with respect to the vehicle body frame 3. The exhaust device 29D is not rotatable with respect to the vehicle body frame 3.

The exhaust device 29D includes an exhaust port 99. The exhaust port 99 injects the exhaust gas. The exhaust port 99 injects the exhaust gas from the inside of the exhaust device 29D to the outside of the exhaust device 29D.

The exhaust port 99 is configured to discharge the exhaust gas upward. For example, the exhaust port 99 is configured to discharge the exhaust gas rearward and upward in a vehicle side view.

For example, the exhaust port 99 injects the exhaust gas upward. The exhaust port 99 injects the exhaust gas upward and backward.

The exhaust port 99 is disposed above the exhaust port 71.

The exhaust port 99 is disposed above the rear axle 47. The exhaust port 99 is disposed above the rotation center of the rear wheel 49.

The exhaust port 99 is an example of a second exhaust port in the present invention.

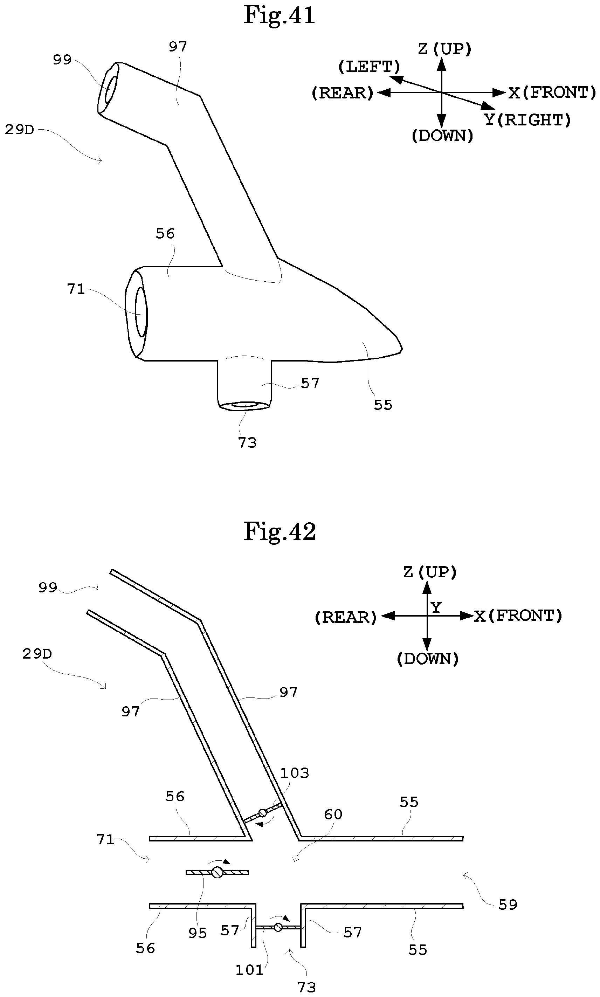

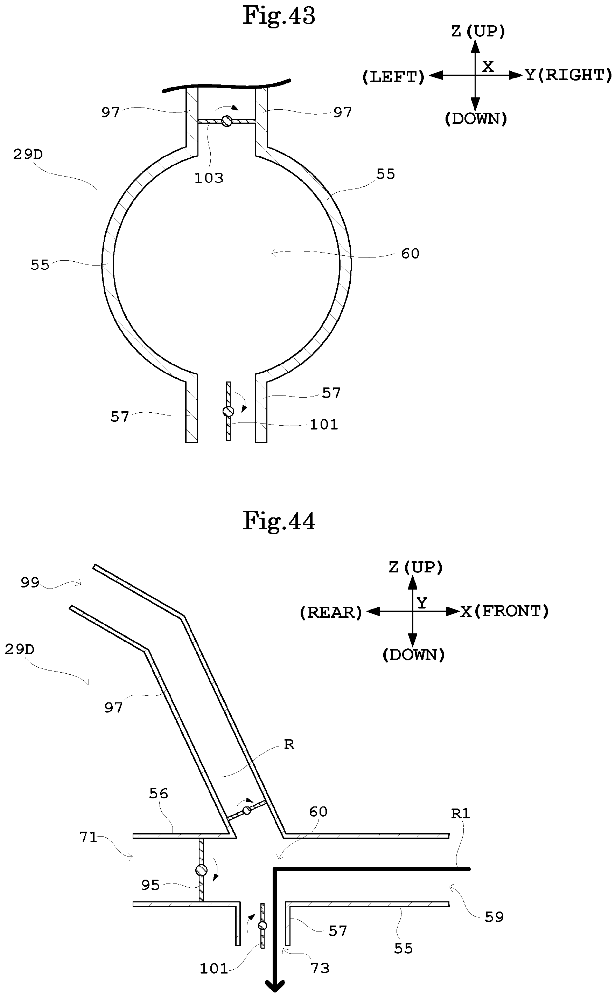

FIG. 41 is a perspective view of the exhaust device 29D according to the fifth embodiment. FIG. 42 is a longitudinal sectional view of the exhaust device 29D in a vehicle side view. FIG. 43 is a longitudinal sectional view of the exhaust device 29D in a vehicle rear view.

The exhaust device 29D includes a third branch pipe 97 in addition to the junction pipe 55, the first branch pipe 56, and the second branch pipe 57. The junction pipe 55 is connected to the first branch pipe 56, the second branch pipe 57, and the third branch pipe 97. The junction pipe 55 branches into the first branch pipe 56, the second branch pipe 57, and the third branch pipe 97.

Specifically, the branch portion 60 of the junction pipe 55 is connected to each of one end of the first branch pipe 56, one end of the second branch pipe 57, and one end of the third branch pipe 97. That is, the exhaust device 29D has a structure in which the junction pipe 55 branches into the first branch pipe 56, the second branch pipe 57, and the third branch pipe 97 at the branch portion 60.

The third branch pipe 97 extends rearward and upward from the branch portion 60 in a vehicle side view. That is, the third branch pipe 97 is disposed above the first branch pipe 56.

An exhaust port 99 is provided at the other end of the third branch pipe 97. The exhaust port 99 discharges the exhaust gas flowing from the junction pipe 55 to the third branch pipe 97 to the outside of the exhaust device 29D.

The diameter of the third branch pipe 97 is smaller than the diameter of the first branch pipe 56.

The exhaust port 99 is smaller than the exhaust port 71.

For example, the exhaust port 99 has a diameter smaller than the diameter of the exhaust port 71.

The exhaust device 29D includes an on-off valve 95, an on-off valve 101, and an on-off valve 103. The on-off valve 95 opens and closes the exhaust port 71. The on-off valve 101 opens and closes the exhaust port 73. The on-off valve 103 opens and closes the exhaust port 99.

The on-off valve 95 may be capable of adjusting the opening degree of the exhaust port 71. The on-off valve 101 may be capable of adjusting the opening degree of the exhaust port 73. The on-off valve 103 may be capable of adjusting the opening degree of the exhaust port 99.

The on-off valve 95 is disposed inside the first branch pipe 56. The on-off valve 101 is disposed inside the second branch pipe 57. The on-off valve 103 is disposed inside the third branch pipe 97.

The on-off valves 95, 101, and 103 switch the exhaust device 29D among the side injection state, the rearward injection state, and the upward injection state.

FIG. 44 illustrates the exhaust device 29D in the side injection state. When the exhaust device 29D is in the side injection state, the exhaust device 29D injects the exhaust gas from the exhaust port 73. The on-off valve 95 closes the exhaust port 71, the on-off valve 101 opens the exhaust port 73, and the on-off valve 103 closes the exhaust port 99. FIG. 44 schematically illustrates a flow R1 of the exhaust gas in the side injection state.

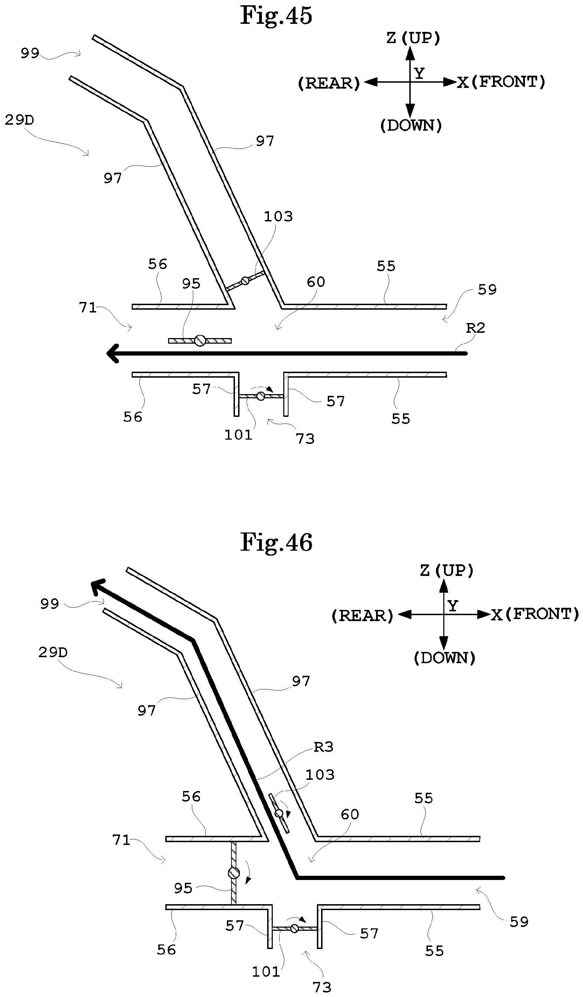

FIG. 45 illustrates the exhaust device 29D in the rearward injection state. When the exhaust device 29D is in the rearward injection state, the exhaust device 29D injects the exhaust gas from the exhaust port 71. The on-off valve 95 opens the exhaust port 71, the on-off valve 101 closes the exhaust port 73, and the on-off valve 103 closes the exhaust port 99. FIG. 45 schematically illustrates the flow R2 of the exhaust gas in the rearward injection state.

FIG. 46 illustrates the exhaust device 29D in the upward injection state. When the exhaust device 29D is in the upward injection state, the exhaust device 29D injects the exhaust gas from the exhaust port 99. The on-off valve 95 closes the exhaust port 71, the on-off valve 101 closes the exhaust port 73, and the on-off valve 103 opens the exhaust port 99. FIG. 46 schematically illustrates a flow R3 of the exhaust gas in the upward injection state.

The on-off valves 95, 101, and 103 are, for example, electric valves.

The on-off valve 95 is an example of a main valve in the present invention. The on-off valve 101 is an example of a first valve in the present invention.

<Configuration of Control System>

A control system of the straddled vehicle 1D will be described.

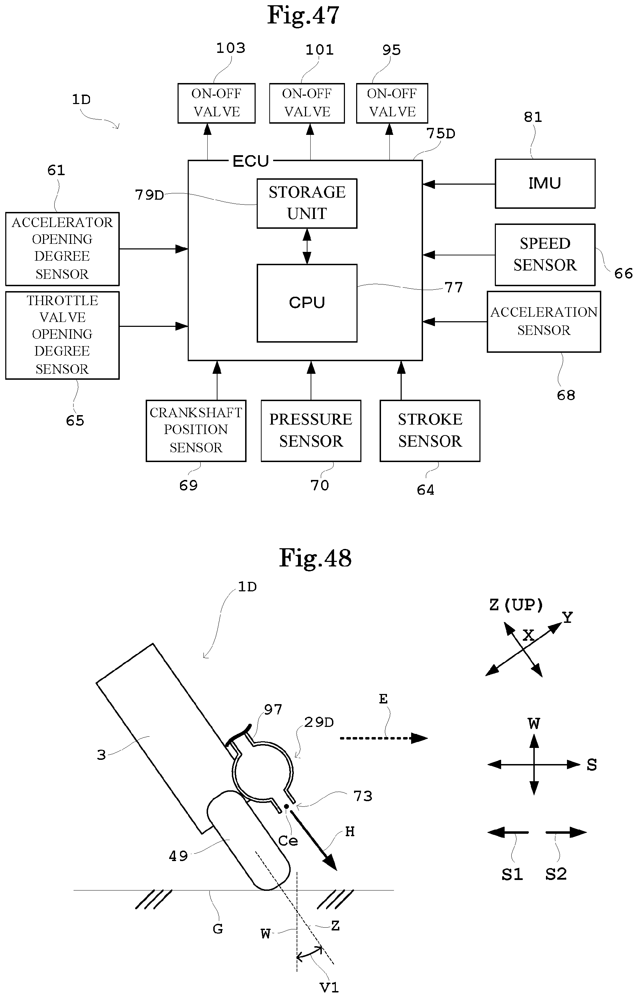

FIG. 47 is a functional block diagram illustrating a control system of the straddled vehicle 1D according to the fifth embodiment.

The straddled vehicle 1D includes an ECU 75D. The IMU 81 detects the lean angles V1 and V2 and the pitch angle. The pitch angle is an angle of the straddled vehicle 1D around the width direction Y. The ECU 75D controls the on-off valve 95, the on-off valve 101, and the on-off valve 103 on the basis of the detection result of the IMU 81. The ECU 75D switches the exhaust device 29D among the side injection state, the rearward injection state, and the upward injection state on the basis of the lean angles V1 and V2 and the pitch angle.

The straddled vehicle 1D includes a storage unit 79D. For example, the storage unit 79D stores the predetermined value L3 in addition to the predetermined value L1 and the predetermined value L2. The predetermined value L3 is a threshold of the pitch angle. For convenience, the pitch angle is referred to as a "pitch angle V3".

When the pitch angle V3 is less than the predetermined value L3, the front wheel 24 is considered to be in an appropriate position. When the front wheel 24 is in the appropriate position, the front wheel 24 is in appropriate contact with the road surface G.

When the pitch angle V3 is greater than or equal to the predetermined value L3, the front wheel 24 is considered to be at a position higher than the appropriate position. When the front wheel 24 is at a position higher than the appropriate position, the front wheel 24 may not be in appropriate contact with the road surface G. For example, the front wheel 24 is separated from the road surface G and floats upward the road surface G. Alternatively, in the near future, the front wheel 24 is likely to float upward the road surface G.

When the front wheel 24 floats upward the road surface G, the straddled vehicle 1D is in a wheelie state in circuit traveling or the like as an example. Therefore, when the pitch angle V3 is greater than or equal to the predetermined value L3, it is considered that the straddled vehicle 1D is in a wheelie state or the possibility that the straddled vehicle 1D will enter a wheelie state in the near future is high.

For example, the ECU 75D switches the exhaust device 29D among the rearward injection state, the side injection state, and the upward injection state on the basis of the lean angles V1 and V2, the pitch angle V3, and the predetermined value L1 to L3.

Specifically, when the lean angle V1 is greater than or equal to the predetermined value L1, the ECU 75D switches the exhaust device 29D to the side injection state.

When the lean angle V2 is greater than or equal to the predetermined value L2, the ECU 75D switches the exhaust device 29D to the side injection state.

When the lean angle V1 is less than the predetermined value L1, the lean angle V2 is less than the predetermined value L2, and the pitch angle V3 is less than the predetermined value L3, the ECU 75D switches the exhaust device 29D to the rearward injection state.

When the lean angle V1 is less than the predetermined value L1, the lean angle V2 is less than the predetermined value L2, and the pitch angle V3 is greater than or equal to the predetermined value L3, the ECU 75D switches the exhaust device 29D to the upward injection state.

Alternatively, the storage unit 79D may store the inclination condition, the upright condition, and the wheelie condition. The ECU 75D may control the on-off valve 58 on the basis of the lean angles V1 and V2, the inclination condition, the upright condition, and the wheelie condition. The inclination condition, the upright condition, and the wheelie condition are defined by predetermined values L1, L2, and L3.

The inclination conditions are as described in the first embodiment. In a case where the inclination condition is satisfied, the ECU 75D switches the exhaust device 29D to the side injection state.

The upright condition is that the first condition, the second condition, and the fifth condition are satisfied. The first condition is that the lean angle V1 is less than the predetermined value L1. The second condition is that the lean angle V2 is less than the predetermined value L2. The fifth condition is that the pitch angle V3 is less than the predetermined value L3. In a case where the upright condition is satisfied, the ECU 75D switches the exhaust device 29D to the rearward injection state.

The wheelie condition is that the first condition, the second condition, and the sixth condition are satisfied. The first condition is that the lean angle V1 is less than the predetermined value L1. The second condition is that the lean angle V2 is less than the predetermined value L2. The sixth condition is that the pitch angle V3 is greater than or equal to the predetermined value L3. In a case where the wheelie condition is satisfied, the ECU 75D switches the exhaust device 29D to the upward injection state.

<Operation Example of Straddled Vehicle 1D Turning>

The operation of the straddled vehicle 1D that turns will be described.

FIG. 48 is a rear view of the straddled vehicle 1D.

The centrifugal force E acts on the straddled vehicle 1D.

The straddled vehicle 1D is inclined.

The ECU 75D switches the exhaust device 29D to the side injection state on the basis of the detection result of the IMU 81.

The exhaust port 73 injects the exhaust gas to apply the first force to the straddled vehicle 1D. Specifically, the exhaust port 73 injects the exhaust gas in the same direction as the direction of the centrifugal force E. The first force is, for example, the reaction force F of the jet H. The first force offsets at least a part of the centrifugal force E.

<Operation Example of Straddled Vehicle 1D Traveling Straight>

Next, the operation of the straddled vehicle 1D traveling straight will be described.

The straddled vehicle 1D takes an upright posture.

The ECU 75C switches the exhaust device 29D between the rearward injection state and the upward injection state on the basis of the detection result of the IMU 81.

The lean angle V1 is less than the predetermined value L1, and the lean angle V2 is less than the predetermined value L2. Therefore, when the pitch angle V3 is less than the predetermined value L3, the ECU 75D switches the exhaust device 29D to the rearward injection state. When the pitch angle V3 is greater than or equal to the predetermined value L3, the ECU 75D switches the exhaust device 29D to the upward injection state.

Alternatively, when the upright condition is satisfied, the ECU 75D may switch the exhaust device 29D to the rearward injection state. When the wheelie condition is satisfied, the ECU 75D may switch the exhaust device 29D to the upward injection state.

FIG. 40 will be referred.

When the exhaust device 29D is in the rearward injection state, the exhaust port 71 injects the exhaust gas.

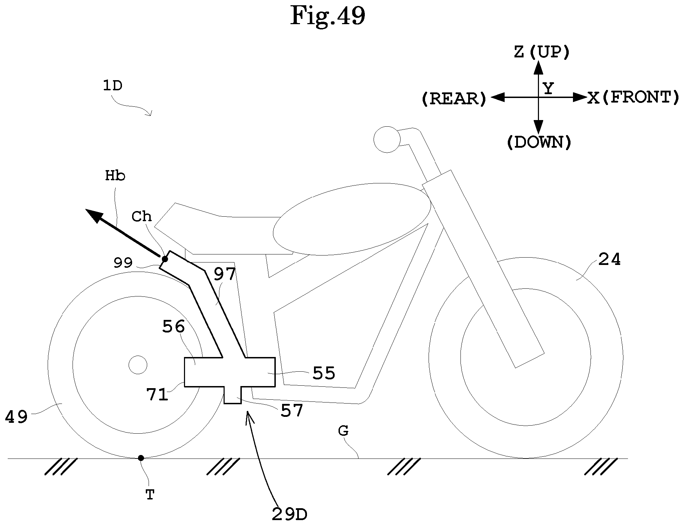

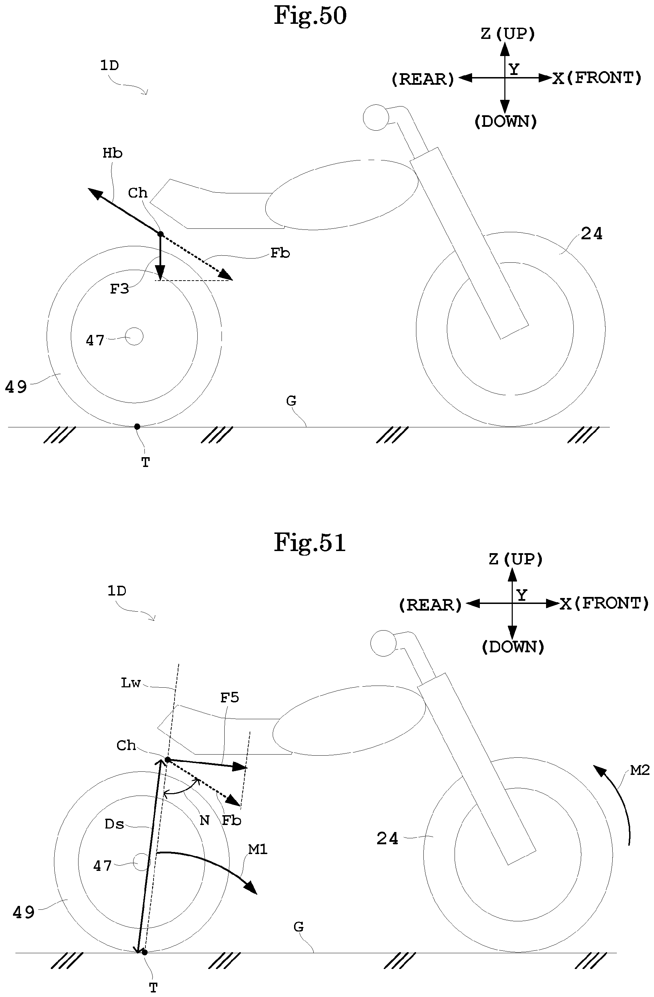

FIGS. 49, 50, and 51 are right side views of the straddled vehicle 1D. In FIGS. 50 and 51, the description of the exhaust device 29D is omitted for convenience of description.

When the exhaust device 29D is in the upward injection state, the exhaust port 99 injects the exhaust gas. Then, the exhaust port 99 causes a second force to act on the straddled vehicle 1D. The second force acts in a direction of suppressing the front wheel 24 from floating up from the road surface G.

Specifically, the exhaust port 99 injects the exhaust gas upward in the up-down direction Z. For example, the exhaust port 99 injects the exhaust gas upward and backward.

The straddled vehicle 1D is in an upright posture. Therefore, the injection direction of the exhaust gas from the exhaust port 99 includes the above-described component in the first vertical direction W1.

FIGS. 49 and 50 schematically illustrate a jet Hb. The jet Hb is formed by the exhaust gas injected from the exhaust port 99. The jet Hb is generated in the exhaust port 99. For example, the jet Hb is generated at a start point Ch corresponding to the center of the exhaust port 99. The jet Hb is generated outside the exhaust device 29D. The jet H is generated outside the straddled vehicle 1D.

Refer to FIG. 50. The second force is, for example, a reaction force Fb of the jet Hb. When the jet Hb is generated, the reaction force Fb is generated. The reaction force Fb has a direction opposite to the jet Hb. The reaction force Fb acts on the exhaust device 29D. The reaction force Fb acts on the straddled vehicle 1D. The exhaust port 99 causes the reaction force F to act on the straddled vehicle 1.

The jet Hb is directed upward from the start point Ch. For example, the jet Hb is directed upward and backward.

The reaction force Fb is directed downward from the start point Ch. For example, the reaction force is directed downward and forward.

The reaction force Fb acts on the straddled vehicle 1D in the downward direction. For example, the reaction force Fb acts on the straddled vehicle 1D in the downward and forward directions.

Therefore, the reaction force Fb acts in a direction of pressing the front wheel 24 against the road surface G. The reaction force Fb acts in a direction of suppressing the front wheel 24 from rising upward from an appropriate position. The reaction force Fb acts in a direction of suppressing the front wheel 24 from floating upward from the road surface G. The reaction force Fb acts in a direction of suppressing the straddled vehicle 1D from entering the wheelie state in circuit traveling or the like.

The relationship between the second force and the front wheel 24 will be described in more detail.

The second force includes a third component force F3. The third component force F3 is a component of the reaction force Fb in the up-down direction Z. The third component force F3 acts on the straddled vehicle 1.

The third component force F3 faces downward. The third component force F3 acts on the straddled vehicle 1D in the downward direction. Therefore, the third component force F3 presses the front wheel 24 against the road surface G. Therefore, the third component force F3 acts in a direction of suppressing the front wheel 24 from floating upward from the road surface G.

Refer to FIG. 51. The second force includes a first moment M1. The first moment M1 is generated by the reaction force Fb. The first moment M1 acts on the start point ch. The first moment M1 acts on the exhaust device 29D. The first moment M1 acts on the straddled vehicle 1D. Specifically, the first moment M1 is a force for rotating the start point ch around the rear contact point T. The rear contact point T is a contact point between the rear wheel 49 and the road surface G.

The first moment M1 acts in the clockwise direction around the rear contact point T as a fulcrum in the right side view of the straddled vehicle 1D. Therefore, the first moment M1 acts in a direction of pressing the front wheel 24 against the road surface G. In other words, the first moment M1 moves the front wheel 24 downward with the rear contact point T as a fulcrum. Therefore, the first moment M1 acts in a direction of suppressing the front wheel 24 from floating up from the road surface G.

For example, in a case where the front wheel 24 floats up from the road surface G, the second moment M2 may act on the straddled vehicle 1. The second moment M2 acts on the front wheel 24 counterclockwise about the rear contact point T as a fulcrum in the right side view of the straddled vehicle 1. The first moment M1 is opposite to the second moment M2. Therefore, the first moment M1 offsets the second moment M2. Therefore, the first moment M1 acts in a direction of suppressing the front wheel 24 from floating up from the road surface G.

FIG. 51 illustrates a distance Ds, a straight line Lw, an angle N, and a fifth component force F5. The distance Ds is a distance from the rear contact point T to the start point Ce. The straight line Lw is a virtual straight line connecting the rear contact point T and the start point Ce. The angle N is an angle formed by the direction of the reaction force Fb and the straight line Lw. The fifth component force F5 is a component of the reaction force Fb in a direction orthogonal to the straight line Lw in a vehicle side view. The magnitude L5 of the fifth component force F5 is calculated by the following Expression (A) using the reaction force Fb and the angle N.

$$L5 = Fb \cdot (\sin N) \ldots (A)$$

As shown in the above Expression (A), the closer the angle N is to 90 degrees, the larger the fifth component force F5 becomes.

The magnitude of the first moment M1 corresponds to a product of the magnitude L5 of the fifth component force F5 and the distance Ds. Therefore, the closer the angle N is to 90 degrees, the stronger the first moment M1 becomes. Furthermore, as the distance Ds increases, the first moment M1 becomes a stronger force.

For example, the distance Ds becomes larger as the position of the exhaust port 99 becomes higher. Therefore, the first moment M1 can be increased by disposing the exhaust port 99 at a position far from the road surface G. By disposing the exhaust port 99 at a position far from the road surface G, the first moment M1 can be increased. In order to increase the first moment M1, the exhaust port 99 is preferably disposed above the rear axle 47, and the exhaust port 99 is more preferably disposed above the upper end of the rear wheel 49. By increasing the first moment M1, it is possible to further suppress the straddled vehicle 1 from entering a wheelie state in circuit traveling or the like as an example.

<Effects of Fifth Embodiment>

The straddled vehicle 1D according to the fifth embodiment has the same effect as that of the straddled vehicle 1 of the first embodiment. For example, the straddled vehicle 1D includes an exhaust device 29D. The exhaust device 29D includes an exhaust port 73. The exhaust port 73 injects the exhaust gas to apply the first force to the straddled vehicle 1D. In a case where the straddled vehicle 1D turns on the curved road Cr, the first force offsets at least a part of the centrifugal force E acting on the straddled vehicle 1D. The first force is, for example, the reaction force F of the jet H. Therefore, it is possible to provide the straddled vehicle 1D having good turning performance.

Further, the straddled vehicle 1D according to the fifth embodiment has the following effects.

The straddled vehicle 1D includes the front wheel 24 and the rear wheel 49. The exhaust device 29D includes the exhaust port 99. The exhaust port 99 injects the exhaust gas to apply the second force to the front wheel 24. The second force acts in a direction of suppressing the front wheel 24 from floating up from the road surface G. That is, the second force acts in a direction in which the front wheel 24 is pressed against the road surface G. Therefore, the exhaust device 29D can suppress the front wheel 24 from floating up from the road surface G. Therefore, as an example, in circuit traveling or the like, the second force acts in a direction in which it is difficult for the straddled vehicle 1D to enter a wheelie state. As an example, even in a case where the straddled vehicle 1D rapidly accelerates in circuit traveling or the like, the second force acts in a direction in which it is difficult for the straddled vehicle 1D to enter a wheelie state. As a result, the acceleration performance of the straddled vehicle 1D can be easily improved.

In general, as an example, in a case where a driver of a straddled vehicle rapidly opens an accelerator in circuit traveling or the like, or rapidly connects a clutch in circuit traveling or the like, the straddled vehicle rapidly accelerates. Conventionally, the exhaust device does not apply the second force to the straddled vehicle. Therefore, conventionally, as an example, when the straddled vehicle rapidly accelerates in circuit traveling or the like, the front wheel is likely to float up from the road surface, and the straddled vehicle is likely to enter a wheelie state. Therefore, in the conventional straddled vehicle, the driver is required to carefully operate the accelerator and the clutch.

In the straddled vehicle 1D of the fifth embodiment, the exhaust port 99 injects the exhaust gas to apply the second force to the straddled vehicle 1D. The second force acts in a direction of suppressing the front wheel 24 from floating up from the road surface G. Therefore, as an example, even in a case where the straddled vehicle 1D rapidly accelerates in circuit traveling or the like, the second force acts in a direction in which the front wheel 24 is less likely to float up from the road surface G. Even in a case where the straddled vehicle 1D rapidly accelerates in circuit traveling or the like, the second force acts in a direction in which the straddled vehicle 1D is less likely to enter a wheelie state. Therefore, in the straddled vehicle 1D, the operation of the accelerator and the clutch is supported. Therefore, in the straddled vehicle 1D, it is easier for the driver to operate the accelerator and the clutch.

In the straddled vehicle 1D according to the fifth embodiment, the exhaust gas is injected from the exhaust port 99 of the exhaust device 29D to generate a force acting in a direction of pressing the front wheel 24 downward. That is, by injecting the exhaust gas from the exhaust port 99, the straddled vehicle 1D is suppressed from entering a wheelie state. The device for discharging the exhaust gas is generally provided in the straddled vehicle 1D. Therefore, it is not necessary to mount a new device for generating a force acting in a direction of pressing the front wheel 24 downward on the straddled vehicle 1D in addition to the exhaust device 29D. Therefore, it is possible to prevent the straddled vehicle 1D from entering a wheelie state in circuit traveling or the like while avoiding complication of the straddled vehicle 1D. That is, it is possible to realize the straddled vehicle 1D capable of suppressing the wheelie state in circuit traveling or the like at a lower cost. By effectively using the exhaust gas inevitably generated in a case where the straddled vehicle 1D is driven, it is possible to suppress the straddled vehicle 1D from entering a wheelie state in circuit traveling or the like. That is, the exhaust device 29D can contribute to the posture control of the straddled vehicle 1D by effectively utilizing the exhaust gas. Therefore, it is possible to realize the straddled vehicle 1D capable of suppressing the wheelie state in circuit traveling or the like while considering the global environment.

The second force is the reaction force Fb of the jet Hb of the exhaust gas injected from the exhaust port 99. The second force has a direction opposite to the jet direction of the exhaust gas injected from the exhaust port 99. Therefore, it is easy for the exhaust port 99 to apply the second force to the straddled vehicle 1D by injecting the exhaust gas from the exhaust port 99.

The exhaust port 99 injects the exhaust gas upward. Therefore, the second force acts downward on the straddled vehicle 1D. Therefore, the second force acts in a direction of suppressing the front wheel 24 from floating up from the road surface G.

The second force includes a third component force F3. The third component force F3 faces downward. Therefore, the second force acts in a direction of suppressing the front wheel 24 from floating up from the road surface G.

The second force includes a first moment M1. The first moment M1 acts on the straddled vehicle 1D in the clockwise direction around the rear contact point T in the right side view of the straddled vehicle 1D. Therefore, the second force acts in a direction of suppressing the front wheel 24 from floating up from the road surface G.

The exhaust port 99 is smaller than the exhaust port 71. Therefore, it is easy to increase the speed of the exhaust gas injected from the exhaust port 99. The second force increases as the speed of the exhaust gas injected from the exhaust port 99 increases. Therefore, it is easy to apply the second force in the direction of suppressing the front wheel 24 from floating up from the road surface G.

The exhaust port 99 is disposed above the exhaust port 71. Therefore, the distance Ds is relatively long. For example, the distance Ds is longer than the distance from the rear contact point T to the exhaust port 71. Therefore, the first moment M1 is relatively large. Therefore, it is easy to apply the first moment M1 in the direction of suppressing the front wheel 24 from floating up from the road surface G.

The present invention is not limited to the above embodiments, and can be modified as follows.

(1) In the first embodiment, the exhaust device 29 is disposed on the right side of the rear wheel 49. However, the present invention is not limited thereto. For example, the exhaust device 29 may be disposed on the left of the rear wheel 49. In addition, the exhaust device 29 may be disposed at a position overlapping the rear wheel 49 in vehicle front view. Similarly to the exhaust device 29 of the first embodiment, the positions of the exhaust devices 29A to 29D of the second to fifth embodiments may be changed.

(2) In the first to fifth embodiments, the exhaust port 71 is configured to discharge the exhaust gas backward in the front-rear direction X. That is, the exhaust port 71 is configured to exhaust the exhaust gas in a direction parallel to the front-rear direction X which is the horizontal direction. However, the present invention is not limited thereto. As an example, the exhaust port 71 may be configured to discharge the exhaust gas backward and upward in a vehicle side view. In addition, the exhaust port 71 may be configured to discharge the exhaust gas backward and downward in a vehicle side view. Further, the exhaust port 71 may discharge the exhaust gas downward in the up-down direction Z. The exhaust port 71 may discharge the exhaust gas leftward or rightward in the width direction Y.

(3) In the second embodiment, the number of left exhaust ports 83A included in the exhaust device 29A has been one. However, the present invention is not limited thereto. The number of left exhaust ports 83A may be plural. Similarly, the number of left exhaust ports 83B may be plural. The number of right exhaust ports 85A may be plural. The number of right exhaust ports 85B may be plural.

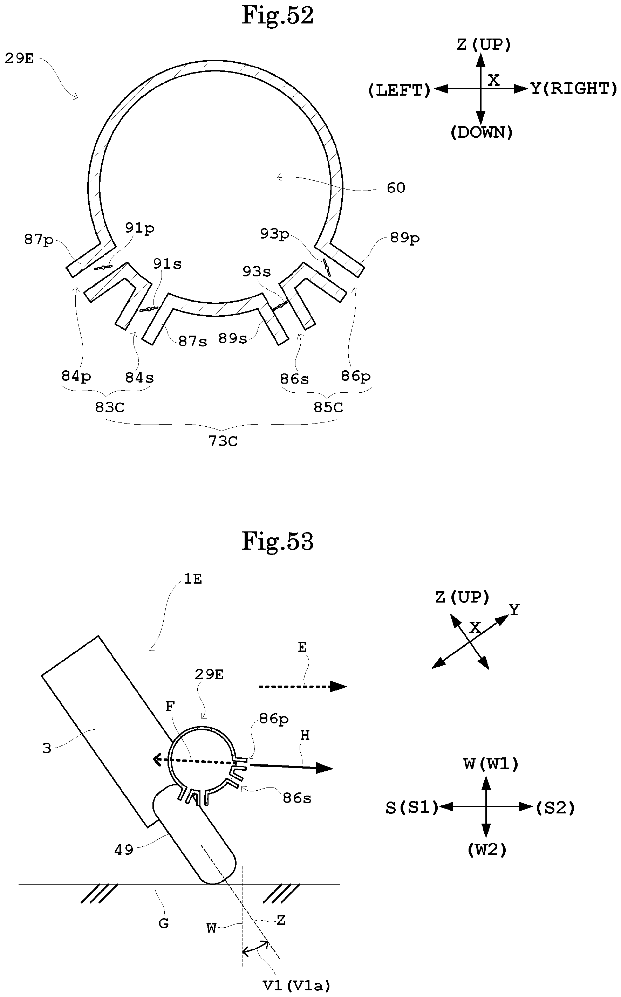

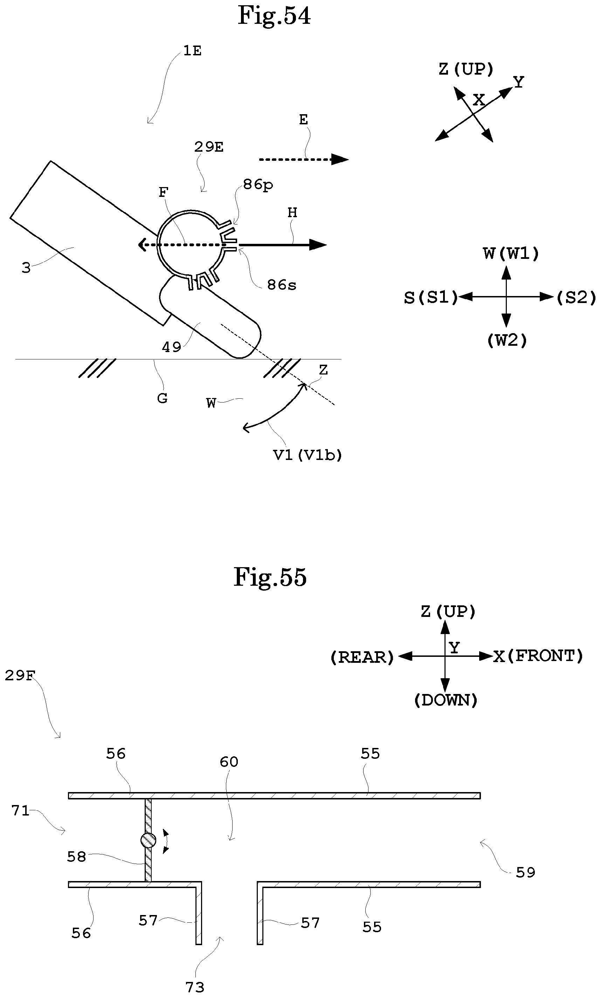

FIG. 52 is a longitudinal sectional view of an exhaust device 29E according to a modification in a vehicle rear view. FIGS. 53 and 54 are rear views of a straddled vehicle 1E according to the modification. The same components as those in the first to fifth embodiments will be denoted by the same reference numerals, and different components will be described in detail.

The straddled vehicle 1E includes the exhaust device 29E. The exhaust device 29E includes an exhaust port 73C. The exhaust port 73C includes a left exhaust port 83C and a right exhaust port 85C. The left exhaust port 83C includes a plurality of left small exhaust ports 84p and 84s. The right exhaust port 85C includes a plurality of right small exhaust ports 86p and 86s.

The exhaust port 73C is an example of a first exhaust port in the present invention.

The exhaust device 29E includes a left branch pipe 87p, a left branch pipe 87s, a right branch pipe 89p, and a right branch pipe 89s. One end of each of the left branch pipe 87p, the left branch pipe 87s, the right branch pipe 89p, and the right branch pipe 89s is connected to the branch portion 60.

The left small exhaust port 84p is provided at the other end of the left branch pipe 87p. The left small exhaust port 84s is provided at the other end of the left branch pipe 87s. The right small exhaust port 86p is provided at the other end of the right branch pipe 89p. The right small exhaust port 86s is provided at the other end of the right branch pipe 89s.

In a case where the straddled vehicle 1E is in an upright posture, the left small exhaust ports 84p and 84s each face leftward. More specifically, the injection direction of the left small exhaust port 84p is slightly different from the injection direction of the left small exhaust port 84s. For example, when the straddled vehicle 1E is in an upright posture, the injection direction of the left small exhaust port 84p is relatively close to horizontal. When the straddled vehicle 1E is in an upright posture, the injection direction of the left small exhaust port 84s is relatively close to the downward direction.

In a case where the straddled vehicle 1E is in an upright posture, the right small exhaust ports 86p and 86s each face rightward. More specifically, the injection direction of the right small exhaust port 86p is slightly different from the injection direction of the right small exhaust port 86s. For example, when the straddled vehicle 1E is in an upright posture, the injection direction of the right small exhaust port 86p is relatively close to horizontal. When the straddled vehicle 1E is in an upright posture, the injection direction of the right small exhaust port 86s is relatively close to the downward direction.

The exhaust device 29E includes left on-off valves 91p and 91s and right on-off valves 93p and 93s. The left on-off valve 91p is provided inside the left branch pipe 87p. The left on-off valve 91p opens and closes the left small exhaust port 84p. The left on-off valve 91s is provided inside the left branch pipe 87s. The left on-off valve 91s opens and closes the left small exhaust port 84s. The right on-off valve 93p is provided inside the right branch pipe 89p. The right on-off valve 93p opens and closes the right small exhaust port 86p. The right on-off valve 93s is provided inside the right branch pipe 89s. The right on-off valve 93s opens and closes the right small exhaust port 86s.

The straddled vehicle 1E includes an ECU 75E (not illustrated). The ECU 75E controls the left on-off valve 91p, the left on-off valve 91s, the right on-off valve 93p, the right on-off valve 93s, and the on-off valve 95p on the basis of the detection result of the IMU 81. For example, the left on-off valve 91p and the left on-off valve 91s are collectively controlled. Alternatively, the left on-off valve 91p and the left on-off valve 91s may be individually controlled. For example, the right on-off valve 93p and the right on-off valve 93s are collectively controlled. Alternatively, the right on-off valve 93p and the right on-off valve 93s may be individually controlled.

For example, in a case where the straddled vehicle 1E is inclined leftward, all of the right small exhaust ports 86p and 86s inject the exhaust gas. By injecting the exhaust gas from all of the right small exhaust ports 86p and 86s, the injection direction of the exhaust gas extends over a wider range.

Alternatively, in a case where the straddled vehicle 1E is inclined leftward, only a part of the plurality of right small exhaust ports 86p and 86s may inject the exhaust gas.

Next, FIGS. 53 and 54 will be referred to. When the lean angle V1 is a small lean angle V1a, the injection direction of the right small exhaust port 86p is closest to the horizontal direction S. When the lean angle V1 is a lean angle V1b larger than the small lean angle V1a, the injection direction of the right small exhaust port 86s is closest to the horizontal direction S2.

Therefore, the ECU 75E switches the exhaust port for injecting the exhaust gas between the right small exhaust port 86p and the right small exhaust port 86s according to the lean angle V1. For example, when the lean angle V1 is the small lean angle V1a, only the right small exhaust port 86p injects the exhaust gas. When the lean angle V1 is the large lean angle V1b, only the right small exhaust port 86s injects the exhaust gas. As a result, the injection direction of the exhaust gas is adjusted in the horizontal direction S2 regardless of the lean angle V1.

Effects of the present modification will be described. The right exhaust port 85C includes the plurality of right small exhaust ports 86p and 86s. Therefore, it is easy to expand the injection direction of the exhaust gas from the right exhaust port 85C.

The left exhaust port 83C includes a plurality of left small exhaust ports 84p and 84s. Therefore, it is easy to expand the injection direction of the exhaust gas from the left exhaust port 83C.

Furthermore, it is easy to change the exhaust port from which the exhaust gas is injected among the plurality of right small exhaust ports 86p and 86s. It is easy to change the exhaust port from which the exhaust gas is injected among the plurality of left small exhaust ports 84p and 84s.

For example, the ECU 75E switches the injection direction of the exhaust gas between the injection direction of the right small exhaust port 86p and the injection direction of the right small exhaust port 86s according to the lean angle V1. Therefore, the injection direction of the exhaust gas is appropriately adjusted. As a result, for example, the first component force F1 appropriately increases regardless of the lean angle V1.

(4) In the first embodiment and the like, an electric valve is exemplified as the on-off valve 58. However, the configuration of the on-off valve 58 is not limited thereto.

FIG. 55 is a longitudinal sectional view of an exhaust device 29F according to a modification in a vehicle side view. The same components as those of the first embodiment are denoted by the same reference numerals, and different components will be described in detail.

The exhaust device 29F includes an on-off valve 58a. The on-off valve 58a opens and closes the exhaust port 71. The on-off valve 58a is, for example, a spring-type valve that opens and closes according to the pressure of the exhaust gas. The on-off valve 58a is switched from the closed state to the opened state according to the magnitude of the pressure of the exhaust gas inside the exhaust device 29F. The pressure of the exhaust gas inside the exhaust device 29F is also referred to as "back pressure of the engine 31" or "back pressure of the exhaust gas".

In a case where the pressure of the exhaust gas in the exhaust device 29F is less than the predetermined value K1, the on-off valve 58a is configured to close the exhaust port 71. When the on-off valve 58 closes the exhaust port 71, the on-off valve 58 prohibits the exhaust port 71 from injecting the exhaust gas. Therefore, when the on-off valve 58 closes the exhaust port 71, the exhaust gas is injected from the exhaust port 73.

In a case where the pressure of the exhaust gas in the exhaust device 29F is greater than or equal to the predetermined value K1, the on-off valve 58 is configured to open the exhaust port 71. When the on-off valve 58 opens the exhaust port 71, the on-off valve 58 allows the exhaust port 71 to inject the exhaust gas.

The on-off valve 58a is provided, for example, in the first branch pipe 56.

The on-off valve 58a is an example of a main valve in the present invention.

Effects of the present modification will be described. In a case where the pressure of the exhaust gas in the exhaust device 29F is less than the predetermined value K1, the on-off valve 58a is configured to close the exhaust port 71. Therefore, in a case where the pressure of the exhaust gas in the exhaust device 29F is less than the predetermined value K1, the exhaust port 71 does not inject the exhaust gas. Therefore, in a case where the pressure of the exhaust gas in the exhaust device 29F is less than the predetermined value K1, it is easy to increase the injection amount of the exhaust gas from the exhaust port 73. Therefore, in a case where the pressure of the exhaust gas in the exhaust device 29F is less than the predetermined value K1, it is possible to provide the straddled vehicle 1 having good turning performance.

The on-off valve 58a opens and closes the exhaust port 71 according to the pressure of the exhaust gas in the exhaust device 29F. Therefore, the ECU 75 does not need to control the on-off valve 58a. Therefore, the configuration of the control system is simple.

(5) The moving mechanism 96 of the fourth embodiment changes the injection direction Rc of the exhaust port 73. However, the present invention is not limited thereto. For example, the moving mechanism 96 may change the injection direction Ra of the left exhaust ports 83A and 83B. The moving mechanism 96 may change the injection direction Rb of the right exhaust ports 85A and 85B.

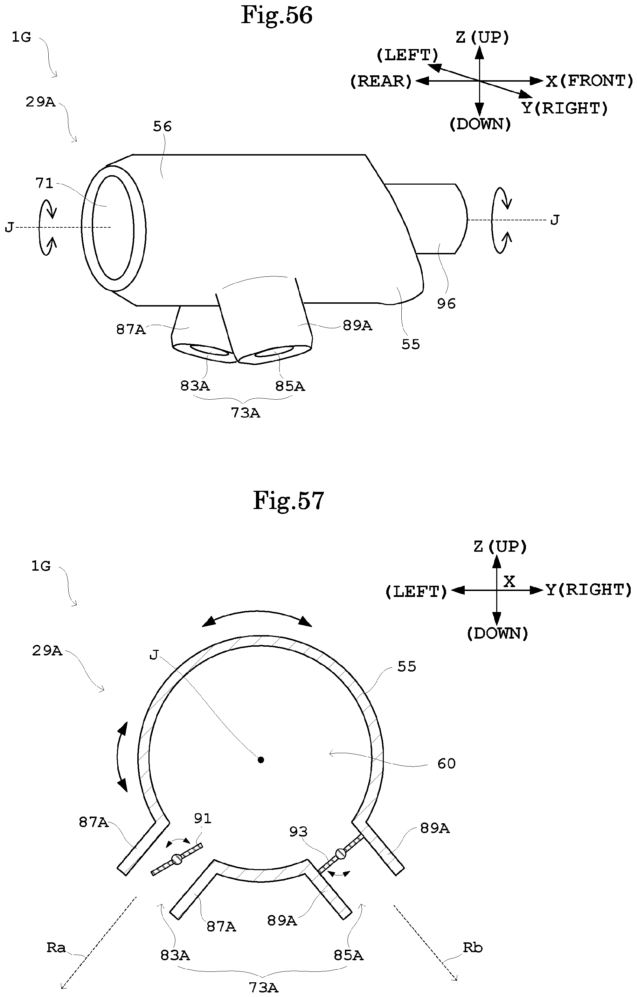

FIGS. 56 and 57 illustrate a straddled vehicle 1G according to a modification. The same components as those in the first to fourth embodiments will be denoted by the same reference numerals, and different components will be described in detail.

The straddled vehicle 1G includes an exhaust device 29A. The exhaust device 29A is as described in the second embodiment. For example, the exhaust device 29A includes an exhaust port 71 and an exhaust port 73A. The exhaust port 73A includes a left exhaust port 83A and a right exhaust port 85A. The left exhaust port 83A injects the exhaust gas in the injection direction Ra. The right exhaust port 85A injects the exhaust gas in the injection direction Rb.

The straddled vehicle 1G includes a moving mechanism 96. The moving mechanism 96 is as described in the fourth embodiment. For example, the moving mechanism 96 changes the injection direction Ra. The moving mechanism 96 changes the injection direction Rb.

For example, the moving mechanism 96 rotates the exhaust device 29A. The moving mechanism 96 rotates the exhaust device 29A about the axis J. The axis J is disposed at a position eccentric from the left exhaust port 83A. The axis J is disposed at a position eccentric from the right exhaust port 85A.

Although not illustrated, the straddled vehicle 1G includes an ECU 75C. The ECU 75C is as described in the fourth embodiment. For example, the ECU 75C controls the moving mechanism 96 on the basis of the detection result of the IMU 81.

Effects of the present modification will be described.

The straddled vehicle 1G includes the exhaust device 29A, the moving mechanism 96, the IMU 81, and the ECU 75C. The moving mechanism 96 changes the injection directions Ra and Rb. The ECU 75C controls the moving mechanism 96 on the basis of the detection result of the IMU 81. Therefore, it is easy to change the injection direction Rb according to the lean angle V1. It is easy to change the injection direction Ra according to the lean angle V2. Therefore, it is easy to adjust the injection directions Ra and Rb in appropriate directions. Therefore, in a case where the straddled vehicle 1G turns on the curved road Cr, it is easy for the first force to offset at least a part of the centrifugal force E.

The moving mechanism 96 rotates the exhaust device 29A. Therefore, it is easy to change the injection directions Ra and Rb. Therefore, in a case where the straddled vehicle 1G turns on the curved road Cr, it is easy for the first force to offset at least a part of the centrifugal force E.

(6) In the first to fifth embodiments, the IMU 81 has been exemplified as the lean angle detection unit. However, the lean angle detection unit is not limited to the IMU 81. For example, the lean angle detection unit may be a gyro sensor.

(7) In the first to fifth embodiments, the predetermined value L1 has been exemplified as the first threshold. However, the first threshold is not limited to the predetermined value L1. For example, the first threshold may be a variable. The first threshold may be a variable depending on the speed of the straddled vehicle 1.

Similarly, for example, the second threshold may be a variable. The second threshold may be a variable depending on the speed of the straddled vehicle 1.

(8) In the first to fifth embodiments, the vertical direction W has been defined by gravity. However, the definition of the vertical direction W is not limited thereto. For example, the vertical direction W may be defined by the road surface G. The vertical direction W may be a direction perpendicular to the road surface G.

(9) In the fifth embodiment, the ECU 75D has controlled the on-off valve 103 on the basis of the detection result of the IMU 81. The ECU 75D has switched the exhaust device 29D to the upward injection state on the basis of the detection result of the IMU 81. However, the reference of the control of the on-off valve 103 is not limited to the detection result of the IMU 81. The criterion for determining whether to switch the exhaust device 29D to the upward injection state is not limited to the pitch angle V3.

For example, the ECU 75D may control the on-off valve 103 on the basis of the detection result of at least one of the accelerator opening degree sensor 61, the stroke sensor 64, the throttle valve opening degree sensor 65, the speed sensor 66, the acceleration sensor 68, the crankshaft position sensor 69, the pressure sensor 70, and the IMU 81.

For example, the ECU 75D may switch the exhaust device 29D to the upward injection state on the basis of the detection result of at least one of the accelerator opening degree sensor 61, the stroke sensor 64, the throttle valve opening degree sensor 65, the speed sensor 66, the acceleration sensor 68, the crankshaft position sensor 69, the pressure sensor 70, and the IMU 81.

(10) In the fifth embodiment, the third branch pipe 97 is disposed so as to extend rearward and upward in a vehicle side view. However, the present invention is not limited thereto. The direction in which the third branch pipe 97 extends may be appropriately changed according to the position and direction of the exhaust port 99. As an example, the third branch pipe 97 may be disposed so as to extend in the horizontal direction. Alternatively, the third branch pipe 97 may be disposed so as to extend in the vertical direction.

(11) In each embodiment, the number of front wheels 24 is one. However, the present invention is not limited thereto. The number of front wheels 24 may be 2 or more. In each embodiment, the number of rear wheels 49 is one. However, the present invention is not limited thereto. The number of rear wheels 49 may be 2 or more.

(12) In each of the first to fifth embodiments and the modifications described in the above (1) to (11), each configuration may be appropriately changed by further replacing or combining each configuration with a configuration of another modification.

Reference Signs List

    1, 1A, 1B, 1C, 1D, 1E, 1G: Straddled vehicle
    3: Vehicle body frame
    24: Front wheel
    29, 29A, 29B, 29C, 29D, 29E, 29F, 29G: Exhaust device
    31: Engine
    39: Fuel tank
    41: Sheet
    47: Rear axle
    49: Rear wheel
    51: Rear wheel brake device
    53: Brake pedal
    55: Junction pipe
    56: First branch pipe
    57: Second branch pipe
    58: On-off valve (main valve, first valve)
    58a: On-off valve (main valve)
    59: Guide port
    60: Branch portion
    61: Accelerator opening degree sensor
    63: Fuel supply device
    64: Stroke sensor
    65: Throttle valve opening degree sensor
    66: Speed sensor
    67: Gear position sensor
    68: Acceleration sensor
    69: Crankshaft position sensor
    70: Pressure sensor
    71: Exhaust port (main exhaust port)
    73, 73A, 73B, 73C: Exhaust port (first exhaust port)
    75, 75A, 75C, 75D, 75E: ECU (control unit, first valve control unit, main valve control unit, and moving mechanism control unit)
    77: CPU
    79: Storage unit
    81: IMU (lean angle sensor)

    83A, 83B, 83C: Left exhaust port
    85A, 85B, 85C: Right exhaust port
    84p, 84s: Left small exhaust port
    86p, 86s: Right small exhaust port
    87A, 87B: Left branch pipe
    89A, 89B: Right branch pipe
    90: Passage changing part
    91, 91p, 91s: Left on-off valve (first valve)
    93, 93p, 93s: Right on-off valve (first valve)
    95: On-off valve (main valve)
    96: Moving mechanism
    97: Third branch pipe
    99: Exhaust port (second exhaust port)
    101: On-off valve (first valve)
    103: On-off valve
    E: Centrifugal force
    H: Jet of first exhaust port
    Hb: Jet of second exhaust port
    Hc: Jet flow of main exhaust port
    F: Reaction force of jet flow at first exhaust port (first force)
    Fb: Reaction force of jet flow at second exhaust port (second force)
    Fc: Reaction force of jet flow at main exhaust port
    F1: First component force
    F2: Second component force
    F3: Third component force
    L1: Predetermined value (first threshold)
    L2: Predetermined value (second threshold)
    M1: First moment
    Rc: Injection direction of first exhaust port
    Ra: Injection direction of right exhaust port
    Rb: Injection direction of left exhaust port
    V1: Leftward lean angle of straddled vehicle
    V2: Rightward lean angle of straddled vehicle
    X: Front-rear direction of straddled vehicle
    Y: Width direction of straddled vehicle
    Z: Up-down direction of straddled vehicle

**Claims**

1. A straddled vehicle (1) comprising

    an exhaust device (29) that discharges exhaust gas,
    wherein the exhaust device (29) includes a first exhaust port (73) that injects the exhaust gas to apply a first force to the straddled vehicle (1), and
    in a case where the straddled vehicle (1) turns on a curved road, the first force (F) offsets at least a part of a centrifugal force (E) acting on the straddled vehicle (1).

2. The straddled vehicle (1) according to claim 1, wherein
the first force (F) is a reaction force of a jet of the exhaust gas injected from the first exhaust port (73).

3. The straddled vehicle (1) according to claim 1, wherein

in a case where the straddled vehicle (1) turns on a curved road, the first exhaust port (73) injects the exhaust gas in a same direction as a direction of the centrifugal force (E) acting on the straddled vehicle (1).

4. The straddled vehicle (1) according to claim 1, wherein

in a case where the straddled vehicle (1) turns on a curved road, the first force (F) includes a first component (F1) having a direction opposite to a direction of the centrifugal force (E) acting on the straddled vehicle (1).

5. The straddled vehicle (1) according to claim 1, wherein

an injection direction of exhaust gas from the first exhaust port (73) changes according to rightward and leftward lean angles of the straddled vehicle (1).

6. The straddled vehicle (1) according to claim 1, wherein

the first exhaust port (73) is installed such that an injection direction of the exhaust gas from the first exhaust port (73) becomes downward when the straddled vehicle (1) is in an upright posture, in a case where the straddled vehicle (1) is inclined rightward, the first exhaust port (73) ejects exhaust gas, and in a case where the straddled vehicle (1) is inclined leftward, the first exhaust port (73) ejects exhaust gas.

7. The straddled vehicle (1) according to claim 1, wherein

the first exhaust port (73) includes:

a right exhaust port (85A) configured to inject exhaust gas rightward; and a left exhaust port (83A) configured to inject exhaust gas leftward,

the exhaust device (29) includes a passage changing part (90) that changes a passage of exhaust gas in the exhaust device and switches between a right injection state in which the exhaust gas is injected from the right exhaust port (85A) and a left injection state in which the exhaust gas is injected from the left exhaust port (83A), and the straddled vehicle (1) includes:

a lean angle detection unit (81) that detects rightward and leftward lean angles of the straddled vehicle (1); and a control unit (75) that controls the passage changing part (90) on a basis of a detection result of the lean angle detection unit (81).

8. The straddled vehicle (1) according to claim 7, wherein

in a case where the straddled vehicle (1) is in an upright posture, the right exhaust port (85A) is installed such that an injection direction of the exhaust gas from the right exhaust port (85A) becomes rightward and downward, and in a case where the straddled vehicle (1) is in an upright posture, the left exhaust port (83A) is installed such that an injection direction of the exhaust gas from the left exhaust port (83A) becomes leftward and downward.

9. The straddled vehicle (1) according to claim 7, wherein

in a case where the straddled vehicle (1) is in an upright posture, the right exhaust port (85A) is installed such that an injection direction of the exhaust gas from the right exhaust port (85A) becomes rightward and horizontal, and in a case where the straddled vehicle (1) is in an upright posture, the left exhaust port (83A) is installed such that an injection direction of the exhaust gas from the left exhaust port (83A) becomes leftward and horizontal.

10. The straddled vehicle (1) according to claim 1, wherein

the exhaust device (29) includes a main exhaust port (71) through which the exhaust gas is discharged, and the first exhaust port (73) is smaller than the main exhaust port (71).

11. The straddled vehicle (1) according to claim 1, wherein
the first exhaust port (73) has a diameter smaller than a diameter of the main exhaust port (71).

12. The straddled vehicle (1) according to claim 10, wherein
the exhaust device (29) includes a main valve (58) that opens and closes the main exhaust port (71).

13. The straddled vehicle (1) according to claim 12, wherein
in a case where a pressure of the exhaust gas in the exhaust device is less than a predetermined value, the main valve (58) is configured to close the main exhaust port (71).

14. The straddled vehicle (1) according to claim 12, comprising:

a lean angle detection unit (81) that detects rightward and leftward lean angles of the straddled vehicle (1); and
a main valve control unit (75) that controls the main valve (58) on a basis of a detection result of the lean angle detection unit (81).

15. The straddled vehicle (1) according to claim 1, comprising:

a front wheel (24); and
a rear wheel (49),
wherein the exhaust device (29) includes a second exhaust port (99) that injects the exhaust gas to apply a second force (Fb) to the front wheel (24), and
the second force (Fb) acts in a direction of suppressing the front wheel (24) from floating up from the road surface (G).

Fig.1

Fig.2

## Fig.3

Z(UP)

(REAR) ◄──┼──► X(FRONT)
Y

(DOWN)

29

56    60    55

71

58

59

56    57    57    55

73    A

A

## Fig.4

Z(UP)

(LEFT) ◄──┼──► Y(RIGHT)
X

(DOWN)

29

55

60

57    57

73

Rc

## Fig.5

Z (UP)

(REAR) ←— Y —→ X (FRONT)

(DOWN)

29

56    60    55

71

58    59

56    57    55

57

R1

73

## Fig.6

Z (UP)

(REAR) ←— Y —→ X (FRONT)

(DOWN)

29

56    60    55

71

59

R2

56    57    58    57    55

73

# Fig.7

1

61

| ACCELERATOR OPENING DEGREE SENSOR | | ON-OFF VALVE | 58 |

ON-OFF
VALVE — 58

ECU — 75

81

ACCELERATOR
OPENING
DEGREE
SENSOR
61

79 — STORAGE UNIT

IMU — 81

THROTTLE
VALVE
OPENING
DEGREE
SENSOR
65

CPU — 77

SPEED
SENSOR — 66

ACCELERATION
SENSOR
68

CRANKSHAFT
POSITION
SENSOR
69

PRESSURE
SENSOR
70

STROKE
SENSOR
64

EP 4 620 795 A1

Fig.8a

Fig.8b

Fig.8c

Fig.9

# Fig.10

X(FRONT)

Z

(LEFT) ◄─────► Y(RIGHT)

(REAR)

P

1

St

24

3

Fc

29

49

71

Hc

# Fig.11

# Fig.12

## Fig.13

S(S1) ◄──────► (S2)

## Fig.14

## Fig.15

# Fig.16

# Fig.17

Z (UP)
(LEFT)
(REAR) ← → X(FRONT)
Y(RIGHT)
(DOWN)

29A

56

71

87A          89A

55

83A     85A

73A

# Fig.18

Z (UP)
(LEFT) ← X → Y(RIGHT)
(DOWN)

29A

55

90

87A          89A

91          93

B

Ra          Rb

Y1    Z          Y2

83A     85A

73A

60

# Fig.19

Z (UP)

(REAR) ←——→ X (FRONT)

(DOWN)

# Fig.20

PASSAGE CHANGING PART

| LEFT ON-OFF VALVE | RIGHT ON-OFF VALVE | ON-OFF VALVE |

ECU

STORAGE UNIT

CPU

IMU

SPEED SENSOR

ACCELERATION SENSOR

ACCELERATOR OPENING DEGREE SENSOR

THROTTLE VALVE OPENING DEGREE SENSOR

CRANKSHAFT POSITION SENSOR

PRESSURE SENSOR

STROKE SENSOR

# Fig.21a

Z (UP)

(LEFT) ← X → Y(RIGHT)

(DOWN)

1A
3
29A
49
83A
85A
G

W(W1)

S(S1) ← → (S2)

(W2)

# Fig.21b

Z (UP)
X Y

1A
29A
85A
3
83A
49
G  W    Z
V1

W(W1)

S(S1) ← → (S2)

(W2)

# Fig.21c

Z (UP)
X
Y

1A
3
49
29A
83A
85A
Z  W  G
V2

W(W1)

S(S1) ← → (S2)

(W2)

EP 4 620 795 A1

# Fig.22

# Fig.23

# Fig.24

# Fig.25

# Fig.26

Z (UP)

(LEFT)

(REAR) ← → X (FRONT)

Y (RIGHT)

(DOWN)

29B

56

71

89B

85B

55

# Fig.27

Z (UP)

(LEFT) ← X → Y (RIGHT)

(DOWN)

55

29B

60

87B

89B

93

Ra

91

Rb

87B

89B

83B

55

85B

73B

Fig.28a   Fig.28b   Fig.28c

EP 4 620 795 A1

## Fig.29

## Fig.30

58

# Fig.31

# Fig.32

## Fig.33

1C

29C

71

J — J

96

57

56

55

73

Z (UP)

(REAR) ← Y → X (FRONT)

(DOWN)

## Fig.34

29C

55

J

60

55

57

57

73

Rc

Z (UP)

(LEFT) ← X → Y (RIGHT)

(DOWN)

# Fig.35

1C

96 — MOVING MECHANISM

58 — ON-OFF VALVE

61 — ACCELERATOR OPENING DEGREE SENSOR

65 — THROTTLE VALVE OPENING DEGREE SENSOR

ECU 75C

79 — STORAGE UNIT

77 — CPU

69 — CRANKSHAFT POSITION SENSOR

70 — PRESSURE SENSOR

64 — STROKE SENSOR

81 — IMU

66 — SPEED SENSOR

68 — ACCELERATION SENSOR

# Fig.36

1C

3

29C

73

H

Ce

Rc

49

G

W

Z

V1

E

Z(UP)

Y

X

W(W1)

S(S1)  (S2)

(W2)

# Fig.37

# Fig.38

# Fig.39

# Fig.40

## Fig.41

Z (UP)

(LEFT)

(REAR) ← → X(FRONT)

Y(RIGHT)

(DOWN)

## Fig.42

Z (UP)

Y

(REAR) ← → X(FRONT)

(DOWN)

## Fig.43

Z (UP)

(LEFT) ←——X——→ Y(RIGHT)

(DOWN)

## Fig.44

Z (UP)

(REAR) ←——Y——→ X(FRONT)

(DOWN)

## Fig.45

## Fig.46

## Fig.47

## Fig.48

Fig.49

## Fig.50

## Fig.51

## Fig.52

29E

60

87p  91p  91s  93p  93s  89p

87s  89s

84p  84s  86s  86p

83C  85C

73C

Z (UP)

(LEFT) ◄——X——► Y(RIGHT)

(DOWN)

## Fig.53

1E

29E

3

F

86p

H

E

86s

49

G  W  Z

V1(V1a)

Z (UP)
Y
X

W (W1)

S(S1) ◄——► (S2)

(W2)

## Fig.54

## Fig.55

## Fig.56

1G

29A

56

71

J

J

87A

89A

96

55

83A    85A

73A

Z (UP)

(LEFT)

(REAR)    X (FRONT)

Y (RIGHT)

(DOWN)

## Fig.57

1G

29A

J

55

60

87A    91    93    89A

87A    89A

Ra    Rb

83A    85A

73A

Z (UP)

(LEFT)    X    Y (RIGHT)

(DOWN)

Europäisches
Patentamt

European
Patent Office

Office européen
des brevets

# EUROPEAN SEARCH REPORT

**Application Number**

EP 25 16 2653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 514 343 A1 (YAMAHA MOTOR CO LTD [JP]) 24 July 2019 (2019-07-24) | 1-6,10, 11 | INV. B62K11/04 B62M7/02 B62D37/04 B60W30/045 |
| A | * figures 1-4,8 * | 7-9, 12-15 | |
| X | US 2016/368546 A1 (WAHL ANJA [DE] ET AL) 22 December 2016 (2016-12-22) * figures 1,2 * | 1-6 | |
| X | DE 10 2011 122497 A1 (KEINBERGER FRANZ [DE]) 4 July 2013 (2013-07-04) * paragraphs [0017], [0070]; figure 11 * | 1-6 | |
| A | US 2020/063621 A1 (WANG MU-SHAN [TW]) 27 February 2020 (2020-02-27) * figures 1,2,7 * | 15 | |
| A,P | DE 10 2023 119569 A1 (BAYERISCHE MOTOREN WERKE AG [DE]) 30 January 2025 (2025-01-30) * figure 1 * | 1-15 | |

**TECHNICAL FIELDS SEARCHED (IPC)**

B62K
F01N
B62M
B62D
B60W

The present search report has been drawn up for all claims

| Place of search | Date of completion of the search | Examiner |
|---|---|---|
| The Hague | 11 July 2025 | Booij, Nico |

**ANNEX TO THE EUROPEAN SEARCH REPORT
ON EUROPEAN PATENT APPLICATION NO.**

EP 25 16 2653

This annex lists the patent family members relating to the patent documents cited in  the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | Publication date |
|---|---|---|---|
| EP 3514343 A1 | 24-07-2019 | EP 3514343 A1 | 24-07-2019 |
|  |  | ES 2778695 T3 | 11-08-2020 |
|  |  | JP 2019127839 A | 01-08-2019 |
| US 2016368546 A1 | 22-12-2016 | CN 105593110 A | 18-05-2016 |
|  |  | DE 102013212606 A1 | 31-12-2014 |
|  |  | EP 3013674 A1 | 04-05-2016 |
|  |  | JP 6494612 B2 | 03-04-2019 |
|  |  | JP 2016522122 A | 28-07-2016 |
|  |  | US 2016368546 A1 | 22-12-2016 |
|  |  | WO 2014206642 A1 | 31-12-2014 |
| DE 102011122497 A1 | 04-07-2013 | NONE | |
| US 2020063621 A1 | 27-02-2020 | NONE | |
| DE 102023119569 A1 | 30-01-2025 | NONE | |

EPO FORM P0459

For more details about this annex : see Official Journal of the European Patent Office, No. 12/82

**EP 4 620 795 A1**

**REFERENCES CITED IN THE DESCRIPTION**

**Patent documents cited in the description**

- JP 2022104685 A